(19) Europäisches Patentamt
European Patent Office
Office européen des brevets

(11) **EP 4 328 278 A1**

(12) **EUROPEAN PATENT APPLICATION**
published in accordance with Art. 153(4) EPC

(43) Date of publication:
**28.02.2024 Bulletin 2024/09**

(21) Application number: **22791789.5**

(22) Date of filing: **21.04.2022**

(51) International Patent Classification (IPC):
**C09D 11/30** $^{(2014.01)}$    **B41J 2/01** $^{(2006.01)}$
**B41M 5/00** $^{(2006.01)}$    **C09D 11/101** $^{(2014.01)}$
**C09D 11/40** $^{(2014.01)}$

(52) Cooperative Patent Classification (CPC):
**B41J 2/01; B41M 5/00; C09D 11/101; C09D 11/30; C09D 11/40**

(86) International application number:
**PCT/JP2022/018437**

(87) International publication number:
**WO 2022/225018 (27.10.2022 Gazette 2022/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.04.2021 JP 2021073511**
**05.11.2021 JP 2021181158**

(71) Applicant: **FUJIFILM Corporation**
**Tokyo 106-8620 (JP)**

(72) Inventors:
• **ARAKI, Kenjiro**
  **Ashigarakami-gun, Kanagawa 258-8577 (JP)**
• **UMEBAYASHI, Tsutomu**
  **Ashigarakami-gun, Kanagawa 258-8577 (JP)**

(74) Representative: **Klunker IP**
**Patentanwälte PartG mbB**
**Destouchesstraße 68**
**80796 München (DE)**

(54) **ACTIVE ENERGY RAY-CURABLE INKJET INK FOR BEVERAGE CONTAINER, ACTIVE ENERGY RAY-CURABLE INKJET INK SET, AND IMAGE RECORDING METHOD**

(57)    Provided are an active energy ray-curable inkjet ink for a beverage container and applications thereof, the inkjet ink containing a polymerizable monomer and a polymerizable surfactant. Also provided are an active energy ray-curable inkjet ink set and applications thereof, the inkjet ink set containing a first ink containing a polyfunctional monomer and a second ink containing a monofunctional monomer, in which at least one of the first ink or the second ink contains a polymerizable surfactant.

EP 4 328 278 A1

**Description**

BACKGROUND OF THE INVENTION

1. Field of the Invention

The present disclosure relates to an active energy ray-curable inkjet ink for a beverage container, an active energy ray-curable inkjet ink set, and an image recording method.

2. Description of the Related Art

In the related art, a method of curing ink with an active energy ray in a case where an image is recorded on a substrate using the ink has been known.

For example, JP2013-514904A discloses a radiation-curable inkjet ink set containing at least first and second radiation-curable inkjet inks having a dynamic surface tension of 30 mN/m or less, which is measured by maximum bubble pressure tensiometry at a surface age of 50 ms and at 25°C.

WO2018/139658A discloses an actinic ray-curing ink composition containing di(meth)acrylate having a linear alkylene group, di(meth)acrylate having an alkylene oxide chain, a specific cyclohexyldienone-based polymerization inhibitor, and a photopolymerization initiator.

JP2013-184453A discloses an ultraviolet-curable composition for recording an image, containing an ultraviolet-curable substance, a water-absorbent component, and a reactive silicone-based surfactant which has an HLB of 9 or more and less than 15 and reacts with ultraviolet rays.

JP2013-511584A discloses a radiation-curable ink containing a curable silicone polyester acrylate-based surfactant in an amount in a range of approximately 0.0005 wt% to approximately 0.005 wt% based on the total weight of the ink.

SUMMARY OF THE INVENTION

In an image recorded material obtained by applying ink onto a substrate, it may be required that, after the image recorded material is immersed in a treatment liquid and an image is peeled off from the substrate, the image is separable.

In addition, in the image recorded material obtained by applying ink onto a substrate, it may be required that the image is easily peeled off by being immersed in an alkali solution and that water resistance is enhanced.

The present disclosure has been made in consideration of the above circumstances, and according to an embodiment of the present invention, there are provided an active energy ray-curable inkjet ink for a beverage container, in which separation properties of an image from a substrate are excellent, an active energy ray-curable inkjet ink set, and an image recording method.

In addition, according to another embodiment of the present invention, there is provided an active energy ray-curable inkjet ink set, in which alkali peelability of an image from a substrate is excellent and water resistance is excellent.

The present disclosure includes the following aspects.

<1> An active energy ray-curable inkjet ink for a beverage container, comprising:

a polymerizable monomer; and
a polymerizable surfactant.

<2> The active energy ray-curable inkjet ink for a beverage container according to <1>, in which the polymerizable monomer includes a polyfunctional monomer, and
a content of the polyfunctional monomer is 25% by mass or more with respect to a total amount of the active energy ray-curable inkjet ink for a beverage container.

<3> The active energy ray-curable inkjet ink for a beverage container according to <2>,
in which a mass ratio of the content of the polyfunctional monomer to a content of the polymerizable surfactant is 4 to 80.

<4> The active energy ray-curable inkjet ink for a beverage container according to <1>,

in which the polymerizable monomer includes a monofunctional monomer, and
a content of the monofunctional monomer is 60% by mass or more with respect to a total amount of the active energy ray-curable inkjet ink for a beverage container.

<5> The active energy ray-curable inkjet ink for a beverage container according to <4>,
in which a mass ratio of the content of the monofunctional monomer to a content of the polymerizable surfactant is 3 to 100.

<6> The active energy ray-curable inkjet ink for a beverage container according to any one of <1> to <5>,
in which the polymerizable monomer includes a polymerizable monomer having an acid group.

<7> The active energy ray-curable inkjet ink for a beverage container according to <6>,
in which a mass ratio of the content of the polymerizable monomer having an acid group to a content of the polymerizable surfactant is 0.2 to 10.

<8> The active energy ray-curable inkjet ink for a beverage container according to any one of <1> to <7>,
in which the polymerizable monomer includes a polymerizable monomer having a specific gravity of 1.0 or less.

<9> The active energy ray-curable inkjet ink for a beverage container according to any one of <1> to <8>,
in which the polymerizable surfactant is a silicone-based surfactant having a (meth)acryloyl group.

<10> The active energy ray-curable inkjet ink for a beverage container according to any one of <1> to <9>,
in which the polymerizable surfactant is a compound having a surface tension reduction of 5 mN/m or more relative to cyclic trimethylolpropane formal acrylate.

<11> The active energy ray-curable inkjet ink for a beverage container according to any one of <1> to <10>,

in which the polymerizable surfactant includes a polymerizable surfactant A having a log P value of 4 or more and a polymerizable surfactant B having a log P value of less than 4.

<12> An active energy ray-curable inkjet ink set comprising:

   a first ink containing a polyfunctional monomer; and
   a second ink containing a monofunctional monomer,
   in which at least one of the first ink or the second ink contains a polymerizable surfactant.

<13> The active energy ray-curable inkjet ink set according to <12>, comprising:

   a first ink containing a polyfunctional monomer; and
   a second ink containing a monofunctional monomer,
   in which both the first ink and the second ink contain a polymerizable surfactant.

<14> The active energy ray-curable inkjet ink set according to <12> or <13>,
in which, in at least one of the first ink or the second ink, the polymerizable surfactant includes a polymerizable surfactant A having a log P value of 4 or more and a polymerizable surfactant B having a log P value of less than 4.

< 15> The active energy ray-curable inkjet ink set according to any one of < 12> to < 14>,
in which a content of the polyfunctional monomer in the first ink is 25% by mass or more with respect to a total amount of the first ink.

<16> The active energy ray-curable inkjet ink set according to any one of <12> to <15>, in which the first ink contains a polymerizable surfactant, and
a mass ratio of a content of the polyfunctional monomer to a content of the polymerizable surfactant in the first ink is 4 to 80.

<17> The active energy ray-curable inkjet ink set according to any one of <12> to <16>,
in which the first ink contains a polymerizable monomer having a specific gravity of 1.0 or less.

<18> The active energy ray-curable inkjet ink set according to any one of <12> to <17>,
in which a content of the monofunctional monomer in the second ink is 60% by mass or more with respect to a total amount of the second ink.

<19> The active energy ray-curable inkjet ink set according to any one of <12> to <18>,

   in which the second ink contains a polymerizable surfactant, and
   a mass ratio of a content of the monofunctional monomer to a content of the polymerizable surfactant in the second ink is 3 to 100.

<20> The active energy ray-curable inkjet ink set according to any one of <12> to <19>,
wherein, in a case where a mass of the first ink and a mass of the second ink are the same, a mass ratio of a total content of polyfunctional monomers in the first ink and the second ink to a content of the monofunctional monomer in the second ink is 0.2 to 0.9.

<21> The active energy ray-curable inkjet ink set according to any one of <12> to <20>,

in which both the first ink and the second ink contain a polymerizable surfactant, and
in a case where a mass of the first ink and a mass of the second ink are the same, a mass ratio of a content of the polymerizable surfactant in the second ink to a content of the polymerizable surfactant in the first ink is 2 to 11.

<22> The active energy ray-curable inkjet ink set according to any one of <12> to <21>,
in which a surface tension of the second ink is higher than a surface tension of the first ink.
<23> The active energy ray-curable inkjet ink set according to any one of <12> to <22>,
in which the second ink contains a polymerizable monomer having an acid group.
<24> The active energy ray-curable inkjet ink set according to <23>,
wherein, in a case where a mass of the first ink and a mass of the second ink are the same, a mass ratio of a content of the polymerizable monomer having an acid group in the second ink to a total content of monofunctional monomers in the first ink and the second ink is 0.05 to 0.1.
<25> An image recording method comprising:

a step of applying the active energy ray-curable inkjet ink for a beverage container according to any one of <1> to <11> onto a surface of a beverage container using an inkjet recording method; and
a step of irradiating the applied ink with an active energy ray.

<26> An image recording method comprising:

a step of, using the active energy ray-curable inkjet ink set according to any one of <12> to <24>, applying the first ink and the second ink onto a substrate using an inkjet recording method; and
a step of irradiating the first ink and the second ink each applied with an active energy ray.

<27> An active energy ray-curable inkjet ink comprising:

a polymerizable monomer; and
a polymerizable surfactant,
in which the polymerizable monomer includes a monofunctional monomer, and
a content of the monofunctional monomer is 60% by mass or more with respect to a total amount of the active energy ray-curable inkjet ink.

<28> An active energy ray-curable inkjet ink set comprising:

a first ink containing a colorant and a polymerizable monomer having a hydroxyl group; and
a second ink containing a polymerizable monomer having an acid group.

<29> The active energy ray-curable inkjet ink set according to <28>,
in which a content of the polymerizable monomer having a hydroxyl group is 30% by mass to 70% by mass with respect to a total amount of the first ink.
<30> The active energy ray-curable inkjet ink set according to <28> or <29>,
in which a content of the polymerizable monomer having an acid group is 5% by mass to 25% by mass with respect to a total amount of the second ink.
<31> The active energy ray-curable inkjet ink set according to any one of <28> to <30>,
in which the second ink further contains a polymerizable monomer having a hydroxyl group.
<32> The active energy ray-curable inkjet ink set according to <31>,
in which a total content of the polymerizable monomer having an acid group and the polymerizable monomer having a hydroxyl group in the second ink is 10% by mass to 50% by mass with respect to a total amount of the second ink.
<33> The active energy ray-curable inkjet ink set according to <31> or <32>,
in which, in a case where a mass of the first ink and a mass of the second ink are the same, a mass ratio of a content of the polymerizable monomer having a hydroxyl group in the first ink to a total content of the polymerizable monomer having an acid group and the polymerizable monomer having a hydroxyl group in the second ink is 1 to 4.

According to an embodiment of the present invention, there are provided an active energy ray-curable inkjet ink for a beverage container, in which separation properties of an image from a substrate are excellent, an active energy ray-curable inkjet ink set, and an image recording method.

In addition, according to another embodiment of the present invention, there is provided an active energy ray-curable inkjet ink set, in which alkali peelability of an image from a substrate is excellent and water resistance is excellent.

## DESCRIPTION OF THE PREFERRED EMBODIMENTS

Hereinafter, an active energy ray-curable inkjet ink for a beverage container, an active energy ray-curable inkjet ink set, and an image recording method according to embodiments of the present disclosure will be described in detail.

In the present specification, the numerical ranges shown using "to" means ranges including the numerical values described before and after "to" as the minimum value and the maximum value.

In a numerical range described in a stepwise manner in the present specification, an upper limit value or a lower limit value described in a certain numerical range may be replaced with an upper limit value or a lower limit value in another numerical range described in a stepwise manner. In addition, in the numerical range described in the present specification, an upper limit value and a lower limit value described in a certain numerical range may be replaced with values shown in Examples.

In the present specification, in a case where a plurality of substances corresponding to each component in a composition is present, the amount of each component in the composition means the total amount of the plurality of substances present in the composition, unless otherwise specified.

In the present specification, a combination of two or more preferred aspects is a more preferred aspect.

In the present specification, the meaning of the term "step" includes not only an independent step but also a step whose intended purpose is achieved even in a case where the step is not clearly distinguished from other steps.

In the present specification, the term "image" denotes an entire film formed by applying an ink, and the term "image recording" denotes formation of an image (that is, the film).

In addition, the concept of "image" in the present specification also includes a solid image.

In the present specification, "(meth)acrylate" is a concept including both acrylate and methacrylate. In addition, "(meth)acryl" is a concept that includes both acryl and methacryl.

The active energy ray-curable inkjet ink for a beverage container (hereinafter, also simply referred to as "ink") according to the embodiment of the present disclosure contains a polymerizable monomer and a polymerizable surfactant.

By applying the ink according to the embodiment of the present disclosure, for example, onto a substrate and then irradiating the ink with an active energy ray, an image recorded material in which an ink film is formed as an image on the substrate can be obtained. Since the ink according to the embodiment of the present disclosure contains a polymerizable monomer and a polymerizable surfactant, a polymerization reaction proceeds by the irradiation with an active energy ray. Since the ink according to the embodiment of the present disclosure contains a polymerizable surfactant, the ink film formed by the polymerization reaction is considered to have a surfactant ability. For example, in a case where the image recorded material is immersed in a treatment liquid (for example, an alkali aqueous solution), adhesiveness between the substrate and the ink film is reduced, and the ink film is peeled off from the substrate. Since the ink film formed of the ink according to the embodiment of the present disclosure has a surfactant ability, the ink film easily floats after being peeled off from the substrate, and has excellent separation properties.

In particular, the ink according to the embodiment of the present disclosure is suitable for recording an image on a surface of a beverage container. For example, after being crushed and pulverized in a recycling system, beverage containers such as a PET bottle are sorted into a pulverized material of beverage containers with high specific gravity and a pulverized material of lids with low specific gravity by a gravity separation method. The sorting is performed, for example, by immersing the beverage container in a treatment liquid (for example, an alkali aqueous solution). As described above, the ink film formed of the ink according to the embodiment of the present disclosure has excellent separation properties. Therefore, in a case where an image is recorded on the beverage container using the ink according to the embodiment of the present disclosure, the image can be easily separated from the beverage container.

On the other hand, inks in the related art, such as inks disclosed in JP2013-514904A, WO2018/139658A, JP2013-184453A, and JP2013-511584A, are not intended for application in beverage containers.

In addition, the active energy ray-curable inkjet ink set according to another embodiment of the present disclosure contains a first ink containing a polyfunctional monomer and a second ink containing a monofunctional monomer, in which at least one of the first ink or the second ink contains a polymerizable surfactant. Hereinafter, an ink set of an aspect containing a first ink containing a polyfunctional monomer and a second ink containing a monofunctional monomer, in which at least one of the first ink or the second ink contains a polymerizable surfactant is referred to as "ink set A".

With the ink set A according to another embodiment of the present disclosure, by applying the first ink and the second ink, for example, onto a substrate and then irradiating the ink with an active energy ray, an image recorded material in which an ink film is formed as an image on the substrate can be obtained. In the ink set A according to another embodiment of the present disclosure, since the first ink contains a polyfunctional monomer, the second ink contains a monofunctional monomer, and at least one of the first ink or the second ink contains a polymerizable surfactant, a polymerization reaction proceeds by the irradiation with an active energy ray. Since at least one of the first ink or the second ink contains a polymerizable surfactant, the ink film formed by the polymerization reaction is considered to have a surfactant ability. For example, in a case where the image recorded material is immersed in a treatment liquid (for example, an alkali aqueous solution), adhesiveness between the substrate and the ink film is reduced, and the ink film is peeled off from the substrate. Since the ink film formed of the ink set A according to another embodiment of the present disclosure has a surfactant ability, the ink film easily floats after being peeled off from the substrate, and has excellent separation properties.

In addition, the ink set according to still another embodiment of the present disclosure contains a first ink containing a colorant and a polymerizable monomer having a hydroxyl group, and a second ink containing a polymerizable monomer having an acid group. Hereinafter, an ink set of an aspect containing a first ink containing a colorant and a polymerizable monomer having a hydroxyl group, and a second ink containing a polymerizable monomer having an acid group is referred to as "ink set B".

With the ink set B according to still another embodiment of the present disclosure, by applying the first ink and the second ink, for example, onto a substrate and then irradiating the ink with an active energy ray, an image recorded material in which an ink film is formed as an image on the substrate can be obtained. In the above-described ink set B, since the first ink contains a polymerizable monomer having a hydroxyl group, an alkali aqueous solution easily permeates the ink film. In addition, since the second ink contains a polymerizable monomer having an acid group, in a case where the alkali aqueous solution permeates the ink film, the acid group reacts with the alkali to form a salt, and water solubility of the ink film is improved. Therefore, in a case where the image recorded material is immersed in an alkali aqueous solution, the ink film is easily peeled off from the substrate. In addition, in a case where the image recorded material is immersed in water, cure shrinkage is suppressed, and the image is unlikely to be peeled off from the substrate due to the water. That is, the image recorded material formed of the ink set B according to still another embodiment of the present disclosure has excellent alkali peelability and water resistance.

On the other hand, in ink sets in the related art, such as the ink set disclosed in JP2013-514904A, all the polymerizable monomers contained in the ink are polyfunctional monomers. In addition, WO2018/139658A, JP2013-184453A, and JP2013-511584A do not disclose the ink set.

Hereinafter, each component contained in the ink according to the embodiment of the present disclosure will be described.

[Active energy ray-curable inkjet ink for beverage container]

The ink according to the embodiment of the present disclosure contains a polymerizable monomer and a polymerizable surfactant.

The ink according to the embodiment of the present disclosure is for a beverage container. That is, the ink according to the embodiment of the present disclosure is an ink used for recording an image on a surface of the beverage container. A material of the beverage container is not particularly limited, and examples thereof include glass and plastic. Among these, the ink according to the embodiment of the present disclosure is preferably for a plastic beverage container and more preferably for a PET bottle containing polyethylene terephthalate as a main component.

The ink according to the embodiment of the present disclosure is an active energy ray-curable ink. That is, the ink according to the embodiment of the present disclosure is cured by irradiation with an active energy ray. Examples of the active energy ray include $\gamma$-rays, $\beta$-rays, electron beams, ultraviolet rays, and visible rays. Among these, ultraviolet rays are preferable as the active energy ray. It is preferable that the ink according to the embodiment of the present disclosure is an ultraviolet-curable ink.

<Polymerizable surfactant>

The ink according to the embodiment of the present disclosure contains a polymerizable surfactant. The ink may contain only one kind of polymerizable surfactant, or two or more kinds of polymerizable surfactants.

In the present disclosure, the "polymerizable surfactant" refers to a surfactant having a polymerizable group. In the present disclosure, the "surfactant" refers to a compound in which, in a case of adding the compound in an addition amount of 0.5% by mass with respect to cyclic trimethylolpropane formal acrylate (hereinafter, referred to as "CTFA"), a surface tension is reduced 1 mN/m or more. The surface tension is measured by a plate method at 25°C using a surface tension meter, and for example, can be measured using an automatic surface tension meter (product name "DY-300") manufactured by Kyowa Interface Science Co., Ltd. A surface tension of CTFA is 36.5 mN/m.

The polymerizable group in the polymerizable surfactant may be a cationically polymerizable group or a radically polymerizable group. From the viewpoint of curing properties, the polymerizable group is preferably a radically polymerizable group. In addition, from the viewpoint of curing properties, the radically polymerizable group is preferably an ethylenically unsaturated group. Among these, as the polymerizable group in the polymerizable surfactant, a vinyl group or a (meth)acryloyl group is preferable, and from the viewpoint of ethanol resistance, a (meth)acryloyl group is more preferable.

From the viewpoint of separation properties, the number of polymerizable groups in the polymerizable surfactant is preferably 2 or more and more preferably 3 or more.

The upper limit value of the number of polymerizable groups in the polymerizable surfactant is not particularly limited, but for example, from the viewpoint of jettability in a case of jetting the ink by an inkjet recording method, it is 5.

That is, with regard to the kind and the number of polymerizable groups, the polymerizable surfactant is preferably a surfactant having two or more (meth)acryloyl groups, and more preferably a surfactant having three or more (meth)acryloyl groups.

Examples of the polymerizable surfactant include a polymerizable silicone-based surfactant, a polymerizable fluorine-based surfactant, and a polymerizable acrylic surfactant.

Examples of the polymerizable silicone-based surfactant include a compound in which a polymerizable group is bonded to a main chain or side chain of polyether-modified dimethylsiloxane.

Examples of a commercially available product of the polymerizable silicone-based surfactant include silicone-based surfactants having a (meth)acryloyl group, such as BYK-UV3500, 3505, 3530, 3570, 3575, and 3576 (manufactured by BYK); Tegorad 2100, 2200, 2250, 2300, 2500, 2600, 2700, 2800, 2010, and 2011 (manufactured by Evonik Industries AG); EBECRYL 350 and 1360 (manufactured by Daicel-Allnex Ltd.); and KP-410, 411, 412, 413, 414, 415, 416, 418, 420, 422, and 423 (manufactured by Shin-Etsu Chemical Co., Ltd.).

Examples of the polymerizable fluorine-based surfactant include a compound having a perfluoroalkyl group and a polymerizable group.

Examples of a commercially available product of the polymerizable fluorine-based surfactant include fluorine-based surfactants having a (meth)acryloyl group, such as MEGAFACE RS-56, RS-72-K, RS-75, RS-76-E, RS-65-NS, RS-78, and RS-90 (manufactured by DIC Corporation).

Examples of the polymerizable acrylic surfactant include a compound in which a polymerizable group is bonded to a side chain of a poly(meth)acrylic structure.

Examples of a commercially available product of the polymerizable acrylic surfactant include CN821 (manufactured by Sartomer).

Among these, from the viewpoint of separation properties, the polymerizable surfactant is preferably a compound having a high effect of reducing the surface tension. Specifically, in a case where a surface tension reduction is defined as follows, the polymerizable surfactant is preferably a compound having a surface tension reduction of 5 mN/m or more relative to CTFA, and more preferably a compound having a surface tension reduction of 10 mN/m or more relative to CTFA. The upper limit value of the surface tension reduction relative to CTFA is not particularly limited, but from the viewpoint of jettability of the ink, it is preferably 17 mN/m.

Surface tension reduction relative to CTFA = (Surface tension of CTFA) - (Surface tension of surfactant in a case of being added in addition amount of 0.5% by mass with respect to CTFA)

A surface tension of CTFA is 36.5 mN/m.

In other words, the polymerizable surfactant is preferably a compound having a surface tension of 31.5 mN/m or less in a case of being added in an addition amount of 0.5% by mass with respect to CTFA, and more preferably a compound having a surface tension of 26.5 mN/m or less.

Measurement results of surface tensions of each surfactant of the commercially available product, in a case of being added in an addition amount of 0.5% by mass with respect to CTFA, are shown below.

With regard to a product in which the content of the surfactant is not 100% by mass (for example, a product containing a solvent other than the surfactant), the content of the surfactant is adjusted to 100% by mass, and the surface tension is measured using the surfactant alone. For reference, measurement results using a non-polymerizable surfactant are shown below together with the polymerizable surfactant. The "non-polymerizable" means that the compound does not have a polymerizable group.

-Polymerizable silicone-based surfactant-

BYK-UV3500: 23.9 mN/m
BYK-UV3505: 23.6 mN/m
BYK-UV3530: 33.3 mN/m
BYK-UV3570: 24.9 mN/m
BYK-UV3575: 24.3 mN/m
BYK-UV3576: 32.7 mN/m
Tegorad 2100: 27.5 mN/m
Tegorad 2200: 24.5 mN/m
Tegorad 2250: 23.3 mN/m
Tegorad 2300: 22.9 mN/m
Tegorad 2500: 21.9 mN/m
Tegorad 2650: 21.4 mN/m
Tegorad 2700: 21.3 mN/m

Tegorad 2800: 21.2 mN/m
Tegorad 2010: 21.9 mN/m
Tegorad 2011: 29.8 mN/m
KP-423: 21.6 mN/m

-Polymerizable fluorine-based surfactant-

MEGAFACE RS-56: 22.1 mN/m
MEGAFACE RS-72-K: 22.5 mN/m
MEGAFACE RS-75: 22.3 mN/m
MEGAFACE RS-76-E: 22.7 mN/m
MEGAFACE RS-76-NS: 22.1 mN/m
MEGAFACE RS-78: 22.3 mN/m
MEGAFACE RS-90: 22.7 mN/m

-Polymerizable acrylic surfactant-
CN821: 34.1 mN/m
-Non-polymerizable silicone-based surfactant-

BYK306: 22.2 mN/m
BYK-UV3510: 23.8 mN/m

-Non-polymerizable fluorine-based surfactant-
MEGAFACE F554: 25.4 mN/m
-Non-polymerizable acrylic surfactant-
BYK361N: 34.6 mN/m

From the viewpoint of separation properties, the polymerizable surfactant is preferably a polymerizable fluorine-based surfactant or a polymerizable silicone-based surfactant, and more preferably a polymerizable silicone-based surfactant. In addition, from the viewpoint of improving ethanol resistance, the polymerizable surfactant is more preferably a silicone-based surfactant having a (meth)acryloyl group.

A molecular weight of the polymerizable surfactant is preferably 1,000 to 20,000.

In the present disclosure, it is preferable that the polymerizable surfactant includes a polymerizable surfactant A having a log P value of 4 or more and a polymerizable surfactant B having a log P value of less than 4. The ink may contain only one kind of each of the polymerizable surfactant A having a log P value of 4 or more and the polymerizable surfactant B having a log P value of less than 4, or two or more kinds thereof.

Having a log P value of 4 or more means that hydrophobicity is relatively high. Having a log P value of less than 4 means that hydrophilicity is relatively high. In a case where the ink contains the polymerizable surfactant A, the ink film formed by the application of the ink is hydrophobic, and water repellency is improved. As a result, the ink film easily floats, and the separation properties are improved. On the other hand, although the polymerizable surfactant A tends to be difficult to be dissolved in the ink, by using the polymerizable surfactant B in combination, the polymerizable surfactant B enhances solubility of the polymerizable surfactant A in the ink, and an image with suppressed cissing is obtained. The "cissing" is a phenomenon that occurs in a case where the ink is repelled on the substrate and is cured.

From the viewpoint of further improving the separation properties and further suppressing cissing of the image, a difference between the log P value of the polymerizable surfactant A and the log P value of the polymerizable surfactant B (that is, "Log P value of polymerizable surfactant A - Log P value of polymerizable surfactant B") is preferably 2 to 4.

In addition, from the viewpoint of further improving the separation properties and further suppressing cissing of the image, a mass ratio of a content of the polymerizable surfactant B to a content of the polymerizable surfactant A is preferably 1.1 to 15 and more preferably 2 to 8.

The log P value of the polymerizable surfactant is a value measured by a method according to JIS Z 7260-117: 2006.

A content of the polymerizable surfactant is preferably 0.05% by mass to 25% by mass and more preferably 0.1% by mass to 20% by mass with respect to the total amount of the ink. It is preferable that the content of the polymerizable surfactant is adjusted by a content of the polymerizable monomer.

<Polymerizable monomer>

The ink according to the embodiment of the present disclosure contains a polymerizable monomer. The ink may contain only one kind of polymerizable monomer, or two or more kinds of polymerizable monomers.

In the present disclosure, the "monomer" refers to a compound having a molecular weight of less than 1,000. The molecular weight can be calculated from the kind and number of elements constituting the compound.

In the present disclosure, the "polymerizable monomer" refers to a monomer having a polymerizable group.

The polymerizable group in the polymerizable monomer may be a cationically polymerizable group or a radically polymerizable group. From the viewpoint of curing properties, the polymerizable group is preferably a radically polymerizable group. In addition, from the viewpoint of curing properties, the radically polymerizable group is preferably an ethylenically unsaturated group.

The polymerizable monomer may be a monofunctional monomer having one polymerizable group or a polyfunctional monomer having two or more polymerizable groups.

-Monofunctional monomer-

The monofunctional monomer is not particularly limited as long as it is a monomer having one polymerizable group. From the viewpoint of curing properties, the monofunctional monomer is preferably a monofunctional radically polymerizable monomer, and more preferably a monofunctional ethylenically unsaturated monomer.

Examples of the monofunctional ethylenically unsaturated monomer include monofunctional (meth)acrylate, monofunctional (meth)acrylamide, a monofunctional aromatic vinyl compound, monofunctional vinyl ether, and a monofunctional N-vinyl compound.

Examples of the monofunctional (meth)acrylate include methyl (meth)acrylate, ethyl (meth)acrylate, propyl (meth)acrylate, n-butyl (meth)acrylate, hexyl (meth)acrylate, 2-ethylhexyl (meth)acrylate, tert-octyl (meth)acrylate, isoamyl (meth)acrylate, decyl (meth)acrylate, isodecyl (meth)acrylate, lauryl (meth)acrylate, stearyl (meth)acrylate, isostearyl (meth)acrylate, cyclohexyl (meth)acrylate, 4-n-butylcyclohexyl (meth)acrylate, 4-tert-butylcyclohexyl (meth)acrylate, bornyl (meth)acrylate, isobornyl (meth)acrylate, 2-ethylhexyldiglycol (meth)acrylate, butoxyethyl (meth)acrylate, 2-chloroethyl (meth)acrylate, 4-bromobutyl (meth)acrylate, cyanoethyl (meth)acrylate, benzyl (meth)acrylate, butoxymethyl (meth)acrylate, 3-methoxybutyl (meth)acrylate, 2-(2-methoxyethoxy)ethyl (meth)acrylate, 2-(2-butoxyethoxy)ethyl (meth)acrylate, 2,2,2-tetrafluoroethyl (meth)acrylate, 1H,1H,2H,2H-perfluorodecyl (meth)acrylate, 4-butylphenyl (meth)acrylate, phenyl (meth)acrylate, 2,4,5-tetramethylphenyl (meth)acrylate, 4-chlorophenyl (meth)acrylate, 2-phenoxymethyl (meth)acrylate, 2-phenoxyethyl (meth)acrylate, glycidyl (meth)acrylate, glycidyloxybutyl (meth)acrylate, glycidyloxyethyl (meth)acrylate, glycidyloxypropyl (meth)acrylate, tetrahydrofurfuryl (meth)acrylate, 2-hydroxyethyl (meth)acrylate, 3-hydroxypropyl (meth)acrylate, 2-hydroxypropyl (meth)acrylate, 2-hydroxybutyl (meth)acrylate, 3-hydroxybutyl (meth)acrylate, 4-hydroxybutyl (meth)acrylate, cyclic trimethylolpropane formal(meth)acrylate, phenylglycidyl ether (meth)acrylate, dimethylaminoethyl (meth)acrylate, diethylaminoethyl (meth)acrylate, dimethylaminopropyl (meth)acrylate, diethylaminopropyl (meth)acrylate, trimethoxysilylpropyl (meth)acrylate, trimethylsilylpropyl (meth)acrylate, polyethylene oxide monomethyl ether (meth)acrylate, polyethylene oxide (meth)acrylate, polyethylene oxide monoalkyl ether (meth)acrylate, dipropylene glycol (meth)acrylate, polypropylene oxide monoalkyl ether (meth)acrylate, 2-methacryloyloxyethyl succinate, 2-methacryloyloxyhexahydrophthalic acid, 2-methacryloyloxyethyl-2-hydroxypropyl phthalate, ethoxydiethylene glycol (meth)acrylate, butoxydiethylene glycol (meth)acrylate, trifluoroethyl (meth)acrylate, perfluorooctylethyl (meth)acrylate, 2-hydroxy-3-phenoxypropyl (meth)acrylate, ethylene oxide (EO)-modified phenol (meth)acrylate, EO-modified cresol (meth)acrylate, EO-modified nonylphenol (meth)acrylate, propylene oxide (PO)-modified nonylphenol (meth)acrylate, EO-modified-2-ethylhexyl (meth)acrylate, dicyclopentenyl (meth)acrylate, dicyclopentenyloxyethyl (meth)acrylate, dicyclopentanyl (meth)acrylate, (3-ethyl-3-oxetanylmethyl) (meth)acrylate, phenoxyethylene glycol (meth)acrylate, 2-carboxyethyl (meth)acrylate, and 2-(meth)acryloyloxyethyl succinate.

Examples of the monofunctional (meth)acrylamide include (meth)acrylamide, N-methyl (meth)acrylamide, N-ethyl (meth)acrylamide, N-propyl (meth)acrylamide, N-n-butyl (meth)acrylamide, N-t-butyl (meth)acrylamide, N-butoxymethyl (meth)acrylamide, N-isopropyl (meth)acrylamide, N-methylol (meth)acrylamide, N,N-dimethyl (meth)acrylamide, N,N-diethyl (meth)acrylamide, and (meth)acryloylmorpholine.

Examples of the monofunctional aromatic vinyl compound include styrene, dimethylstyrene, trimethylstyrene, isopropyl styrene, chloromethylstyrene, methoxystyrene, acetoxystyrene, chlorostyrene, dichlorostyrene, bromostyrene, vinyl benzoic acid methyl ester, 3-methylstyrene, 4-methylstyrene, 3-ethylstyrene, 4-ethylstyrene, 3-propyl styrene, 4-propylstyrene, 3-butylstyrene, 4-butylstyrene, 3-hexylstyrene, 4-hexylstyrene, 3-octylstyrene, 4-octylstyrene, 3-(2-ethylhexyl)styrene, 4-(2-ethylhexyl)styrene, allyl styrene, isopropenyl styrene, butenyl styrene, octenyl styrene, 4-t-butoxycarbonyl styrene, and 4-t-butoxystyrene.

Examples of the monofunctional vinyl ether include methyl vinyl ether, ethyl vinyl ether, propyl vinyl ether, n-butyl vinyl ether, t-butyl vinyl ether, 2-ethylhexyl vinyl ether, n-nonyl vinyl ether, lauryl vinyl ether, cyclohexyl vinyl ether, cyclohexyl methyl vinyl ether, 4-methylcyclohexyl methyl vinyl ether, benzyl vinyl ether, dicyclopentenyl vinyl ether, 2-dicyclopentenoxyethyl vinyl ether, methoxyethyl vinyl ether, ethoxyethyl vinyl ether, butoxyethyl vinyl ether, methoxyethoxyethyl vinyl ether, ethoxyethoxyethyl vinyl ether, methoxypolyethylene glycol vinyl ether, tetrahydrofurfuryl vinyl ether, 2-hydroxyethyl vinyl ether, 2-hydroxypropyl vinyl ether, 4-hydroxybutyl vinyl ether, 4-hydroxymethylcyclohexylmethyl vinyl ether, diethylene glycol monovinyl ether, polyethylene glycol vinyl ether, chloroethyl vinyl ether, chlorobutyl vinyl ether, chloroethoxyethyl vinyl ether, phenylethyl vinyl ether, and phenoxypolyethylene glycol vinyl ether.

Examples of the monofunctional N-vinyl compound include N-vinyl-$\varepsilon$-caprolactam and N-vinylpyrrolidone.

-Polyfunctional monomer-

The polyfunctional monomer is not particularly limited as long as it is a monomer having two or more polymerizable groups. From the viewpoint of curing properties, the polyfunctional monomer is preferably a polyfunctional radically polymerizable monomer, and more preferably a polyfunctional ethylenically unsaturated monomer.

Examples of the polyfunctional ethylenically unsaturated monomer include a polyfunctional (meth)acrylate compound and polyfunctional vinyl ether.

Examples of the polyfunctional (meth)acrylate include ethylene glycol di(meth)acrylate, diethylene glycol di(meth)acrylate, triethylene glycol di(meth)acrylate, polyethylene glycol di(meth)acrylate, propylene glycol di(meth)acrylate, dipropylene glycol di(meth)acrylate, tripropylene glycol di(meth)acrylate, polypropylene glycol di(meth)acrylate, butylene glycol di(meth)acrylate, tetraethylene glycol di(meth)acrylate, neopentyl glycol di(meth)acrylate, 3-methyl-1,5-pentanediol di(meth)acrylate, hexanediol di(meth)acrylate, heptanediol di(meth)acrylate, EO-modified neopentyl glycol di(meth)acrylate, PO-modified neopentyl glycol di(meth)acrylate, EO-modified hexanediol di(meth)acrylate, PO-modified hexanediol di(meth)acrylate, octanediol di(meth)acrylate, nonanediol di(meth)acrylate, decanediol di(meth)acrylate, dodecanediol di(meth)acrylate, 1,6-hexanediol di(meth)acrylate, glycerin di(meth)acrylate, pentaerythritol di(meth)acrylate, ethylene glycol diglycidyl ether di(meth)acrylate, diethylene glycol diglycidyl ether di(meth)acrylate, tricyclodecanedimethanol di(meth)acrylate, trimethylolethane tri(meth)acrylate, trimethylolpropane tri(meth)acrylate, trimethylolpropane EO-added tri(meth)acrylate, pentaerythritol tri(meth)acrylate, pentaerythritol tetra(meth)acrylate, dipentaerythritol tetra(meth)acrylate, dipentaerythritol penta(meth)acrylate, dipentaerythritol hexa(meth)acrylate, tri(meth)acryloyloxyethoxytrimethylolpropane, glycerin polyglycidyl ether poly(meth)acrylate, and tris(2-acryloyloxyethyl) isocyanurate.

Examples of the polyfunctional vinyl ether include 1,4-butanediol divinyl ether, ethylene glycol divinyl ether, diethylene glycol divinyl ether, triethylene glycol divinyl ether, polyethylene glycol divinyl ether, propylene glycol divinyl ether, butylene glycol divinyl ether, hexanediol divinyl ether, 1,4-cyclohexanedimethanol divinyl ether, bisphenol A alkylene oxide divinyl ether, bisphenol F alkylene oxide divinyl ether, trimethylolethane trivinyl ether, trimethylolpropane trivinyl ether, ditrimethylolpropane tetravinyl ether, glycerin trivinyl ether, pentaerythritol tetravinyl ether, dipentaerythritol pentavinyl ether, dipentaerythritol hexavinyl ether, EO-added trimethylolpropane trivinyl ether, PO-added trimethylolpropane trivinyl ether, EO-added ditrimethylolpropane tetravinyl ether, PO-added ditrimethylolpropane tetravinyl ether, EO-added pentaerythritol tetravinyl ether, PO-added pentaerythritol tetravinyl ether, EO-added dipentaerythritol hexavinyl ether, and PO-added dipentaerythritol hexavinyl ether.

Among these, the polymerizable monomer preferably includes a polymerizable monomer having a specific gravity of 1.0 or less. Examples of the polymerizable monomer having a specific gravity of 1.0 or less include the following compounds.

· n-Octyl acrylate: 0.894 g/cm$^3$
· Nonyl acrylate: 0.875 g/cm$^3$
· Isononyl acrylate: 0.885 g/cm$^3$
· Isodecyl acrylate: 0.88 g/cm$^3$
· Lauryl acrylate: 0.875 g/cm$^3$
· Isostearyl acrylate: 0.871 g/cm$^3$
· Stearyl acrylate: 0.86 g/cm$^3$
· Tricyclohexyl acrylate: 0.93 g/cm$^3$
· t-Butylcyclohexyl acrylate: 0.941 g/cm$^3$
· Cyclohexyl acrylate: 0.98 g/cm$^3$
· Isobomyl acrylate: 0.987 g/cm$^3$
· N-Isopropyl acrylamide: 0.89 g/cm$^3$
· N,N-Dimethylacrylamide: 0.964 g/cm$^3$
· Decanediol diacrylate: 0.968 g/cm$^3$
· Triethylene glycol divinyl ether: 1.00 g/cm$^3$

In a case where the ink contains the polymerizable monomer having a specific gravity of 1.0 or less, the ink film formed by the application of the ink is lightened, and the separation properties are improved.

A mass ratio of a content of a polymerizable monomer having a specific gravity of more than 1.0 to a content of the polymerizable monomer having a specific gravity of 1.0 or less is preferably 0.1 to 10 and more preferably 0.5 to 7. In a case where the above-described mass ratio is 0.1 or more, the adhesiveness is further improved. On the other hand, in a case where the above-described mass ratio is 10 or less, the separation properties are improved.

In the present disclosure, the specific gravity is measured using a gravimeter, for example, a high precision electronic gravimeter (model number "EW-300SG", manufactured by Alfa Mirage).

(First aspect)

In a first aspect of the ink according to the embodiment of the present disclosure, the polymerizable monomer includes the polyfunctional monomer, and the content of the polyfunctional monomer is preferably 25% by mass or more, more preferably 30% by mass or more, and still more preferably 33% by mass or more with respect to the total amount of the ink. In a case where the content of the polyfunctional monomer is 25% by mass or more, the image is easily peeled off from the substrate in a case where the image recorded material is immersed in an alkali solution. That is, the alkali peelability is excellent. In a case where the ink contains the polyfunctional monomer, cure shrinkage occurs in the polymerization reaction by the irradiation with active energy ray after the application of the ink, and thus residual stress is generated. In a case where the content of the polyfunctional monomer is 25% by mass or more, it is considered that the residual stress is high, so that the alkali peelability is excellent. In addition, in a case where the content of the polyfunctional monomer is 25% by mass or more, a crosslinking structure is formed by the polymerization reaction, so that the ethanol resistance is improved.

The upper limit value of the content of the polyfunctional monomer is not particularly limited, but from the viewpoint of adhesiveness, it is preferably 85% by mass.

-Polyfunctional monomer/polymerizable surfactant-

A mass ratio of the content of the polyfunctional monomer to the content of the polymerizable surfactant is preferably 3 to 250, more preferably 4 to 200, still more preferably 4 to 80, particularly preferably 6 to 80, and most preferably 7 to 50. In a case where the above-described mass ratio is 3 or more, the alkali peelability is improved. On the other hand, in a case where the above-described mass ratio is 250 or less, the separation properties are improved.

In the first aspect, the content of the polymerizable surfactant is preferably 0.05% by mass to 25% by mass, more preferably 0.1% by mass to 20% by mass, and still more preferably 0.1% by mass to 10% by mass with respect to the total amount of the ink.

(Second aspect)

In a second aspect of the ink according to the embodiment of the present disclosure, the polymerizable monomer includes the monofunctional monomer, and the content of the monofunctional monomer is preferably 60% or more, more preferably 65% or more, and still more preferably 70% by mass or more with respect to the total amount of the ink. In a case where the content of the monofunctional monomer is 70% by mass or more, since the residual stress from the cure shrinkage is small, the adhesiveness to the substrate is improved.

In the second aspect, the content of the polymerizable surfactant is preferably 0.05% by mass to 25% by mass, more preferably 0.1% by mass to 20% by mass, still more preferably 1% by mass to 20% by mass, and particularly preferably 5% by mass to 20% by mass with respect to the total amount of the ink.

The upper limit value of the content of the monofunctional monomer is not particularly limited, but from the viewpoint of alkali peelability, it is preferably 95% by mass.

-Monofunctional monomer/polymerizable surfactant-

A mass ratio of the content of the monofunctional monomer to the content of the polymerizable surfactant is preferably 2 to 1000, more preferably 2 to 400, still more preferably 5 to 100, and particularly preferably 7 to 40. In a case where the above-described mass ratio is 2 or more, the adhesiveness to the substrate is improved. On the other hand, in a case where the above-described mass ratio is 1000 or less, the separation properties are improved.

In the second aspect of the ink according to the embodiment of the present disclosure, the polymerizable monomer preferably includes a polymerizable monomer having an acid group.

Examples of the acid group in the polymerizable monomer having an acid group include a carboxy group, a sulfo group, a phosphoric acid group, a phosphonic acid group, and a sulfonamide group.

Examples of a polymerizable monomer having a carboxy group include 2-(meth)acryloyloxyethyl succinic acid, 2-(meth)acryloyloxyethyl phthalate, 2-(meth)acryloyloxyethyl hexahydrophthalate, 2-(meth)acryloyloxypropyl phthalate, 2-(meth)acryloyloxypropyl hexahydrophthalic acid, 2-carboxyethyl (meth)acrylate, and (meth)acrylic acid.

Examples of a polymerizable monomer having a sulfo group include 2-hydroxy-3-sulfopropyl (meth)acrylate, 2-(meth)acrylamido-2-methylpropanesulfonic acid, 2-sulfoethyl (meth)acrylate, 3-sulfopropyl (meth)acrylate, and 4-styrenesulfonic acid.

Examples of a polymerizable monomer having a phosphoric acid group include 2-phosphonooxyethyl (meth)acrylate and 2-(meth)acryloyloxyethyl acid phosphate.

Among these, the polymerizable monomer having an acid group is preferably a polymerizable monomer having a carboxy group.

The polymerizable monomer having an acid group may be a monofunctional monomer having an acid group or a polyfunctional monomer having an acid group, but is preferably a monofunctional monomer having an acid group, more preferably a monofunctional monomer having a carboxy group, and still more preferably a monofunctional (meth)acrylate having a carboxy group.

In a case where the acid group reacts with alkali to form a salt, water solubility is improved. Therefore, in a case where the ink contains the polymerizable monomer having an acid group, the alkali peelability is improved.

In a case where the ink contains the polymerizable monomer having an acid group, a content of the polymerizable monomer having an acid group is preferably 3% by mass to 10% by mass with respect to the total amount of the ink. It is preferable that the content of the polymerizable monomer having an acid group is adjusted by the content of the polymerizable surfactant.

-Polymerizable monomer having acid group/polymerizable surfactant-

A mass ratio of the content of the polymerizable monomer having an acid group to the content of the polymerizable surfactant is preferably 0.1 to 30, more preferably 0.15 to 15, still more preferably 0.18 to 12, and particularly preferably 0.2 to 10. In a case where the above-described mass ratio is 0.1 or more, the alkali peelability is improved. On the other hand, in a case where the above-described mass ratio is 30 or less, the separation properties are improved.

<Polymerization initiator>

The ink according to the embodiment of the present disclosure may contain at least one polymerization initiator. The polymerization initiator is preferably a radical polymerization initiator which generates radicals.

Examples of the radical polymerization initiator include an alkylphenone compound, an acylphosphine compound, an aromatic onium salt compound, an organic peroxide, a thio compound, a hexaarylbiimidazole compound, a ketoxime ester compound, a borate compound, an azinium compound, a metallocene compound, an active ester compound, a carbon halogen bond-containing compound, and an alkylamine compound.

Among these, as the polymerization initiator, at least one compound selected from the group consisting of an acylphosphine compound and a thio compound is preferable, and at least one compound selected from the group consisting of an acylphosphine oxide compound and a thioxanthone compound is more preferable. It is still more preferable to use an acylphosphine oxide compound and a thioxanthone compound in combination.

Examples of the acylphosphine oxide compound include a monoacylphosphine oxide compound and a bisacylphosphine oxide compound. The acylphosphine oxide compound is preferably a bisacylphosphine oxide compound.

Examples of the monoacylphosphine oxide compound include isobutyryl diphenylphosphine oxide, 2-ethylhexanoyldiphenylphosphine oxide, 2,4,6-trimethylbenzoyldiphenylphosphine oxide, (2,4,6-trimethylbenzoyl)ethoxyphenylphosphine oxide, o-toluyldiphenylphosphine oxide, p-t-butylbenzoyldiphenylphosphine oxide, 3-pyridylcarbonyldiphenylphosphine oxide, acryloyl diphenylphosphine oxide, benzoyl diphenylphosphine oxide, pivaloyl phenylphosphinic acid vinyl ester, adipoyl bisdiphenylphosphine oxide, pivaloyl diphenylphosphine oxide, p-toluyldiphenylphosphine oxide, 4-(t-butyl)benzoyldiphenylphosphine oxide, terephthaloyl bisdiphenylphosphine oxide, 2-methylbenzoyldiphenylphosphine oxide, versatoyl diphenylphosphine oxide, 2-methyl-2-ethylhexanoyldiphenylphosphine oxide, 1-methyl-cyclohexanoyldiphenylphosphine oxide, pivaloyl phenylphosphinic acid methyl ester, and pivaloyl phenylphosphinic acid isopropyl ester.

Examples of the bisacylphosphine oxide compound include bis(2,6-dichlorobenzoyl)phenylphosphine oxide, bis(2,6-dichlorobenzoyl)-2,5-dimethylphenylphosphine oxide, bis(2,6-dichlorobenzoyl)-4-ethoxyphenylphosphine oxide, bis(2,6-dichlorobenzoyl)-4-propylphenylphosphine oxide, bis(2,6-dichlorobenzoyl)-2-naphthylphosphine oxide, bis(2,6-dichlorobenzoyl)-1-naphthylphosphine oxide, bis(2,6-dichlorobenzoyl)-4-chlorophenylphosphine oxide, bis(2,6-dichlorobenzoyl)-2,4-dimethoxyphenylphosphine oxide, bis(2,6-dichlorobenzoyl)decylphosphine oxide, bis(2,6-dichlorobenzoyl)-4-octylphenylphosphine oxide, bis(2,4,6-trimethylbenzoyl)phenylphosphine oxide, bis(2,4,6-trimethylbenzoyl)-2,5-dimethylphenylphosphine oxide, bis(2,6-dichloro-3,4,5-trimethoxybenzoyl)-2,5-dimethylphenylphosphine oxide, bis(2,6-dichloro-3,4,5-trimethoxybenzoyl)-4-ethoxyphenylphosphine oxide, bis(2-methyl-1-naphthoyl)-2,5-dimethylphenylphosphine oxide, bis(2-methyl-1-naphthoyl)-4-ethoxyphenylphosphine oxide, bis(2-methyl-1-naphthoyl)-2-naphthylphosphine oxide, bis(2-methyl-1-naphthoyl)-4-propylphenylphosphine oxide, bis(2-methyl-1-naphthoyl)-2,5-dimethylphenylphosphine oxide, bis(2-methoxy-1-naphthoyl)-4-ethoxyphenylphosphine oxide, bis(2-chloro-1-naphthoyl)-2,5-dimethylphenylphosphine oxide, and bis(2,6-dimethoxybenzoyl)-2,4,4-trimethylpentylphosphine oxide.

Among these, as the acylphosphine oxide compound, bis(2,4,6-trimethylbenzoyl)phenylphosphine oxide (product name "Omnirad 819") is preferable.

Examples of the thioxanthone compound include thioxanthone, 2-isopropylthioxanthone, 4-isopropylthioxanthone, 2-chlorothioxanthone, 2,4-dichlorothioxanthone, 2-dodecylthioxanthone, 2,4-diethylthioxanthone, 2,4-dimethylthioxanthone, 1-methoxycarbonylthioxanthone, 2-ethoxycarbonylthioxanthone, 3-(2-methoxyethoxycarbonyl)thioxanthone, 4-butoxycarbonylthioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminothioxanthone, 1-ethoxycarbonyl-3-phenylsulfylthioxanthone, 3,4-di[2-(2-methoxyethoxy)ethoxycarbonyl]thioxanthone, 1-ethoxycarbonyl-3-(1-methyl-1-morpholinoethyl)thioxanthone, 2-methyl-6-dimethoxymethylthioxanthone, 2-methyl-6-(1,1-dimethoxybenzyl)thioxanthone, 2-morpholinomethylthioxanthone, 2-methyl-6-morpholinomethylthioxanthone, n-allylthioxanthone-3,4-dicarboxyimide, n-octylthioxanthone-3,4-dicarboxyimide, N-(1,1,3,3-tetramethylbutyl)thioxanthone-3,4-dicarboxyimide, 1-phenoxythioxanthone, 6-ethoxycarbonyl-2-methoxythioxanthone, 6-ethoxycarbonyl-2-methylthioxanthone, thioxanthone-2-polyethylene glycol ester, and 2-hydroxy-3-(3,4-dimethyl-9-oxo-9H-thioxanthone-2-yloxy)-N,N,N-trimethyl-1-propaneaminium chloride.

The thioxanthone compound may be a commercially available product. Examples of the commercially available product include SPEEDCURE series (for example, SPEEDCURE 7010, SPEEDCURE CPTX, SPEEDCURE ITX, and the like) manufactured by Lambson.

From the viewpoint of improving the curing properties of the ink, a content of the polymerization initiator is preferably 2% by mass or more and more preferably 5% by mass or more with to the total amount of the ink. The upper limit of the content of the polymerization initiator is not particularly limited, but for example, it is 10% by mass.

<Polymerization inhibitor>

The ink according to the embodiment of the present disclosure preferably contains at least one polymerization inhibitor.

Examples of the polymerization inhibitor include a hydroquinone compound, phenothiazine, catechols, alkylphenols, alkylbisphenols, zinc dimethyldithiocarbamate, copper dimethyldithiocarbamate, copper dibutyldithiocarbamate, copper salicylate, a thiodipropionic acid ester, mercaptobenzimidazole, phosphites, a nitrosamine compound, a hindered amine compound, and a nitroxyl radical.

Among these, the polymerization inhibitor is still more preferably a nitrosamine compound.

Examples of the nitrosamine compound include an N-nitroso-N-phenylhydroxylamine aluminum salt and N-nitroso-N-phenylhydroxylamine. Among these, as the nitrosamine compound, an N-nitroso-N-phenylhydroxylamine aluminum salt is preferable.

From the viewpoint of improving temporal stability of the ink, a content of the polymerization inhibitor is preferably 0.05% by mass to 0.5% by mass with respect to the total amount of the ink.

<Colorant>

The ink according to the embodiment of the present disclosure may contain at least one colorant.

Examples of the colorant include a dye and a pigment. From the viewpoint of durability such as heat resistance, light resistance, and water resistance, the colorant is preferably a pigment.

In a case where a pigment is used as the colorant, the ink can contain the pigment as a pigment dispersion liquid. The pigment dispersion liquid is a liquid obtained by dispersing the pigment in a liquid medium using a dispersant, and contains at least the pigment, the dispersant, and the liquid medium. Details of the dispersant will be described later. In addition, the liquid medium may be an organic solvent or a polymerizable monomer.

As the pigment, any commercially available organic pigment or inorganic pigment can be used. Examples of the pigment include pigments described in "Encyclopedia of Pigments" edited by Seishiro Ito (2000), "Industrial Organic Pigments", W.Herbst, K.Hunger, JP2002-12607A, JP2002-188025A, JP2003-26978A, and JP2003-342503A.

In a case where the ink contains the colorant, a content of the colorant is preferably 0.5% by mass to 15% by mass, more preferably 1% by mass to 10% by mass, and still more preferably 2% by mass to 5% by mass with respect to the total amount of the ink.

The ink according to the embodiment of the present disclosure may be a so-called clear ink which does not contain the colorant. In order to impart glossiness to the substrate, only the clear ink may be applied onto the substrate. In addition, the clear ink may be applied as an undercoat liquid (precoat liquid) in a case where an image is recorded on the substrate, before applying colored ink. In addition, the clear ink may be applied as an overcoat liquid in a case where an image is recorded on the substrate, after applying colored ink.

<Dispersant>

In a case where a pigment is used as the colorant, the ink can contain the pigment as a pigment dispersion liquid. The pigment can be dispersed in the liquid medium by using the dispersant. As the dispersant, a generally known dispersant can be used. From the viewpoint of dispersion stability, the dispersant is preferably a compound having both a hydrophilic structure and a hydrophobic structure.

Examples of the dispersant include low-molecular-weight dispersants having a molecular weight of less than 1,000, such as higher fatty acid salt, alkyl sulfate, alkyl ester sulfate, alkyl sulfonate, sulfosuccinate, naphthalene sulfonate, alkyl phosphate, polyoxyalkylene alkyl ether phosphate, polyoxyalkylene alkyl phenyl ether, polyoxyethylene polyoxypropylene glycol, glycerin fatty acid ester, sorbitan fatty acid ester, polyoxyethylene fatty acid amide, and amine oxide.

In addition, examples of the dispersant include high-molecular-weight dispersants having a molecular weight of 1,000 or more, which are obtained by copolymerizing a hydrophilic monomer and a hydrophobic monomer. From the viewpoint of dispersion stability, as the hydrophilic monomer, a dissociable group-containing monomer is preferable, and a dissociable group-containing monomer which has a dissociable group and an ethylenically unsaturated bond is preferable. Examples of the dissociable group-containing monomer include a carboxy group-containing monomer, a sulfonic acid group-containing monomer, and a phosphoric acid group-containing monomer. From the viewpoint of dispersion stability, the hydrophobic monomer is preferably an aromatic group-containing monomer which has an aromatic group and an ethylenically unsaturated bond, or an aliphatic hydrocarbon group-containing monomer which has an aliphatic hydrocarbon group and an ethylenically unsaturated bond. The polymer may be either a random copolymer or a block copolymer.

The dispersant may be a commercially available product. Examples of the commercially available product include:

DISPERBYK-101, DISPERBYK-102, DISPERBYK-103, DISPERBYK-106, DISPERBYK-110, DISPERBYK-111, DISPERBYK-161, DISPERBYK-162, DISPERBYK-163, DISPERBYK-164, DISPERBYK-166, DISPERBYK-167, DISPERBYK-168, DISPERBYK-170, DISPERBYK-171, DISPERBYK-174, and DISPERBYK-182 (all manufactured by BYK-Chemie GmbH); and
SOLSPERSE 3000, SOLSPERSE 5000, SOLSPERSE 9000, SOLSPERSE 12000, SOLSPERSE 13240, SOLSPERSE 13940, SOLSPERSE 17000, SOLSPERSE 22000, SOLSPERSE 24000, SOLSPERSE 26000, SOLSPERSE 28000, SOLSPERSE 32000, SOLSPERSE 36000, SOLSPERSE 39000, SOLSPERSE 41000, and SOLSPERSE 71000 (all manufactured by Lubrizol Corporation).

As a dispersion apparatus for dispersing the pigment, a known dispersion apparatus can be used, and examples thereof include a ball mill, a sand mill, a beads mill, a roll mill, a jet mill, a paint shaker, an attritor, an ultrasonic disperser, and a disper.

In the ink, from the viewpoint of dispersion stability, a content of the dispersant with respect to the content of the pigment is preferably 0.05 to 1.0 and more preferably 0.1 to 0.5 on a mass basis.

<Additive>

The ink according to the embodiment of the present disclosure may contain additives such as a co-sensitizer, an ultraviolet absorbing agent, an antioxidant, a fading inhibitor, a conductive salt, a solvent, and a basic compound, as necessary.

A viscosity of the ink is preferably 0.5 mPa s to 50 mPa s, more preferably 5 mPa s to 40 mPa·s, still more preferably 7 mPa·s to 35 mPa·s, and even more preferably 8 mPa·s to 30 mPa·s. The viscosity is measured at 25°C using a viscometer, for example, a TV-22 type viscometer manufactured by Toki Sangyo Co., Ltd.

A surface tension of the ink is preferably 60 mN/m or less, more preferably 20 mN/m to 50 mN/m, and still more preferably 25 mN/m to 45 mN/m.

[Active energy ray-curable inkjet ink]

As another embodiment of the present disclosure, preferred aspects of the active energy ray-curable inkjet ink are shown below. The above-described active energy ray-curable inkjet ink for a beverage container is for the beverage container, but the active energy ray-curable inkjet ink according to another embodiment of the present disclosure is not limited to the beverage container. Since details of each component contained in the active energy ray-curable inkjet ink according to another embodiment of the present disclosure are the same as those in the above-described active energy ray-curable inkjet ink for a beverage container, the description thereof will be omitted.

(Aspect 1)

An active energy ray-curable inkjet ink containing a polymerizable monomer and a polymerizable surfactant,

in which the polymerizable monomer includes a monofunctional monomer, and
a content of the monofunctional monomer is 60% by mass or more with respect to the total amount of the active energy ray-curable inkjet ink.

(Aspect 2)

In the aspect 1, a mass ratio of the content of the above-described monofunctional monomer to the content of the above-described polymerizable surfactant is 3 to 100.

(Aspect 3)

In the aspect 1 or the aspect 2, the above-described polymerizable monomer includes a polymerizable monomer having an acid group.

(Aspect 4)

In the aspect 3, a mass ratio of the content of the above-described polymerizable monomer having an acid group to the content of the above-described polymerizable surfactant is 0.2 to 10.

(Aspect 5)

In any one of the aspects 1 to 4, the above-described polymerizable surfactant is a silicone-based surfactant having a (meth)acryloyl group.

(Aspect 6)

In any one of the aspects 1 to 5, the above-described polymerizable surfactant is a compound having a surface tension reduction of 5 mN/m or more relative to cyclic trimethylolpropane formal acrylate.

[Active energy ray-curable ink set (ink set A)]

The ink set A according to the embodiment of the present disclosure contains a first ink containing a polyfunctional monomer and a second ink containing a monofunctional monomer, in which at least one of the first ink or the second ink contains a polymerizable surfactant. Hereinafter, the first ink and the second ink contained in the ink set A are also referred to as a first ink A and a second ink A, respectively.
The ink set A according to the embodiment of the present disclosure is an active energy ray-curable ink set. That is, each of the first ink A and the second ink A contained in the ink set A according to the embodiment of the present disclosure is cured by irradiation with an active energy ray. The type of the active energy ray is not particularly limited, and examples thereof include γ-rays, β-rays, electron beams, ultraviolet rays, and visible rays. Among these, ultraviolet rays are preferable as the active energy ray. It is preferable that the ink set A according to the embodiment of the present disclosure is an ultraviolet-curable ink set.

<First ink A>

The first ink A in the ink set A according to the embodiment of the present disclosure contains a polyfunctional monomer. Details and preferred aspects of the polyfunctional monomer are the same as those in the active energy ray-curable inkjet ink for a beverage container described above. A content of the polyfunctional monomer is preferably 25% by mass or more, more preferably 28% by mass or more, and still more preferably 30% by mass or more with respect to the total amount of the first ink A.
The first ink A contains a polymerizable surfactant, and a mass ratio of the content of the polyfunctional monomer to a content of the polymerizable surfactant in the first ink A is preferably 4 to 80, more preferably 6 to 80, and still more preferably 15 to 50.
The first ink A preferably contains a polymerizable monomer having a specific gravity of 1.0 or less.
Preferred aspects of the first ink A are the same as the first aspect of the ink according to the embodiment of the present disclosure, except for the following details.

<Second ink A>

The second ink A in the ink set A according to the embodiment of the present disclosure contains a monofunctional monomer. Details and preferred aspects of the monofunctional monomer are the same as those in the active energy ray-curable inkjet ink for a beverage container described above. A content of the monofunctional monomer is preferably 70% by mass or more, more preferably 71% by mass or more, and still more preferably 72% by mass or more with respect to the total amount of the second ink.

The second ink contains a polymerizable surfactant, and a mass ratio of the content of the monofunctional monomer to a content of the polymerizable surfactant in the second ink is preferably 3 to 100, more preferably 4 to 50, and still more preferably 5 to 40.

The second ink preferably contains a polymerizable monomer having an acid group.

Preferred aspects of the second ink are the same as the second aspect of the ink according to the embodiment of the present disclosure, except for the following details.

(Polymerizable surfactant)

In the ink set A according to the embodiment of the present disclosure, at least one of the first ink A or the second ink A contains a polymerizable surfactant. Details and preferred aspects of the polymerizable surfactant are the same as those in the active energy ray-curable inkjet ink for a beverage container described above. The polymerizable surfactant may be contained only in the first ink A, may be contained only in the second ink A, or may be contained in both the first ink A and the second ink A. From the viewpoint of improving the separation properties, it is preferable that the polymerizable surfactant is contained in both the first ink A and the second ink A.

From the viewpoint of improving the separation properties and suppressing cissing of the image, in at least one of the first ink A or the second ink A, it is preferable that the polymerizable surfactant includes a polymerizable surfactant A having a log P value of 4 or more and a polymerizable surfactant B having a log P value of less than 4. Among these, it is more preferable that the first ink A contains the polymerizable surfactant A and the polymerizable surfactant B.

(Colorant)

In the ink set A according to the embodiment of the present disclosure, it is preferable that one of the first ink A or the second ink A does not contain a colorant. Since the second ink containing a monofunctional monomer has excellent adhesiveness to the substrate, it is preferable to be used as an undercoat liquid. Therefore, it is more preferable that the second ink A does not contain a colorant. In addition, in a case where the second ink A is used as the undercoat liquid, it is preferable that the image is recorded with the first ink A. Therefore, it is still more preferable that the first ink A contains a colorant and the second ink A does not contain a colorant.

In a case where the second ink A does not contain a colorant, the second ink A functions as the undercoat liquid by applying the second ink and then the first ink A onto the substrate.

-Polyfunctional monomer in first ink A and second ink A/monofunctional monomer in second ink A-

In a case where the mass of the first ink A and the mass of the second ink A are the same, a mass ratio of the total content of the polyfunctional monomer in the first ink A and the second ink A to the content of the monofunctional monomer in the second ink A is preferably 0.2 to 0.9, more preferably 0.3 to 0.9, and still more preferably 0.4 to 0.8. In a case where the above-described mass ratio is 0.2 or more, the alkali peelability and the ethanol resistance are improved. On the other hand, in a case where the above-described mass ratio is 0.9 or less, the adhesiveness to the substrate is improved.

-Polymerizable surfactant in second ink A/polymerizable surfactant in first ink A-

In a case where the mass of the first ink A and the mass of the second ink A are the same, a mass ratio of the content of the polymerizable surfactant in the second ink A to the content of the polymerizable surfactant in the first ink A is preferably 0.5 to 12, more preferably 2 to 11, and still more preferably 3 to 10. In a case where the above-described mass ratio is 0.5 or more, the separation properties and the ethanol resistance are improved. On the other hand, in a case where the above-described mass ratio is 12 or less, the adhesiveness to the substrate is improved.

In addition, from the viewpoint of further improving the adhesiveness to the substrate, it is preferable that the polymerizable surfactant in the second ink A has a lower surface tension reduction relative to CTFA than the polymerizable surfactant in the first ink A. It is particularly preferable that the polymerizable surfactant in the second ink A has a lower surface tension reduction relative to CTFA than the polymerizable surfactant in the first ink A, and the mass ratio of the content of the polymerizable surfactant in the second ink A to the content of the polymerizable surfactant in the first ink A is 2 to 11.

In a case where the second ink A contains the polymerizable monomer having an acid group and the mass of the first ink A and the mass of the second ink A are the same, the mass ratio of the content of the polymerizable surfactant in the second ink A to the content of the polymerizable surfactant in the first ink A is preferably 0.5 to 5, more preferably 0.7 to 3, and still more preferably 1.1 to 2. In a case where the above-described mass ratio is 0.5 or more, the cissing of the image is suppressed. On the other hand, in a case where the above-described mass ratio is 5 or less, the separation properties are improved.

-Polymerizable monomer having acid group in second ink A/monofunctional monomer in first ink A and second ink A-

In a case where the mass of the first ink A and the mass of the second ink A are the same, a mass ratio of the content of the polymerizable monomer having an acid group in the second ink A to the total content of the monofunctional monomer in the first ink A and the second ink A is preferably 0.01 to 0.15, more preferably 0.04 to 0.11, and still more preferably 0.05 to 0.1. In a case where the above-described mass ratio is 0.01 or more, the alkali peelability is improved. On the other hand, in a case where the above-described mass ratio is 0.15 or less, the adhesiveness is improved.

<Physical properties>

A viscosity of the first ink A and the second ink A is preferably 0.5 mPa·s to 50 mPa·s, more preferably 5 mPa·s to 40 mPa·s, still more preferably 7 mPa·s to 35 mPa·s, and particularly preferably 8 mPa s to 30 mPa s. The viscosity is measured at 25°C using a viscometer, for example, a TV-22 type viscometer manufactured by Toki Sangyo Co., Ltd.

A surface tension of the first ink A is preferably 60 mN/m or less, more preferably 20 mN/m to 30 mN/m, and still more preferably 20 mN/m to 25 mN/m.

A surface tension of the second ink A is preferably 60 mN/m or less, more preferably 20 mN/m to 40 mN/m, and still more preferably 23 mN/m to 30 mN/m.

It is preferable that the surface tension of the second ink A is higher than the surface tension of the first ink A.

As described later, the order in which the first ink A and the second ink A are applied onto the substrate is not particularly limited, but from the viewpoint of alkali peelability and adhesiveness to the substrate, it is preferable that the second ink A and the first ink A are applied in this order. In the application of the second ink A and the first ink A onto the substrate in this order, in a case where the surface tension of the second ink A is higher than the surface tension of the first ink A (in order words, in a case where the surface tension of the first ink A is lower than the surface tension of the second ink A), ink droplets of the first ink A spread easily, so that image quality is improved.

In addition, in a case where the surface tension of the second ink A is higher than the surface tension of the first ink A, a difference between the surface tension of the second ink A and the surface tension of the first ink A is preferably 2 mN/m or more, and more preferably 3 mN/ or more. The upper limit value of the above-described difference is, for example, 10 mN/m.

[Image recording method]

The image recording method according the embodiment of the present disclosure includes a step of applying the above-described ink (active energy ray-curable ink for a beverage container) onto a surface of a beverage container using an inkjet recording method; and a step of irradiating the applied ink with an active energy ray.

A material of the beverage container is not particularly limited, and examples thereof include glass and plastic. Among these, the beverage container is preferably a plastic container and more preferably a PET bottle containing polyethylene terephthalate as a main component.

The inkjet recording method is not particularly limited as long as it is a method capable of recording an image, and a known method can be used. Examples of the inkjet recording method include an electric charge control method of ejecting ink by using an electrostatic attraction force; a drop-on-demand method (pressure pulse method) of using a vibration pressure of a piezo element; an acoustic inkjet method of converting an electric signal into an acoustic beam, irradiating ink, and ejecting the ink using a radiation pressure; and a thermal inkjet (Bubble jet (registered trademark)) method of heating ink to form air bubbles and utilizing the generated pressure.

Examples of inkjet heads used in the inkjet recording method include inkjet heads for a shuttle method of using short serial heads that are caused to scan a substrate in a width direction of the substrate so as to perform recording and inkjet heads for a line method of using line heads that each consist of recording elements arranged for the entire area of each side of a substrate.

In the line method, pattern formation can be performed on the entire surface of a substrate by scanning the substrate in a direction perpendicular to a direction in which the recording elements are arranged, and a transport system such as a carriage that scans a short head is unnecessary. In addition, in the line method, complicated scanning control for moving a carriage and a substrate is not necessary, and only a substrate moves. Therefore, the recording speed can be further increased in the line method than in the shuttle method.

A liquid droplet volume of the undercoat composition jetted from the inkjet head is preferably 1 pL (picoliter) to 100 pL, more preferably 3 pL to 80 pL, and still more preferably 3 pL to 50 pL.

Examples of the active energy ray include $\gamma$-rays, $\beta$-rays, electron beams, ultraviolet rays, and visible rays. Among these, ultraviolet rays are preferable as the active energy ray.

A peak wavelength of the ultraviolet rays is, for example, preferably 200 nm to 405 nm, more preferably 250 nm to 400 nm, and still more preferably 300 nm to 400 nm.

As a light source for the ultraviolet irradiation, a mercury lamp, a gas laser, or a solid-state laser is mainly used, and a mercury lamp, a metal halide lamp, and an ultraviolet fluorescent lamp are widely known light sources. In addition, ultraviolet light emitting diode (UV-LED) or ultraviolet laser diode (UV-LD) is expected as the light source for the ultraviolet irradiation because they are compact, have long service life and high efficiency, and are inexpensive. Among these, a metal halide lamp, a high-pressure mercury lamp, a medium-pressure mercury lamp, a low-pressure mercury lamp, or UV-LED is preferable as the light source for the ultraviolet irradiation.

In the present disclosure, polymerization of only some of the polymerizable monomers in the ink is also referred to as "temporary curing", and active energy ray irradiation for the temporary curing is also referred to as "pinning exposure".

In the present disclosure, polymerization of substantially all the polymerizable monomers in the ink is also referred to as "full curing", and active energy ray irradiation for the full curing is also referred to as "main exposure".

In the step of irradiating the ink with an active energy ray, it is preferable that the ink is temporarily cured and then fully cured. Specifically, it is preferable to perform the pinning exposure on the ink after the application of the ink, and then finally to perform the main exposure.

A reaction rate of the ink after the pinning exposure is preferably 10% to 80%.

Here, the reaction rate of the ink means a polymerization rate of the polymerizable monomers contained in the ink, which is determined by high-performance liquid chromatography.

In a case where the reaction rate of the ink is 10% or more, insufficient spread of dots is suppressed, and as a result, graininess of the finally obtained image is improved.

In addition, in a case where the reaction rate of the ink is 80% or less, droplet interference between dots of the ink is suppressed, and as a result, the image quality of the finally obtained image is improved.

From the viewpoint of further improving the graininess of the finally obtained image, the reaction rate of the ink is preferably 15% or more.

From the viewpoint of further improving the image quality of the finally obtained image, the reaction rate of the ink is preferably 75% or less, more preferably 50% or less, still more preferably 40% or less, even more preferably 30% or less, and even more preferably 25% or less.

A reaction rate of the ink after the main exposure is preferably more than 80% and 100% or less, more preferably 85% to 100%, and still more preferably 90% to 100%.

In a case where the reaction rate is more than 80%, the adhesiveness is further improved.

The reaction rate of the ink is obtained by the following method.

A substrate which has been subjected to an operation until the irradiation of the ink with an active energy ray is completed is prepared. A sample piece having a size of 20 mm $\times$ 50 mm (hereinafter, referred to as a sample piece after irradiation) is cut out from a region of the substrate where the ink film is present. The cut sample piece after irradiation is immersed in 10 mL of tetrahydrofuran (THF) for 24 hours, thereby obtaining an eluate containing the eluted ink. High-performance liquid chromatography is performed on the obtained eluate to obtain an amount of the polymerizable monomers (hereinafter, called "amount X1 of monomers after irradiation").

Separately, the same operation as described above is performed except that the ink on the substrate is not irradiated with the active energy ray, and an amount of polymerizable monomers (hereinafter, called "amount X1 of monomers before irradiation") is obtained.

Based on the amount X1 of monomers after irradiation and the amount X1 of monomers before irradiation, the reaction rate (%) of the ink is obtained by the following expression.

$$\text{Reaction rate of ink (\%)} = ((\text{Amount X1 of monomers before irradiation} - \text{Amount X1 of monomers after irradiation})/\text{Amount X1 of monomers before irradiation}) \times 100$$

From the viewpoint of achieving the above-described reaction rate of the ink more easily, an exposure amount of the active energy ray for the pinning exposure is preferably 10 mJ/cm$^2$ to 100 mJ/cm$^2$ and more preferably 20 mJ/cm$^2$ to 60 mJ/cm$^2$.

From the viewpoint of fully curing the ink, an exposure amount of the active energy ray for the main exposure is preferably 50 mJ/cm$^2$ to 1000 mJ/cm$^2$ and more preferably 200 mJ/cm$^2$ to 800 mJ/cm$^2$.

In the main exposure, from the viewpoint of improving the adhesiveness to the substrate, it is preferable to perform the irradiation with an active energy ray in an atmosphere at an oxygen concentration of less than 1% by volume. The oxygen concentration is more preferably 0.5% by volume or less, and still more preferably 0.3% by volume or less.

In the step of irradiating the ink with an active energy ray, from the viewpoint of image quality, it is preferable to perform the irradiation with an active energy ray within 0.1 seconds to 5 seconds after the ink has landed. In a case where the pinning exposure and the main exposure are performed, it is preferable to perform the irradiation with an active energy ray for the pinning exposure within 0.1 seconds to 5 seconds after the ink has landed. The time immediately before a timing of ink landing to irradiation with an active energy ray (in a case where the pinning exposure and the main exposure are performed, active energy ray for the pinning exposure) is more preferably within 0.2 seconds to 1 second.

[Image recording method]

The image recording method according to the embodiment of the present disclosure includes a step of, using the above-described ink set A (active energy ray-curable ink set), applying the first ink and the second ink A onto a substrate using an inkjet recording method and a step of irradiating the first ink and the second ink A each applied with an active energy ray.

(Step of applying first ink A and second ink A onto substrate using inkjet recording method)

The order in which the first ink A and the second ink A are applied onto the substrate is not particularly limited, but from the viewpoint of alkali peelability and adhesiveness to the substrate, it is preferable that the second ink A and the first ink A are applied in this order. Since the second ink A contains the monofunctional monomer, the adhesiveness to the substrate is excellent. On the other hand, since the first ink A contains the polyfunctional monomer, the alkali peelability is excellent. By using the second ink A as an ink to be applied directly onto the substrate, the adhesiveness to the substrate can be ensured. In addition, in a case where the image recorded material is immersed in an alkali solution, the outermost surface of the ink film comes into contact with alkali, so that, by applying the first ink after the second ink, the alkali peelability can be ensured.

The type of the substrate is not particularly limited, and a generally known substrate can be used as the substrate. Examples of the substrate include glass, quartz, and a plastic film. Examples of a resin constituting the plastic film include cellulose diacetate, cellulose triacetate, cellulose propionate, cellulose butyrate, cellulose acetate butyrate, cellulose nitrate, an acrylic resin, a chlorinated polyolefin resin, a polyether sulfone resin, polyethylene terephthalate (PET), polyethylene naphthalate, nylon, polyethylene, polystyrene, polypropylene, a polycycloolefin resin, a polyimide resin, a polycarbonate resin, and polyvinyl acetal. The plastic film may be a film containing only one of these resins or a film mixing two or more of these resins.

A thickness of the substrate is not particularly limited, and is, for example, 1 μm to 10 mm. In a case where the substrate is a film, a thickness thereof is preferably 1 μm to 500 μm, more preferably 2 μm to 200 μm, still more preferably 5 μm to 100 μm, and particularly preferably 10 μm to 90 μm. In addition, in a case where the substrate is glass, a thickness thereof is preferably 0.1 mm to 10 mm, more preferably 0.15 mm to 8 mm, and still more preferably 0.2 mm to 5 mm.

In addition, the substrate may be a beverage container, and preferred aspects of the beverage container are as described above.

Details of the inkjet recording method are as described above.

(Step of irradiating each of first ink A and second ink A applied with active energy ray)

Examples of the active energy ray include γ-rays, β-rays, electron beams, ultraviolet rays, and visible rays. Among these, ultraviolet rays are preferable as the active energy ray.

A peak wavelength of the ultraviolet rays is, for example, preferably 200 nm to 405 nm, more preferably 250 nm to 400 nm, and still more preferably 300 nm to 400 nm.

As a light source for the ultraviolet irradiation, a mercury lamp, a gas laser, or a solid-state laser is mainly used, and a mercury lamp, a metal halide lamp, and an ultraviolet fluorescent lamp are widely known light sources. In addition, ultraviolet light emitting diode (UV-LED) or ultraviolet laser diode (UV-LD) is expected as the light source for the ultraviolet irradiation because they are compact, have long service life and high efficiency, and are inexpensive. Among these, a metal halide lamp, a high-pressure mercury lamp, a medium-pressure mercury lamp, a low-pressure mercury lamp, or UV-LED is preferable as the light source for the ultraviolet irradiation.

Hereinafter, regarding a description common to the first ink A and the second ink A, the first ink A and the second ink A will also be simply referred to as "ink".

In the step of irradiating the first ink A and the second ink A with an active energy ray, it is preferable that the first ink A and the second ink A are temporarily cured and then fully cured. Specifically, it is preferable that, after applying the second ink A, the second ink A is subjected to the pinning exposure, the first ink A is applied onto the temporarily cured second ink A, the applied first ink A is subjected to the pinning exposure, and then the first ink A and the second ink A are finally subjected to the main exposure.

A reaction rate of the ink after the pinning exposure is preferably 10% to 80%.

In a case where the reaction rate of the ink (for example, the second ink A) is 10% or more, insufficient spread of dots of an ink (for example, the first ink) applied onto the ink is suppressed, and as a result, graininess of the finally obtained image is improved.

In addition, in a case where the reaction rate of the ink (for example, the second ink A) is 80% or less, excessive spreading of an ink (for example, the first ink A) applied onto the ink is suppressed and droplet interference between dots of the ink is suppressed, and as a result, the image quality of the finally obtained image is improved.

From the viewpoint of further improving the graininess of the finally obtained image, the reaction rate of the ink is preferably 15% or more.

From the viewpoint of further improving the image quality of the finally obtained image, the reaction rate of the ink is preferably 75% or less, more preferably 50% or less, still more preferably 40% or less, even more preferably 30% or less, and even more preferably 25% or less.

A reaction rate of the ink after the main exposure is preferably more than 80% and 100% or less, more preferably 85% to 100%, and still more preferably 90% to 100%.

In a case where the reaction rate is more than 80%, the adhesiveness is further improved.

From the viewpoint of achieving the above-described reaction rate of the ink more easily, an exposure amount of the active energy ray for the pinning exposure is preferably 10 $mJ/cm^2$ to 100 $mJ/cm^2$ and more preferably 20 $mJ/cm^2$ to 60 $mJ/cm^2$.

From the viewpoint of fully curing the first ink A and the second ink A, an exposure amount of the active energy ray for the main exposure is preferably 50 $mJ/cm^2$ to 1000 $mJ/cm^2$ and more preferably 200 $mJ/cm^2$ to 800 $mJ/cm^2$.

In the main exposure, from the viewpoint of improving the adhesiveness to the substrate, it is preferable to perform the irradiation with an active energy ray in an atmosphere at an oxygen concentration of less than 1% by volume. The oxygen concentration is more preferably 0.5% by volume or less, and still more preferably 0.3% by volume or less.

In addition, in the step of irradiating the first ink A and the second ink A with an active energy ray, from the viewpoint of image quality, it is preferable to perform the irradiation with an active energy ray within 0.2 seconds to 5 seconds after each of the first ink A and the second ink A has landed. In a case where the pinning exposure and the main exposure are performed, it is preferable to perform the irradiation with an active energy ray for the pinning exposure within 0.2 seconds to 5 seconds after each of the first ink A and the second ink A has landed. The time immediately before a timing of landing of each of the first ink A and the second ink A to irradiation with an active energy ray (in a case where the pinning exposure and the main exposure are performed, active energy ray for the pinning exposure) is more preferably within 0.3 seconds to 2 seconds.

[Active energy ray-curable ink set (ink set B)]

The ink set B according to the embodiment of the present disclosure contains a first ink containing a colorant and a polymerizable monomer having a hydroxyl group, and a second ink containing a polymerizable monomer having an acid group. Hereinafter, the first ink and the second ink contained in the ink set B are also referred to as a first ink B and a second ink B, respectively.

The ink set B according to the embodiment of the present disclosure is an active energy ray-curable ink set. That is, each of the first ink B and the second ink B contained in the ink set B according to the embodiment of the present disclosure is cured by irradiation with an active energy ray. The type of the active energy ray is not particularly limited, and examples thereof include γ-rays, β-rays, electron beams, ultraviolet rays, and visible rays. Among these, ultraviolet rays are preferable as the active energy ray. It is preferable that the ink set B according to the embodiment of the present disclosure is an ultraviolet-curable ink set.

<First ink B>

The first ink B in the ink set B according to the embodiment of the present disclosure contains a colorant and a polymerizable monomer having a hydroxyl group.

By containing the polymerizable monomer having a hydroxyl group in the first ink B, an alkali aqueous solution easily permeates the ink film. Therefore, in a case where the image recorded material is immersed in an alkali aqueous solution, the ink film is easily peeled off from the substrate.

The number of hydroxyl groups in the polymerizable monomer having a hydroxyl group is not particularly limited, and for example, it is 1 to 6. From the viewpoint of viscosity of the ink, the above-described number of hydroxyl groups is preferably 1 to 3 and more preferably 1 or 2.

Examples of the polymerizable monomer having a hydroxyl group include (meth)acrylates such as 2-hydroxyethyl (meth)acrylate, 3-hydroxypropyl (meth)acrylate, 2-hydroxypropyl (meth)acrylate, 2-hydroxybutyl (meth)acrylate, 3-hydroxybutyl (meth)acrylate, and 4-hydroxybutyl (meth)acrylate;

vinyl ethers such as hydroxyethyl vinyl ether, hydroxypropyl vinyl ether, and hydroxybutyl vinyl ether; and
allyl ethers such as hydroxyethyl allyl ether, hydroxypropyl allyl ether, and hydroxybutyl allyl ether.

Among these, from the viewpoint of reactivity, the polymerizable monomer having a hydroxyl group is preferably a (meth)acrylate having a hydroxyl group.

From the viewpoint of further improving the alkali peelability and the water resistance, a content of the polymerizable monomer having a hydroxyl group is preferably 20% by mass to 75% by mass, more preferably 30% by mass to 70% by mass, and still more preferably 40% by mass to 60% by mass with respect to the total amount of the first ink B.

The first ink B contains at least one colorant.

As specific examples and preferred aspects of the colorant contained in the first ink B, the colorant in the active energy ray-curable inkjet ink for a beverage container described above can be referred to.

The first ink B may contain a polymerizable monomer other than the polymerizable monomer having a hydroxyl group. As specific examples and preferred aspects of other polymerizable monomers, the polymerizable monomers other than the polymerizable monomer having a hydroxyl group, in the polymerizable monomers in the active energy ray-curable inkjet ink for a beverage container described above, can be referred to.

The first ink B preferably contains at least one dispersant.

The first ink B preferably contains at least one polymerization initiator.

The first ink B preferably contains at least one polymerization inhibitor.

As specific examples and preferred aspects of the dispersant, the polymerization initiator, and the polymerization inhibitor, the dispersant, the polymerization initiator, and the polymerization inhibitor in the active energy ray-curable inkjet ink for a beverage container described above can be referred to.

The first ink B preferably contains at least one surfactant.

The type of the surfactant which may be contained in the first ink B is not particularly limited, and may be any of an anionic surfactant, a cationic surfactant, or a nonionic surfactant. In addition, the surfactant may be a silicone-based surfactant or a fluorine-based surfactant.

In addition, the surfactant may be a polymerizable surfactant or a non-polymerizable surfactant. As specific examples and preferred aspects of the polymerizable surfactant, the polymerizable surfactant in the active energy ray-curable inkjet ink for a beverage container described above can be referred to.

The first ink B may contain additives such as a co-sensitizer, an ultraviolet absorbing agent, an antioxidant, a fading inhibitor, a conductive salt, a solvent, and a basic compound, as necessary.

<Second ink B>

The second ink B in the ink set B according to the embodiment of the present disclosure contains a polymerizable monomer having an acid group.

As details of the acid group, and specific examples and preferred aspects of the polymerizable monomer having an acid group, the polymerizable monomer having an acid group in the active energy ray-curable inkjet ink for a beverage container described above can be referred to. The polymerizable monomer having an acid group is preferably a polymerizable monomer having a carboxy group.

In a case where the acid group reacts with alkali to form a salt, water solubility is improved. Therefore, in a case where the second ink B contains the polymerizable monomer having an acid group, the alkali peelability is improved.

In addition, since the first ink B contains the polymerizable monomer having a hydroxyl group and the second ink B contains the polymerizable monomer having an acid group, both a first ink film formed of the first ink B and a second ink film formed of the second ink B are hydrophilic. In a case where the image recorded material is immersed in water, since the both the first ink film and the second ink film expand by the water, cure shrinkage is suppressed. Therefore, the image is unlikely to be peeled off from the substrate due to the water, and the water resistance is excellent.

From the viewpoint of improving the alkali peelability and the water resistance, a content of the polymerizable monomer having an acid group is preferably 5% by mass to 25% by mass, and more preferably 10% by mass to 20% by mass with respect to the total amount of the second ink B. In a case where the content of the polymerizable monomer having an acid group is 5% by mass or more, the effects of the alkali peelability and the water resistance based on the acid group are further exhibited. On the other hand, in a case where the content of the polymerizable monomer having an acid group is 25% by mass or less, the viscosity of the ink is appropriately maintained, and j ettability in a case where the ink is jetted by the inkjet recording method is excellent. Since the second ink is applied more uniformly, an image having excellent alkali peelability and water resistance can be obtained.

It is preferable that the second ink B further contains a polymerizable monomer having a hydroxyl group. In a case where the second ink B contains the polymerizable monomer having a hydroxyl group, hydrophilicity of the second ink B is improved, and the alkali peelability is more excellent.

As specific examples and preferred aspects of the polymerizable monomer having a hydroxyl group, the polymerizable monomer having a hydroxyl group in the first ink B of the ink set B described above can be referred to.

-Total content of polymerizable monomer having acid group and polymerizable monomer having hydroxyl group-

In the second ink B, the total content of the polymerizable monomer having an acid group and the polymerizable monomer having a hydroxyl group is preferably 10% by mass to 50% by mass, and more preferably 20% by mass to 45% by mass with respect to the total amount of the second ink B. In a case where the above-described total content is 10% by mass or more, the alkali peelability is excellent. On the other hand, in a case where the above-described total content is 50% by mass or less, the water resistance is excellent.

-Content of polymerizable monomer having hydroxyl group in first ink B/total content of polymerizable monomer having acid group and polymerizable monomer having hydroxyl group in second ink B-

In a case where the mass of the first ink B and the mass of the second ink B are the same, a mass ratio of the content of the polymerizable monomer having a hydroxyl group in the first ink B to the total content of the polymerizable monomer having an acid group and the polymerizable monomer having a hydroxyl group in the second ink B is preferably 1 to 4 and more preferably 1 to 3. In a case where the above-described mass ratio is 1 or more, the water resistance is more excellent. On the other hand, in a case where the above-described mass ratio is 4 or less, the alkali peelability is more excellent.

The second ink B preferably contains at least one dispersant.

The second ink B preferably contains at least one polymerization initiator.

The second ink B preferably contains at least one polymerization inhibitor.

As specific examples and preferred aspects of the dispersant, the polymerization initiator, and the polymerization inhibitor, the dispersant, the polymerization initiator, and the polymerization inhibitor in the active energy ray-curable inkjet ink for a beverage container described above can be referred to.

The second ink B preferably contains at least one surfactant.

The type of the surfactant which may be contained in the second ink B is not particularly limited, and may be any of an anionic surfactant, a cationic surfactant, or a nonionic surfactant. In addition, the surfactant may be a silicone-based surfactant or a fluorine-based surfactant.

In addition, the surfactant may be a polymerizable surfactant or a non-polymerizable surfactant. As specific examples and preferred aspects of the polymerizable surfactant, the polymerizable surfactant in the active energy ray-curable inkjet ink for a beverage container described above can be referred to.

The second ink B may contain additives such as a co-sensitizer, an ultraviolet absorbing agent, an antioxidant, a fading inhibitor, a conductive salt, a solvent, and a basic compound, as necessary.

It is preferable that the second ink B does not contain the colorant, and it is preferable that the second ink B is used as an undercoat liquid.

The image recording method according to the embodiment of the present disclosure includes a step of, using the above-described ink set B (active energy ray-curable ink set), applying the first ink B and the second ink B onto a substrate using an inkjet recording method and a step of irradiating each of the first ink B and the second ink B applied with an active energy ray.

Details of the image recording method using the ink set B are the same as the details of the image recording method using the ink set A.

Examples

Hereinafter, the present disclosure will be described in more detail using Examples. However, the present disclosure is not limited to the following examples as long as it does not exceed the gist of the present invention.

## EP 4 328 278 A1

<Examples 1 to 17, Examples 33 to 42, and Comparative Examples 1 to 4>

[Preparation of ink]

First, a black pigment dispersion liquid was prepared.

25 parts by mass of a black pigment (product name "Special Black 250", manufactured by Orion Engineered Carbons), 5 parts by mass of a dispersant (product name "SOLSPERSE 32000", manufactured by Lubrizol Corporation), and 75 parts by mass of cyclic trimethylolpropane formal acrylate (product name "VISCOAT #200", manufactured by OSAKA ORGANIC CHEMICAL INDUSTRY LTD.) as a dispersion medium were charged into a disperser motor mill M50 (manufactured by Eiger), and dispersed at a circumferential speed of 9 m/s for 4 hours with zirconia beads having a diameter of 0.65 mm to prepare a black pigment dispersion liquid.

Next, the prepared black pigment dispersion liquid, and polymerizable monomers (monofunctional monomer and polyfunctional monomer), a polymerization initiator, a polymerization inhibitor, and a surfactant described in Tables 1, 2, 4, and 7 were mixed so that the content of each component was the content (% by mass) shown in Tables 1, 2, 4, and 7. The mixture was stirred for 20 minutes at 25°C under the conditions of 5000 rpm using a mixer (product name "L4R", manufactured by Silverson), thereby obtaining an ink.

<Examples 18 to 32 and Comparative Examples 5 to 8>

[Preparation of ink]

Polymerizable monomers (monofunctional monomer and polyfunctional monomer), a polymerization initiator, a polymerization inhibitor, and a surfactant described in Tables 3 and 4 were mixed so that the content of each component was the content (% by mass) shown in Tables 3 and 4. The mixture was stirred for 20 minutes at 25°C under the conditions of 5000 rpm using a mixer (product name "L4R", manufactured by Silverson), thereby obtaining an ink.

<Examples 101 to 118, Examples 201 to 227, and Comparative Example 101>

[Preparation of first ink]

A black pigment dispersion liquid was prepared by the same method as in Example 1. Thereafter, polymerizable monomers (monofunctional monomer and polyfunctional monomer), a polymerization initiator, a polymerization inhibitor, and a surfactant described in Tables 5, 6, and 8 to 10 were mixed so that the content of each component was the content (% by mass) shown in Tables 5, 6, and 8 to 10, and then a first ink was prepared by the same method as in Example 1.

[Preparation of second ink]

Polymerizable monomers (monofunctional monomer and polyfunctional monomer), a polymerization initiator, a polymerization inhibitor, and a surfactant described in Tables 5, 6, and 8 to 10 were mixed so that the content of each component was the content (% by mass) shown in Tables 5, 6, and 8 to 10, and then a second ink was prepared by the same method as in Example 18.

Details of each of the components described in Tables 1 to 10 are as follows.

<Polymerizable monomer>

-Polyfunctional monomer-

  · 3MPDDA: 3-methyl-1,5-pentanediol diacrylate (product name "SR341", manufactured by Sartomer)
  · TEGDA: triethylene glycol diacrylate (product name "3EG-A", manufactured by Kyoeisha Chemical Co., Ltd.)
  · DDDA: 1,10-decanediol diacrylate (product name "SR595", manufactured by Sartomer)

-Monofunctional monomer-

· CTFA: cyclic trimethylolpropane formal acrylate (product name "VISCOAT #200", manufactured by OSAKA ORGANIC CHEMICAL INDUSTRY LTD.)
· A-SA: 2-acryloyloxyethyl succinic acid (product name "NK ESTER A-SA", manufactured by Shin-Nakamura Chemical Co., Ltd.)
· STA: stearyl acrylate (product name "STA", manufactured by OSAKA ORGANIC CHEMICAL INDUSTRY LTD.)
· 4-HBA: 4-hydroxybutyl acrylate (product name "4-HBA", manufactured by OSAKA ORGANIC CHEMICAL INDUSTRY LTD.)

<Polymerization initiator>

· Omnirad 819: bis(2,4,6-trimethylbenzoyl)phenylphosphine oxide (manufactured by IGM Resins B.V)
· Speedcure 7010: 1,3-di({α-[1-chloro-9-oxo-9H-thioxanthen-4-yl]oxy]acetylpoly[oxy(1-methylethylene)]}oxy)-2,2-bis({α-[1-methylethylene)]}oxymethyl)propane

<Polymerization inhibitor>

· Q-1301: N-nitroso-N-phenyl hydroxylamine aluminum salt (manufactured by FUJIFILM Wako Pure Chemical Corporation)

<Colorant>

· Black pigment: Special Black 250 (manufactured by Orion Engineered Carbons)

<Dispersant>

· SOLSPERSE 32000: polyethyleneimine-based dispersant (manufactured by Lubrizol Corporation)

<Surfactant>

· (Meth)acryloyl group-containing acrylic surfactant: product name "CN821" (manufactured by Sartomer)
· (Meth)acryloyl group-containing fluorine-based surfactant: product name "MEGAFACD RS-76-NS" (manufactured by DIC Corporation)
· (Meth)acryloyl group-containing silicone-based surfactant 1: product name "Tegorad 2100" (manufactured by Evonik Industries AG)
· (Meth)acryloyl group-containing silicone-based surfactant 2: product name "Tegorad 2010" (manufactured by Evonik Industries AG)
· (Meth)acryloyl group-containing silicone-based surfactant 3: product name "Tegorad 2500" (manufactured by Evonik Industries AG)
· (Meth)acryloyl group-containing silicone-based surfactant 4: product name "Tegorad 2650" (manufactured by Evonik Industries AG)
· Non-polymerizable acrylic surfactant: product name "BYK361N" (manufactured by BYK)
· Non-polymerizable fluorine-based surfactant: product name "MEGAFACE F555" (manufactured by DIC Corporation)
· Non-polymerizable silicone-based surfactant: product name "BYK-UV3510" (manufactured by BYK)

With regard to a product in which the content of the surfactant was not 100% by mass (for example, a product containing a solvent other than the surfactant), the surfactant was used such that the content of the surfactant was adjusted to 100% by mass.

[Image recording]

<Examples 1 to 42 and Comparative Examples 1 to 8>

Using an inkjet recording device (product name "Cylinder JET", manufactured by TRITEK CO., LTD.) and an inkjet head (product name "KJ4A-RH", manufactured by KYOCERA Corporation), the prepared ink was applied onto a body of a PET bottle (product name "PET 500 maru", manufactured by Kokugo). Specifically, the ink was applied onto a surface with a size of 7 cm in a longitudinal direction of the PET bottle and 5 cm in a circumferential direction of the PET bottle under conditions of a liquid droplet volume of 11 pL (picoliter) and a resolution of $600 \times 600$ dpi (dot per inch) to record a 100% solid image having a thickness of 4 $\mu$m.

After the application of the ink, an LED light source attached to the inkjet recording device was used to irradiate the ink with ultraviolet rays at an exposure amount of 40 mJ/cm$^2$. As the LED light source, an UV-LED irradiator (product name "G4B", manufactured by KYOCERA Corporation) with a peak wavelength of 385 nm was used. Thereafter, the PET bottle on which the image had been recorded was placed in an exposure machine. The above-described PET bottle was set in a side-to-side direction. The exposure machine can rotate the above-described PET bottle. The entire image recorded on the PET bottle was exposed using the LED light source while being rotated. The exposure machine was connected to a nitrogen gas generator with a compressor (product name "Maxi-Flow 30", manufactured by Inhouse Gas Ltd.) at a pressure of 0.2 MPa·s, and nitrogen was flowed so that an oxygen concentration in the exposure machine was 1% by volume or less. Using the LED light source, the ink was fully cured by being irradiated with ultraviolet rays at an exposure amount of 500 mJ/cm$^2$, thereby obtaining an image recorded material.

<Examples 101 to 118 and Examples 201 to 227>

Using an inkjet recording device (product name "Cylinder JET", manufactured by TRITEK CO., LTD.) and an inkjet head (product name "KJ4A-RH", manufactured by KYOCERA Corporation), the prepared second ink was applied onto a body of a PET bottle (product name "PET 500 maru", manufactured by Kokugo). Specifically, the second ink was applied onto a surface with a size of 7 cm in a longitudinal direction of the PET bottle and 5 cm in a circumferential direction of the PET bottle under conditions of a liquid droplet volume of 11 pL (picoliter) and a resolution of $600 \times 600$ dpi (dot per inch) to record a 100% solid image having a thickness of 4 $\mu$m. Furthermore, the first ink was applied onto the second ink under the same conditions as in the application of the second ink to record a 100% solid image having a thickness of 4 $\mu$m. After each of the application of the second ink and the application of the first ink, an LED light source attached to the inkjet recording device was used to irradiate the ink with ultraviolet rays at an exposure amount of 40 mJ/cm$^2$. As the LED light source, an UV-LED irradiator (product name "G4B", manufactured by KYOCERA Corporation) with a peak wavelength of 385 nm was used. Thereafter, the PET bottle on which the image had been recorded was placed in an exposure machine. The above-described PET bottle was set in a side-to-side direction. The exposure machine can rotate the above-described PET bottle. The entire image recorded on the PET bottle was exposed using the LED light source while being rotated. The exposure machine was connected to a nitrogen gas generator with a compressor (product name "Maxi-Flow 30", manufactured by Inhouse Gas Ltd.) at a pressure of 0.2 MPa s, and nitrogen was flowed so that an oxygen concentration in the exposure machine was 1% by volume or less. Using the LED light source, the first ink and the second ink were fully cured by being irradiated with ultraviolet rays at an exposure amount of 500 mJ/cm$^2$, thereby obtaining an image recorded material.

The "full curing" of the ink could be determined by pressing plain paper (for example, copy paper C2 manufactured by Fuji Xerox Co., Ltd., product code "V436") on the image with a uniform force (force constant within a range of 500 mN/cm$^2$ to 1,000 mN/cm$^2$), and checking whether the image was transferred to the plain paper. That is, a case where the image was not transferred at all was referred to as a fully cured state.

[Evaluation]

Separation properties, alkali peelability, adhesiveness, and ethanol resistance were evaluated using the obtained image recorded material in each of Examples and Comparative examples. In Examples 33 to 42 and Examples 201 to 227, cissing suppression was further evaluated. The evaluation methods were as follows.

<Separation properties 1>

In the evaluation, the mass of the PET bottle before the image recording was measured in advance. In addition, the mass of the PET bottle (image recorded material) after the image recording was measured. The mass of the ink film formed on the surface of the PET bottle by the image recording (initial mass of the ink film) was calculated based on the following expression.

Initial mass of ink film = (Mass of image recorded material) - (Mass of PET bottle before image recording)

Next, the image recorded material was immersed in a 1.5% by mass sodium hydroxide aqueous solution at 85°C for 15 minutes. After 5 minutes, the ink film floating on an interface of the solution was recovered. The recovered ink film was dried, and the mass of the recovered ink film after drying was measured. A recovery rate was calculated based on the following expression.

$$\text{Recovery rate (\% by mass)} = (\text{Mass of recovered ink film after drying/Initial mass of ink film}) \times 100$$

Separation properties 1 were evaluated based on the recovery rate. It can be said that, as the recovery rate is higher, the separation properties are excellent. The evaluation standard was as follows.

5: recovery rate was 90% by mass or more.
4: recovery rate was 70% by mass or more and less than 90% by mass.
3: recovery rate was 50% by mass or more and less than 70% by mass.
2: recovery rate was 20% by mass or more and less than 50% by mass.
1: recovery rate was less than 20% by mass.

<Separation properties 2>

A recovery rate was calculated by the same method as the evaluation method of the separation properties 1, except that the image recorded material was immersed in a 1.5 by mass sodium hydroxide aqueous solution at 85°C for 10 minutes.
Separation properties 2 were evaluated based on the recovery rate.
The evaluation method of the separation properties 2 was a method which was difficult to carry out separation because the immersion time of the image recorded material was shorter than that of the evaluation method of the separation properties 1.

7: recovery rate was 90% by mass or more.
6: recovery rate was 80% by mass or more and less than 90% by mass.
5: recovery rate was 70% by mass or more and less than 80% by mass.
4: recovery rate was 60% by mass or more and less than 70% by mass.
3: recovery rate was 50% by mass or more and less than 60% by mass.
2: recovery rate was 40% by mass or more and less than 50% by mass.
1: recovery rate was less than 40% by mass.

<Alkali peelability>

The obtained image recorded material was immersed in a 1.5% by mass sodium hydroxide aqueous solution at 85°C, and the peeled state was visually observed. The time immediately before a timing of immersing the image recorded material until the ink film was completely peeled off from the image recorded material was defined as a peeling time.
Alkali peelability was evaluated based on the peeling time. It can be said that, as the peeling time is shorter, the alkali peelability is excellent. The evaluation standard was as follows.

5: peeling time was 5 minutes or shorter.
4: peeling time was longer than 5 minutes and 10 minutes or shorter.
3: peeling time was longer than 10 minutes and 15 minutes or shorter.
2: peeling time was longer than 15 minutes and 30 minutes or shorter.
1: peeling time was longer than 30 minutes.

<Adhesiveness>

A tape adhesiveness test was performed in accordance with the description of JIS K 5600-5-6: 1999, except that cross-cutting was not performed on the obtained image recorded material. After the test, the image recorded material was visually observed. A proportion (peeling area ratio) (%) of an area of a portion where peeling of the ink film had occurred with respect to the entire evaluation region was calculated.

Adhesiveness was evaluated based on the peeling area ratio. It can be said that, as the peeling area ratio is smaller, the adhesiveness is excellent. The evaluation standard was as follows.

> 5: peeling of the ink film did not occur.
> 4: peeling area ratio was more than 0% and 10% or less.
> 3: peeling area ratio was more than 10% and 20% or less.
> 2: peeling area ratio was more than 20% and 50% or less.
> 1: peeling area ratio was more than 50%.

<Ethanol resistance>

A surface of the obtained image recorded material, on which the image was recorded, was rubbed with a cotton swab infiltrated with a 75% by mass ethanol solution. The rubbed surface was visually observed whenever the surface was rubbed once, thereby confirming the presence or absence of peeling of the ink film. In a case where no peeling of the ink film was confirmed, rubbing was further performed with the cotton swab, and the rubbing was continued up to 20 times. On the other hand, in a case where the peeling of the ink film was confirmed, the rubbing was stopped at that time.

Ethanol resistance was evaluated based on the number of times of rubbing. It can be said that, the number of times of rubbing is higher, the ethanol resistance is excellent. The evaluation standard was as follows.

> 5: no peeling of the ink film was confirmed even after rubbing 20 times.
> 4: number of times of rubbing until the peeling of the ink film was confirmed was 15 to 20.
> 3: number of times of rubbing until the peeling of the ink film was confirmed was 10 to 14.
> 2: number of times of rubbing until the peeling of the ink film was confirmed was 5 to 9.
> 1: number of times of rubbing until the peeling of the ink film was confirmed was 1 to 4.

<Cissing suppression>

A surface of the obtained image recorded material, on which the image was recorded, was visually observed, and cissing suppression was evaluated based on the number of cissing marks having a diameter of 100 $\mu$m or more in a 1 cm $\times$ 1 cm region. It can be said that, the number of cissing marks is smaller, the cissing is further suppressed. The evaluation standard was as follows.

> 5: number of cissing marks was 0.
> 4: number of cissing marks was 1 to 3.
> 3: number of cissing marks was 4 or 5.
> 2: number of cissing marks was 6 to 10.
> 1: number of cissing marks was 11 or more.

The evaluation results are shown in Tables 1 to 10.

In Tables 1 to 10, "Polyfunctional monomer/polymerizable surfactant" indicates the mass ratio of the content of the polyfunctional monomer to the content of the polymerizable surfactant. "Monofunctional monomer/polymerizable surfactant" indicates the mass ratio of the content of the monofunctional monomer to the content of the polymerizable surfactant. "Acid group-containing monomer/polymerizable surfactant" indicates the mass ratio of the content of the monomer having an acid group to the content of the polymerizable surfactant. In addition, for the surfactant, the surface tension reduction relative to CTFA is described. The surface tension reduction relative to CTFA was calculated based on the following expression.

Surface tension reduction relative to CTFA = (Surface tension of CTFA) - (Surface tension of surfactant in a case of being added in addition amount of 0.5% by mass with respect to CTFA)

In Tables 5 to 10, "Polyfunctional monomer in first ink and second ink/monofunctional monomer in second ink" indicates the mass ratio of the total content of the polyfunctional monomer in the first ink and the second ink to the content of the monofunctional monomer in the second ink. "Polymerizable surfactant in first ink and second ink/monofunctional monomer in second ink" indicates the mass ratio of the total content of the polymerizable surfactant in the first ink and the second ink to the content of the monofunctional monomer in the second ink. "Polymerizable monomer having acid group in second ink/monofunctional monomer in first ink and second ink" indicates the mass ratio of the content of the polymerizable monomer having an acid group in the second ink to the total content of the monofunctional monomer in the first ink and the second ink.

In Tables 7, 9, and 10, "Polymerizable monomer having specific gravity of more than 1.0/polymerizable monomer having specific gravity of 1.0 or less" indicates the mass ratio of the content of the polymerizable monomer having a specific gravity of more than 1.0 to the content of the polymerizable monomer having a specific gravity of 1.0 or less.

In Tables 7 and 10, "Polymerizable surfactant B/polymerizable surfactant A" indicates the mass ratio of the content of the polymerizable surfactant B to the content of the polymerizable surfactant A. The polymerizable surfactant A is a polymerizable surfactant having a log P value of 4.0 or more, and the polymerizable surfactant B is a polymerizable surfactant having a log P value of less than 4.0. The log P value of the polymerizable surfactant was measured by the method according to JIS Z 7260-117: 2006.

[Table 1]

| | CTFA surface tension reduction [mN/m] | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Polyfunctional monomer (not having acid group) — 3MPDDA | | 40.0 | 40.0 | 40.0 | 40.0 | 32.0 | 35.0 | 37.0 | 40.0 | 41.0 | 41.5 | 41.8 |
| Monofuctional monomer (not having acid group) — CTFA | | 48.9 | 48.9 | 48.9 | 48.9 | 48.9 | 48.9 | 48.9 | 48.9 | 48.9 | 48.9 | 48.9 |
| Monofuctional monomer (having acid group) — A-SA | | - | - | - | - | - | - | - | - | - | - | - |
| Polymerisation initiator — Omnirad 819 | | 4.0 | 4.0 | 4.0 | 4.0 | 4.0 | 4.0 | 4.0 | 4.0 | 4.0 | 4.0 | 4.0 |
| Polymerisation initiator — Speedcure 7010 | | 2.0 | 2.0 | 2.0 | 2.0 | 2.0 | 2.0 | 2.0 | 2.0 | 2.0 | 2.0 | 2.0 |
| Polymerization inhibitor — Q-1301 | | 0.1 | 0.1 | 0.1 | 0.1 | 0.1 | 0.1 | 0.1 | 0.1 | 0.1 | 0.1 | 0.1 |
| Colorant — Black pigment | | 2.5 | 2.5 | 2.5 | 2.5 | 2.5 | 2.5 | 2.5 | 2.5 | 2.5 | 2.5 | 2.5 |
| Dispersant — SOLSPERSE 32000 | | 0.5 | 0.5 | 0.5 | 0.5 | 0.5 | 0.5 | 0.5 | 0.5 | 0.5 | 0.5 | 0.5 |

EP 4 328 278 A1

| | | CTFA surface tension reduction [mN/m] | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|
| Surfactant | (Meth)acryloyl group-containing acrylic surfactant | 2.4 | 2.0 | - | - | - | - | - | - | - | - | - | - |
| | (Meth)acryloyl group-containing fluorine-based surfactant | 13.8 | - | 2.0 | - | - | - | - | - | - | - | - | - |
| | (Meth)acryloyl group-containing silicone-based surfactant 1 | 9.0 | - | - | 2.0 | - | - | - | - | - | - | - | - |
| | (Meth)acryloyl group-containing silicone-based surfactant 2 | 14.6 | - | - | - | - | 10.0 | 7.0 | 5.0 | 2.0 | 1.0 | 0.5 | 0.2 |
| | (Meth)acryloyl group-containing surfactant 3 | 14.6 | - | - | - | 2.0 | - | - | - | - | - | - | - |
| Polyfunctional monomer/polymerizable surfactant | | 20.0 | 20.0 | 20.0 | 20.0 | 3.2 | 5.0 | 7.4 | 20.0 | 41.0 | 83.0 | 209 |
| Monofuctional monomer/polymerizable surfactant | | 24.5 | 24.5 | 24.5 | 24.5 | 4.9 | 7.0 | 9.8 | 24.5 | 48.9 | 97.8 | 245 |

EP 4 328 278 A1

(continued)

| | CTFA surface tension reduction [mN/m] | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Acid group-containing monomer/ polymerizable surfactant | | - | - | - | - | - | - | - | - | - | - | - |
| Evaluation | Separation properties 1 | 3 | 4 | 4 | 5 | 5 | 5 | 5 | 5 | 5 | 4 | 3 |
| | Alkali peelability | 5 | 5 | 5 | 5 | 3 | 4 | 5 | 5 | 5 | 5 | 5 |
| | Adhesiveness | 3 | 3 | 3 | 3 | 3 | 3 | 3 | 3 | 3 | 3 | 3 |
| | Ethanol resistance | 3 | 3 | 4 | 4 | 5 | 5 | 5 | 5 | 5 | 5 | 4 |

[Table 2]

| | | CTFA surface tension reduction [mN/m] | Example 12 | Example 13 | Example 14 | Example 15 | Example 16 | Example 17 | Comparative Example 1 | Comparative Example 2 | Comparative Example 3 | Comparative Example 4 |
|---|---|---|---|---|---|---|---|---|---|---|---|---|
| Polyfunctional monomer (not having acid group) | 3MPDDA | | 40.0 | 80.0 | 60.0 | 25.0 | 10.0 | - | 40.0 | 40.0 | 40.0 | 40.0 |
| Monofuctional monomer (not having acid group) | CTFA | | 48.9 | 8.9 | 28.9 | 63.9 | 78.9 | 88.9 | 49.5 | 49.5 | 49.5 | 50.5 |
| Monofuctional monomer (having acid group) | A-SA | | - | - | - | - | - | - | - | - | - | - |
| Polymerization initiator | Omnirad 819 | | 4.0 | 4.0 | 4.0 | 4.0 | 4.0 | 4.0 | 4.0 | 4.0 | 4.0 | 4.0 |
| | Speedcure 7010 | | 2.0 | 2.0 | 2.0 | 2.0 | 2.0 | 2.0 | 2.0 | 2.0 | 2.0 | 2.0 |
| Polymerization inhibitor | Q-1301 | | 0.1 | 0.1 | 0.1 | 0.1 | 0.1 | 0.1 | 0.5 | 0.5 | 0.5 | 0.5 |
| Colorant | Black pigment | | 2.5 | 2.5 | 2.5 | 2.5 | 2.5 | 2.5 | 2.5 | 2.5 | 2.5 | 2.5 |
| Dispersant | SOLSPERSE 32000 | | 0.5 | 0.5 | 0.5 | 0.5 | 0.5 | 0.5 | 0.5 | 0.5 | 0.5 | 0.5 |

EP 4 328 278 A1

32

(continued)

| | CTFA surface tension reduction [mN/m] | Example 12 | Example 13 | Example 14 | Example 15 | Example 16 | Example 17 | Comparative Example 1 | Comparative Example 2 | Comparative Example 3 | Comparative Example 4 |
|---|---|---|---|---|---|---|---|---|---|---|---|
| Surfactant — (Meth)acryloyl group-containing silicone-based surfactant 2 | 14.6 | 1.0 | 2.0 | 2.0 | 2.0 | 2.0 | 2.0 | - | - | - | - |
| Surfactant — Non-polymerizable acrylic surfactant | 1.9 | - | - | - | - | - | - | 1.0 | - | - | - |
| Surfactant — Non-polymerizable fluorine-based surfactant | 11.1 | - | - | - | - | - | - | - | 1.0 | - | - |
| Surfactant — Non-polymerizable silicone-based surfactant | 12.7 | 1.0 | - | - | - | - | - | - | - | 1.0 | - |
| Polyfunctional monomer/polymerizable surfactant | | 40.0 | 40.0 | 30.0 | 12.5 | 5.0 | - | - | - | - | - |
| Monofuctional monomer/polymerizable surfactant | | 49 | 4.5 | 14.5 | 32.0 | 39.5 | 44.5 | - | - | - | - |
| Acid group-containing monomer/polymerizable surfactant | | - | - | - | - | - | - | - | - | - | - |
| Evaluation — Separation properties 1 | | 5 | 5 | 5 | 5 | 5 | 5 | 1 | 1 | 1 | 1 |
| Evaluation — Alkali peelability | | 5 | 5 | 5 | 3 | 2 | 1 | 2 | 2 | 2 | 2 |
| Evaluation — Adhesiveness | | 3 | 2 | 3 | 3 | 4 | 5 | 3 | 3 | 3 | 3 |
| Evaluation — Ethanol resistance | | 5 | 5 | 5 | 3 | 2 | 1 | 1 | 1 | 1 | 1 |

[Table 3]

| | | CTFA surface tension reduction [mN/m] | Example 18 | Example 19 | Example 20 | Example 21 | Example 22 | Example 23 | Example 24 | Example 25 | Example 26 |
|---|---|---|---|---|---|---|---|---|---|---|---|
| Polyfunctional monomer (not having acid group) | 3MPDDA | | - | - | - | - | - | - | - | - | - |
| Monofuctional monomer (not having acid group) | CTFA | | 73.9 | 83.9 | 88.9 | 91.9 | 92.9 | 93.4 | 93.7 | 72.9 | 72.9 |
| Monofuctional monomer (having acid group) | A-SA | | - | - | - | - | - | - | - | 1.0 | 3.0 |
| Polymerization initiator | Omnirad 819 | | 4.0 | 4.0 | 4.0 | 4.0 | 4.0 | 4.0 | 4.0 | 4.0 | 4.0 |
| | Speedcure 7010 | | 2.0 | 2.0 | 2.0 | 2.0 | 2.0 | 2.0 | 2.0 | 2.0 | 2.0 |
| Polymerization inhibitor | Q-1301 | | 0.1 | 0.1 | 0.1 | 0.1 | 0.1 | 0.1 | 0.1 | 0.1 | 0.1 |
| Surfactant | (Meth)acryloyl group-containing silicone-based surfactant 2 | 14.6 | 20.0 | 10.0 | 5.0 | 2.0 | 1.0 | 0.5 | 0.2 | 20.0 | 18.0 |
| Polyfunctional monomer/polymerizable surfactant | | | - | - | - | - | - | - | - | - | - |
| Monofuctional monomer/polymerizable surfactant | | | 3.7 | 8.4 | 17.8 | 46.0 | 92.9 | 187 | 469 | 3.7 | 4.2 |
| Acid group-containing monomer/polymerizable surfactant | | | - | - | - | - | - | - | - | 0.05 | 0.17 |
| Evaluation | Separation properties 1 | | 5 | 5 | 5 | 5 | 5 | 4 | 3 | 5 | 5 |
| | Alkali peelability | | 1 | 1 | 1 | 1 | 1 | 1 | 1 | 2 | 3 |
| | Adhesiveness | | 4 | 5 | 5 | 5 | 5 | 5 | 5 | 4 | 5 |
| | Ethanol resistance | | 4 | 3 | 3 | 2 | 2 | 1 | 1 | 4 | 4 |

[Table 4]

| | | CTFA surface tension reduction [mN/m] | Example 27 | Example 28 | Example 29 | Example 30 | Example 31 | Example 32 | Comparative Example 5 | Comparative Example 6 | Comparative Example 7 | Comparative Example 8 |
|---|---|---|---|---|---|---|---|---|---|---|---|---|
| Polyfunctional monomer (not having acid group) | 3MPDDA | | - | - | - | - | 20.0 | 25.0 | 40.0 | 40.0 | 40.0 | 40.0 |
| Monofuctional monomer (not having acid group) | CTFA | | 72.9 | 72.9 | 72.9 | 72.9 | 52.9 | 47.9 | 52.5 | 52.5 | 52.5 | 53.5 |
| Monofuctional monomer (having acid group) | A-SA | | 5.0 | 11.0 | 16.0 | 20.0 | 11.0 | 11.0 | - | - | - | - |
| Polymerization initiator | Omnirad 819 | | 4.0 | 4.0 | 4.0 | 4.0 | 4.0 | 4.0 | 4.0 | 4.0 | 4.0 | 4.0 |
| | Speedcure 7010 | | 2.0 | 2.0 | 2.0 | 2.0 | 2.0 | 2.0 | 2.0 | 2.0 | 2.0 | 2.0 |
| Polymerization inhibitor | Q-1301 | | 0.1 | 0.1 | 0.1 | 0.1 | 0.1 | 0.1 | 0.5 | 0.5 | 0.5 | 0.5 |

| | | CTFA surface tension reduction [mN/m] | Example 27 | Example 28 | Example 29 | Example 30 | Example 31 | Example 32 | Comparative Example 5 | Comparative Example 6 | Comparative Example 7 | Comparative Example 8 |
|---|---|---|---|---|---|---|---|---|---|---|---|---|
| Surfactant | (Meth)acryloyl group-containing silicone-based surfactant 2 | 14.6 | 16.0 | 10.0 | 5.0 | 1.0 | 10.0 | 10.0 | - | - | - | - |
| | Non-polymerizable acrvlic surfactant | 1.9 | - | - | - | - | - | - | 1.0 | - | - | - |
| | Non-polymerizable fluorine-based surfactant | 11.1 | - | - | - | - | - | - | - | 1.0 | - | - |
| | Non-polymerizable silicone-based surfactant | 12.7 | - | - | - | - | - | - | - | - | 1.0 | - |
| Polyfunctional monomer/polymerizable surfactant | | - | - | - | - | - | 2.0 | 2.5 | - | - | - | - |
| Monofuctional monomer/polymerizable surfactant | | 4.9 | 8.4 | 17.8 | 93 | 6.4 | 5.9 | - | - | - | - | |
| Acid group-containing monomer/ polymerizable surfactant | | 0.31 | 1.1 | 3.2 | 20.0 | 1.1 | 1.1 | - | - | - | - | |
| Evaluation | Separation properties 1 | 5 | 5 | 5 | 5 | 5 | 5 | 1 | 1 | 1 | 1 | |
| | Alkali peelability | 4 | 4 | 5 | 5 | 5 | 5 | 2 | 2 | 2 | 2 | |
| | Adhesiveness | 5 | 5 | 4 | 4 | 3 | 2 | 3 | 3 | 3 | 3 | |
| | Ethanol resistance | 3 | 3 | 2 | 1 | 3 | 3 | 1 | 1 | 1 | 1 | |

EP 4 328 278 A1

36

[Table 5]

| | | | CTFA surface tension reduction [mN/m] | Example 101 | Example 102 | Example 103 | Example 104 | Example 105 | Example 106 | Example 107 | Example 108 | Example 109 |
|---|---|---|---|---|---|---|---|---|---|---|---|---|
| First ink | Polyfunctional monomer (not having acid group) | 3MPDDA | | 80.0 | 60.0 | 40.0 | 25.0 | 10.0 | 40.0 | 40.0 | 40.0 | 40.0 |
| | Monofuctional monomer (not having acid group) | CTFA | | 8.9 | 28.9 | 48.9 | 63.9 | 78.9 | 48.9 | 48.9 | 48.9 | 48.9 |
| | Polymerization initiator | Omnirad 819 | | 4.0 | 4.0 | 4.0 | 4.0 | 4.0 | 4.0 | 4.0 | 4.0 | 4.0 |
| | | Speedcure 7010 | | 2.0 | 2.0 | 2.0 | 2.0 | 2.0 | 2.0 | 2.0 | 2.0 | 2.0 |
| | Polymerization inhibitor | Q-1301 | | 0.1 | 0.1 | 0.1 | 0.1 | 0.1 | 0.1 | 0.1 | 0.1 | 0.1 |
| | Colorant | Black pigment | | 2.5 | 2.5 | 2.5 | 2.5 | 2.5 | 2.5 | 2.5 | 2.5 | 2.50 |
| | Dispersant | SOLSPERSE 32000 | | 0.5 | 0.5 | 0.5 | 0.5 | 0.5 | 0.5 | 0.5 | 0.5 | 0.50 |
| | Surfactant | (Meth)acryloyl group-containing silicone-based surfactant 2 | 14.6 | 2.0 | 2.0 | 2.0 | 2.0 | 2.0 | 2.0 | 2.0 | 2.0 | 2.0 |
| | Polyfunctional monomer/polymerizable surfactant | | | 40.0 | 30.0 | 20.0 | 12.5 | 5.0 | 20.0 | 20.0 | 20.0 | 20.0 |
| | Surface tension [mN/m] | | | 21.5 | 21.5 | 21.5 | 21.5 | 21.5 | 21.5 | 21.5 | 21.5 | 21.5 |

| | | | CTFA sur-face tension reduction [mN/m] | Example 101 | Example 102 | Example 103 | Example 104 | Example 105 | Example 106 | Example 107 | Example 108 | Example 109 |
|---|---|---|---|---|---|---|---|---|---|---|---|---|
| Second ink | Monofuctional monomer (not having acid group) | CTFA | | 83.9 | 83.9 | 83.9 | 83.9 | 83.9 | 88.9 | 92.9 | 78.9 | 70.9 |
| | Monofuctional monomer (having acid group) | A-SA | | - | - | - | - | - | - | - | - | - |
| | Polimerization initiator | Omnirad 819 | | 4.0 | 4.0 | 4.0 | 4.0 | 4.0 | 4.0 | 4.0 | 4.0 | 4.0 |
| | | Speedcure 7010 | | 2.0 | 2.0 | 2.0 | 2.0 | 2.0 | 2.0 | 2.0 | 2.0 | 2.0 |
| | Polymerization inhibitor | Q-1301 | | 0.1 | 0.1 | 0.1 | 0.1 | 0.1 | 0.1 | 0.1 | 0.1 | 0.1 |
| | Surfactant | (Meth)acryloyl group-containing silicone-based surfactant 1 | 9.0 | 10.0 | 10.0 | 10.0 | 10.0 | 10.0 | 5.0 | 1.0 | 15.0 | 23.0 |
| | Monofuctional monomer/polymerizable surfactant | | | 8.4 | 8.4 | 8.4 | 8.4 | 8.4 | 17.8 | 92.9 | 5.3 | 3.1 |
| | Acid group-containing monomer/polymerizable surfactant | | | | | | | | | | | |
| | Surface tension [mN/m] | | | 25.4 | 25.4 | 25.4 | 25.4 | 25.4 | 26.4 | 27.4 | 24.8 | 24.2 |
| Polyfunctional monomer in first ink and second ink/ monofunctional monomer in second ink | | | | 0.95 | 0.72 | 0.48 | 0.30 | 0.12 | 0.45 | 0.43 | 0.51 | 0.56 |
| Polymerizable surfactant in second ink/polymerizable surfactant in first ink | | | | 5.0 | 5.0 | 5.0 | 5.0 | 5.0 | 2.5 | 0.5 | 7.5 | 11.5 |
| Polymerizable monomer having acid group in second ink/ monofunctional monomer in first ink and second ink | | | | | | | | | | | | |

(continued)

| Evaluation | | CTFA surface tension reduction [mN/m] | Example 101 | Example 102 | Example 103 | Example 104 | Example 105 | Example 106 | Example 107 | Example 108 | Example 109 |
|---|---|---|---|---|---|---|---|---|---|---|---|
| | Separation properties 1 | | 5 | 5 | 5 | 5 | 5 | 4 | 3 | 5 | 5 |
| | Alkali peelability | | 5 | 5 | 4 | 3 | 2 | 4 | 4 | 5 | 5 |
| | Adhesiveness | | 3 | 4 | 5 | 5 | 5 | 5 | 5 | 4 | 3 |
| | Ethanol resistance | | 5 | 5 | 5 | 3 | 2 | 4 | 3 | 5 | 5 |

[Table 6]

| | | | CTFA surface tension reduction [mN/m] | Example 110 | Example 111 | Example 112 | Example 113 | Example 114 | Example 115 | Example 116 | Example 117 | Example 118 | Comparative Example 101 |
|---|---|---|---|---|---|---|---|---|---|---|---|---|---|
| First ink | Polyfunctional monomer (not having acid group) | 3MPDDA | | 40.0 | 40.0 | 40.0 | 40.0 | 40.0 | 40.0 | 40.0 | 40.0 | 40.0 | 40.0 |
| | Monofuctional monomer (not having acid group) | CTFA | | 48.9 | 48.9 | 48.9 | 48.9 | 48.9 | 48.9 | 48.9 | 48.9 | 48.9 | 48.9 |
| | Monofuctional monomer (having acid group) | A-SA | | - | - | - | - | - | - | - | - | - | - |
| | Polymerization initiator | Omnirad 819 | | 4.0 | 4.0 | 4.0 | 4.0 | 4.0 | 4.0 | 4.0 | 4.0 | 4.0 | 4.0 |
| | | Speedcure 7010 | | 2.0 | 2.0 | 2.0 | 2.0 | 2.0 | 2.0 | 2.0 | 2.0 | 2.0 | 2.0 |
| | Polymerization inhibitor | Q-1301 | | 0.1 | 0.1 | 0.1 | 0.1 | 0.1 | 0.1 | 0.1 | 0.1 | 0.1 | 0.1 |
| | Colorant | Black pigment | | 2.50 | 2.50 | 2.50 | 2.50 | 2.50 | 2.50 | 2.50 | 2.50 | 2.50 | 2.50 |
| | Dispersant | SOLSPERSE 32000 | | 0.50 | 0.50 | 0.50 | 0.50 | 0.50 | 0.50 | 0.50 | 0.50 | 0.50 | 0.50 |

| | | | CTFA surface tension reduction [mN/m] | Example 110 | Example 111 | Example 112 | Example 113 | Example 114 | Example 115 | Example 116 | Example 117 | Example 118 | Comparative Example 101 |
|---|---|---|---|---|---|---|---|---|---|---|---|---|---|
| | Surfactant | (Meth)acryloyl group-containing silicone-based surfactant 2 | 14.6 | 2.0 | 2.0 | 2.0 | 2.0 | 2.0 | 2.0 | 2.0 | 2.0 | 2.0 | - |
| | | Non-polymerizable silicone-based surfactant | 12.7 | - | - | - | - | - | - | - | - | - | 2.0 |
| | Polyfunctional monomer/polymerizable surfactant | | | 20.0 | 20.0 | 20.0 | 20.0 | 20.0 | 20.0 | 20.0 | 20.0 | 20.0 | - |
| | Surface tension [mN/m] | | | 21.5 | 21.5 | 21.5 | 21.5 | 21.5 | 21.5 | 21.5 | 21.5 | 21.5 | 21.8 |
| | Monofuctional monomer (not having acid group) | CTFA | | 83.9 | 81.9 | 78.9 | 75.9 | 73.9 | 68.9 | 78.9 | 53.9 | 48.9 | 75.9 |
| | Polyfunctional monomer (not having acid group) | 3MPDDA | | - | - | - | - | - | - | - | 20.0 | 25.0 | - |
| | Monofuctional monomer (having acid group) | A-SA | | - | 2.0 | 5.0 | 8.0 | 10.0 | 15.0 | 5.0 | 10.0 | 10.0 | 8.0 |
| | Polymerization initiator | Omnirad 819 | | 4.0 | 4.0 | 4.0 | 4.0 | 4.0 | 4.0 | 4.0 | 4.0 | 4.0 | 4.0 |
| | | Speedcure 7010 | | 2.0 | 2.0 | 2.0 | 2.0 | 2.0 | 2.0 | 2.0 | 2.0 | 2.0 | 2.0 |

EP 4 328 278 A1

| | | | CTFA surface tension reduction [mN/m] | Example 110 | Example 111 | Example 112 | Example 113 | Example 114 | Example 115 | Example 116 | Example 117 | Example 118 | Comparative Example 101 |
|---|---|---|---|---|---|---|---|---|---|---|---|---|---|
| Second ink | Polymerization inhibitor | Q-1301 | | 0.1 | 0.1 | 0.1 | 0.1 | 0.1 | 0.1 | 0.1 | 0.1 | 0.1 | 0.1 |
| | Surfactant | (Meth)acryloyl group-containing silicone-based surfactant 1 | 9.0 | - | 10.0 | 10.0 | 10.0 | 10.0 | 10.0 | - | 10.0 | 10.0 | - |
| | | (Meth)acryloyl group-containing silicone-based surfactant 2 | 14.6 | 10.0 | - | - | - | - | - | - | - | - | - |
| | | Non-polymerizable silicone-based surfactant | 1.9 | - | - | - | - | - | - | 10.0 | - | - | 10.0 |
| | Monofuctional monomer/polymerizable surfactant | | 8.4 | 8.4 | 8.4 | 8.4 | 8.4 | 8.4 | 8.4 | - | 6.4 | 5.9 | - |
| | Acid group-containing monomer/polvmerizable surfactant | | - | 0.2 | 0.5 | 0.8 | 1.0 | 1.5 | - | 1.0 | 1.0 | - | |
| | Surface tension [mN/m] | | 21.0 | 25.4 | 25.4 | 25.4 | 25.4 | 25.4 | 34.1 | 25.4 | 25.4 | 34.1 |
| Polyfunctional monomer in first ink and second ink/ monofunctional monomer in second ink | | | 0.48 | 0.48 | 0.48 | 0.48 | 0.48 | 0.48 | 0.48 | 0.94 | 1.10 | 0.5 |
| Polymerizable surfactant in second ink/polymerizable surfactant in first ink | | | 5.0 | 5.0 | 5.0 | 5.0 | 5.0 | 5.0 | - | 5.0 | 5.0 | - |
| Polymerizable monomer having acid group in second ink/monofunctional monomer in first ink and second ink | | | - | 0.015 | 0.038 | 0.060 | 0.075 | 0.113 | 0.038 | 0.089 | 0.093 | 0.06 |

EP 4 328 278 A1

42

| Evaluation | | CTFA surface tension reduction [mN/m] | Example 110 | Example 111 | Example 112 | Example 113 | Example 114 | Example 115 | Example 116 | Example 117 | Example 118 | Comparative Example 101 |
|---|---|---|---|---|---|---|---|---|---|---|---|---|---|
| | Separation properties 1 | | 5 | 5 | 5 | 5 | 5 | 5 | 3 | 5 | 5 | 1 |
| | Alkali peelability | | 4 | 4 | 4 | 5 | 5 | 5 | 4 | 5 | 5 | 3 |
| | Adhesiveness | | 3 | 5 | 5 | 5 | 5 | 4 | 5 | 3 | 2 | 1 |
| | Ethanol resistance | | 5 | 5 | 5 | 5 | 5 | 5 | 3 | 5 | 5 | 1 |

[Table 7]

| | | Specific gravity [g/cm$^3$] | CTFA surface tension reduction [mN/m] | log P value | Example 8 | Example 33 | Example 34 | Example 35 | Example 36 | Example 37 | Example 38 | Example 39 | Example 40 | Example 41 | Example 42 |
|---|---|---|---|---|---|---|---|---|---|---|---|---|---|---|---|
| Polyfunctional monomer (not having acid group) | 3MPDDA | 1.03 | | | 40.0 | 40.0 | 40.0 | 40.0 | 40.0 | 30.0 | 20.0 | 40.0 | 40.0 | 10.0 | 20.0 |
| | DDDA | 0.97 | | | - | - | - | - | - | 10.0 | 20.0 | - | - | 40.0 | 20.0 |
| Monofunctional monomer (not having acid group) | CTFA | 1.09 | | | 48.9 | 48.9 | 48.9 | 48.9 | 48.9 | 48.9 | 48.9 | 38.9 | 28.9 | 8.9 | 48.9 |
| | STA | 0.86 | | | - | - | - | - | - | - | - | 10.0 | 20.0 | 40.0 | - |
| Polymerization initiator | Omnirad 819 | | | | 4.0 | 4.0 | 4.0 | 4.0 | 4.0 | 4.0 | 4.0 | 4.0 | 4.0 | 4.0 | 4.0 |
| | Speedcure 7010 | | | | 2.0 | 2.0 | 2.0 | 2.0 | 2.0 | 2.0 | 2.0 | 2.0 | 2.0 | 2.0 | 2.0 |
| Polymerization inhibitor | Q-1301 | | | | 0.1 | 0.1 | 0.1 | 0.1 | 0.1 | 0.1 | 0.1 | 0.1 | 0.1 | 0.1 | 0.1 |
| Colorant | Black pigment | | | | 2.5 | 2.5 | 2.5 | 2.5 | 2.5 | 2.5 | 2.5 | 2.5 | 2.5 | 2.5 | 2.5 |
| Dispersant | SOLSPERSE 32000 | | | | 0.5 | 0.5 | 0.5 | 0.5 | 0.5 | 0.5 | 0.5 | 0.5 | 0.5 | 0.5 | 0.5 |

(continued)

| | | Specific gravity [g/cm$^3$] | CTFA surface tension reduction [mN/m] | log P value | Example 8 | Example 33 | Example 34 | Example 35 | Example 36 | Example 37 | Example 38 | Example 39 | Example 40 | Example 41 | Example 42 |
|---|---|---|---|---|---|---|---|---|---|---|---|---|---|---|---|
| Surfactant | (Meth)acryloyl group-containing silicone-based surfactant 1 | 9.0 | 0.4 | - | - | - | - | - | - | 2.0 | 2.0 | 2.0 | 2.0 | 2.0 | - |
| | (Meth)acryloyl group-containing silicone-based surfactant 2 | 14.6 | 1.61 | 2.0 | 1.2 | 1.6 | 1.88 | 1.6 | - | - | - | - | - | 1.6 |
| | (Meth)acryloyl group-containing silicone-based surfactant 3 | 14.6 | 4.66 | - | 0.8 | 0.4 | 0.12 | - | - | - | - | - | - | 0.4 |
| | (Meth)acryloyl group-containing silicone-based surfactant 4 | 15.1 | 5.86 | - | - | - | - | 0.4 | - | - | - | - | - | - |
| Polyfunctional monomer/polymerizable surfactant | | | | 83.0 | 83.0 | 83.0 | 83.0 | 83.0 | 20.0 | 20.0 | 20.0 | 20.0 | 20.0 | 20.0 |
| Monofunctional monomer/polymerizable surfactant | | | | 97.8 | 97.8 | 97.8 | 97.8 | 97.8 | 24.5 | 24.5 | 24.5 | 24.5 | 24.5 | 24.5 |
| Polymerizable monomer having specific gravity of more than 1.0/polymerizable monomer having specific gravity of 1.0 or less | | | | - | - | - | - | - | 7.89 | 3.45 | 7.89 | 3.45 | 0.24 | 3.45 |
| Polymerizable surfactant B/polymerizable surfactant A | | | | - | 1.5 | 4.0 | 15.7 | 4.0 | - | - | - | - | - | 4.0 |
| Evaluation | Separation properties 2 | | | 3 | 5 | 5 | 4 | 5 | 5 | 6 | 5 | 6 | 6 | 6 |
| | Alkali peelability | | | 5 | 5 | 5 | 5 | 5 | 5 | 5 | 5 | 5 | 5 | 5 |
| | Adhesiveness | | | 3 | 3 | 3 | 3 | 3 | 3 | 3 | 3 | 3 | 2 | 3 |
| | Ethanol resistance | | | 5 | 5 | 5 | 5 | 5 | 4 | 4 | 4 | 4 | 4 | 5 |
| | Cissing suppression | | | 5 | 4 | 5 | 5 | 4 | 5 | 5 | 5 | 5 | 5 | 5 |

[Table 8]

| | | | Specific gravity [g/cm³] | CTFA surface tension reduction [mN/m] | log P value | Example 114 | Example 201 | Example 202 | Example 203 | Example 204 | Example 205 | Example 206 | Example 207 | Example 208 | Example 209 | Example 210 | Example 211 |
|---|---|---|---|---|---|---|---|---|---|---|---|---|---|---|---|---|---|
| First ink | Polyfunctional monomer (not having acid group) | 3MPDDA | 1.03 | | | 40.0 | 35.0 | - | 35.0 | 35.0 | 35.0 | 35.0 | 35.0 | 35.0 | - | 35.0 | - |
| | | TEGDA | 1.05 | | | - | - | 35.0 | - | - | - | - | - | - | 35.0 | - | 35.0 |
| | Monofunctional monomer (not having acid group) | CTFA | 1.09 | | | 48.9 | 48.9 | 48.9 | 8.9 | 48.9 | 48.9 | 48.9 | 48.9 | 48.9 | 48.9 | 8.9 | 8.9 |
| | | 4-HBA | 1.04 | | | - | - | - | 40.0 | - | - | - | - | - | - | 40.0 | 40.0 |
| | Polymerization initiator | Omnirad 819 | | | | 4.0 | 4.0 | 4.0 | 4.0 | 4.0 | 4.0 | 4.0 | 4.0 | 4.0 | 4.0 | 4.0 | 4.0 |
| | | Speedcure 7010 | | | | 2.0 | 2.0 | 2.0 | 2.0 | 2.0 | 2.0 | 2.0 | 2.0 | 2.0 | 2.0 | 2.0 | 2.0 |
| | Polymerization inhibitor | Q-1301 | | | | 0.1 | 0.1 | 0.1 | 0.1 | 0.1 | 0.1 | 0.1 | 0.1 | 0.1 | 0.1 | 0.1 | 0.1 |
| | Colorant | Black pigment | | | | 2.5 | 2.5 | 2.5 | 2.5 | 2.5 | 2.5 | 2.5 | 2.5 | 2.5 | 2.5 | 2.5 | 2.5 |
| | Dispersant | SOLSPERSE 32000 | | | | 0.5 | 0.5 | 0.5 | 0.5 | 0.5 | 0.5 | 0.5 | 0.5 | 0.5 | 0.5 | 0.5 | 0.5 |
| | Surfactant | (Meth)acryloyl group-containing silicone-based surfactant 2 | 14.6 | | 1.61 | 2.0 | 7.0 | 7.0 | 7.0 | 7.0 | 7.0 | 7.0 | 7.0 | 7.0 | 7.0 | 7.0 | 7.0 |
| | Polyfunctional monomer/polymerizable surfactant | | | | | 5.0 | 5.0 | 5.0 | 5.0 | 5.0 | 5.0 | 5.0 | 5.0 | 5.0 | 5.0 | 5.0 | 5.0 |
| | Surface tension [mN/m] | | | | | 21.5 | 20.9 | 20.9 | 20.9 | 20.9 | 20.9 | 20.9 | 20.9 | 20.9 | 20.9 | 20.9 | 20.9 |

| | | | Specific gravity [g/cm³] | CTFA surface tension reduction [mN/m] | log P value | Example 114 | Example 201 | Example 202 | Example 203 | Example 204 | Example 205 | Example 206 | Example 207 | Example 208 | Example 209 | Example 210 | Example 211 |
|---|---|---|---|---|---|---|---|---|---|---|---|---|---|---|---|---|---|
| Second ink | Monofunctional monomer (not having acid group) | CTFA | 1.09 | | | 73.9 | 73.9 | 73.9 | 73.9 | 63.9 | 63.9 | 63.9 | 53.9 | 53.9 | 53.9 | 53.9 | 53.9 |
| | | 4HBA | 1.04 | | | - | - | - | - | 10.0 | - | - | 10.0 | 10.0 | 10.0 | 10.0 | 10.0 |
| | Polyfunctional monomer (not having acid group) | 3MPDDA | 1.03 | | | - | - | - | - | - | 10.0 | - | 10.0 | - | - | - | - |
| | | TEGDA | 1.05 | | | - | - | - | - | - | - | 10.0 | - | 10.0 | 10.0 | 10.0 | 10.0 |
| | Monofunctional monomer (having acid group) | A-SA | 1.17 | | | 10.0 | 10.0 | 10.0 | 10.0 | 10.0 | 10.0 | 10.0 | 10.0 | 10.0 | 10.0 | 10.0 | 10.0 |
| | Polymerization initiator | Omnirad 819 | | | | 4.0 | 4.0 | 4.0 | 4.0 | 4.0 | 4.0 | 4.0 | 4.0 | 4.0 | 4.0 | 4.0 | 4.0 |
| | | Speedcure 7010 | | | | 2.0 | 2.0 | 2.0 | 2.0 | 2.0 | 2.0 | 2.0 | 2.0 | 2.0 | 2.0 | 2.0 | 2.0 |
| | Polymerization inhibitor | Q-1301 | | | | 0.1 | 0.1 | 0.1 | 0.1 | 0.1 | 0.1 | 0.1 | 0.1 | 0.1 | 0.1 | 0.1 | 0.1 |
| | Surfactant | (Meth)acryloyl group-containing silicone-based surfactant 1 | 9.0 | | 0.4 | 10.0 | 10.0 | 10.0 | 10.0 | 10.0 | 10.0 | 10.0 | 10.0 | 10.0 | 10.0 | 10.0 | 10.0 |
| | Monofunctional monomer/polymerizable surfactant | | | | | 8.4 | 8.4 | 8.4 | 8.4 | 8.4 | 7.4 | 7.4 | 7.4 | 7.4 | 7.4 | 7.4 | 7.4 |
| | Acid group-containing monomer/polymerizable surfactant | | | | | 1.0 | 1.0 | 1.0 | 1.0 | 1.0 | 1.0 | 1.0 | 1.0 | 1.0 | 1.0 | 1.0 | 1.0 |
| | Surface tension [mN/m] | | | | | 25.4 | 25.4 | 25.4 | 25.4 | 25.4 | 25.4 | 25.4 | 25.4 | 25.4 | 25.4 | 25.4 | 25.4 |

47

(continued)

| | Specific gravity [g/cm$^3$] | CTFA surface tension reduction [mN/m] | log P value | Example 114 | Example 201 | Example 202 | Example 203 | Example 204 | Example 205 | Example 206 | Example 207 | Example 208 | Example 209 | Example 210 | Example 211 |
|---|---|---|---|---|---|---|---|---|---|---|---|---|---|---|---|
| Polyfunctional monomer in first ink and second ink/monofunctional monomer in second ink | | | | 0.48 | 0.42 | 0.42 | 0.42 | 0.42 | 0.47 | 0.47 | 0.55 | 0.55 | 0.55 | 0.55 | 0.55 |
| Polymerizable surfactant in second ink/polymerizable surfactant in first ink | | | | 5.0 | 1.4 | 1.4 | 1.4 | 1.4 | 1.4 | 1.4 | 1.4 | 1.4 | 1.4 | 1.4 | 1.4 |
| Polymerizable monomer having acid group in second ink/ monofunctional monomer in first ink and second ink | | | | 0.075 | 0.075 | 0.075 | 0.075 | 0.075 | 0.081 | 0.081 | 0.081 | 0.081 | 0.081 | 0.081 | 0.081 |
| Evaluation | Separation properties 2 | | | 2 | 3 | 3 | 3 | 3 | 3 | 3 | 3 | 3 | 3 | 3 | 3 |
| | Alkali peelability | | | 5 | 5 | 5 | 5 | 5 | 5 | 5 | 5 | 5 | 5 | 5 | 5 |
| | Adhesiveness | | | 5 | 5 | 5 | 5 | 5 | 5 | 5 | 5 | 5 | 5 | 5 | 5 |
| | Ethanol resistance | | | 5 | 5 | 5 | 5 | 5 | 5 | 5 | 5 | 5 | 5 | 5 | 5 |
| | Cissing suppression | | | 5 | 5 | 5 | 5 | 5 | 5 | 5 | 5 | 5 | 5 | 5 | 5 |

[Table 9]

| | | | Specific gravity [g/cm$^3$] | CTFA surface tension reduction [mN/m] | log P value | Example 212 | Example 213 | Example 214 | Example 215 | Example 216 |
|---|---|---|---|---|---|---|---|---|---|---|
| First ink | Polyfunctional monomer (not having acid group) | 3MPDDA | 1.03 | | | 25.0 | 15.0 | 35.0 | 35.0 | 5.0 |
| | | DDDA | 0.97 | | | 10.0 | 20.0 | - | - | 30.0 |
| | Monofunctional monomer (not having acid group) | CTFA | 1.09 | | | 48.9 | 48.9 | 38.9 | 28.9 | 8.9 |
| | | STA | 0.86 | | | - | - | 10.0 | 20.0 | 40.0 |
| | Polymerization initiator | Omnirad 819 | | | | 4.0 | 4.0 | 4.0 | 4.0 | 4.0 |
| | | Speedcure 7010 | | | | 2.0 | 2.0 | 2.0 | 2.0 | 2.0 |
| | Polymerization inhibitor | Q-1301 | | | | 0.1 | 0.1 | 0.1 | 0.1 | 0.1 |
| | Colorant | Black pigment | | | | 2.5 | 2.5 | 2.5 | 2.5 | 2.5 |
| | Dispersant | SOLSPERSE 32000 | | | | 0.5 | 0.5 | 0.5 | 0.5 | 0.5 |
| | Surfactant | (Meth)acryloyl group-containing silicone-based surfactant 2 | | 14.6 | 1.61 | 7.0 | 7.0 | 7.0 | 7.0 | 7.0 |
| | Polyfunctional monomer/polymerizable surfactant | | | | | 5.0 | 5.0 | 5.0 | 5.0 | 5.0 |
| | Polymerizable monomer having specific gravity of more than 1.0/polymerizable monomer having specific gravity of 1.0 or less | | | | | 7.4 | 3.2 | 7.4 | 3.2 | 0.2 |
| | Surface tension [mN/m] | | | | | 20.9 | 20.9 | 20.9 | 20.9 | 20.9 |

| | | | Specific gravity [g/cm³] | CTFA surface tension reduction [mN/m] | log P value | Example 212 | Example 213 | Example 214 | Example 215 | Example 216 |
|---|---|---|---|---|---|---|---|---|---|---|
| Second ink | Monofunctional monomer (not having acid group) | CTFA | 1.09 | | | 73.9 | 73.9 | 73.9 | 73.9 | 73.9 |
| | Monofunctional monomer (having acid group) | A-SA | 1.17 | | | 10.0 | 10.0 | 10.0 | 10.0 | 10.0 |
| | Polymerization initiator | Omnirad 819 | | | | 4.0 | 4.0 | 4.0 | 4.0 | 4.0 |
| | | Speedcure 7010 | | | | 2.0 | 2.0 | 2.0 | 2.0 | 2.0 |
| | Polymerization inhibitor | Q-1301 | | | | 0.1 | 0.1 | 0.1 | 0.1 | 0.1 |
| | Surfactant | (Meth)acryloyl group-containing silicone-based surfactant 1 | 9.0 | 0.4 | | 10.0 | 10.0 | 10.0 | 10.0 | 10.0 |
| | Monofuctional monomer/polymerizable surfactant | | | | | 8.4 | 8.4 | 8.4 | 8.4 | 8.4 |
| | Acid group-containing monomer/polymerizable surfactant | | | | | 1.0 | 1.0 | 1.0 | 1.0 | 1.0 |
| | Surface tension [mN/m] | | | | | 25.4 | 25.4 | 25.4 | 25.4 | 25.4 |
| Polyfunctional monomer in first ink and second ink/monofunctional monomer in second ink | | | | | | 0.42 | 0.42 | 0.42 | 0.42 | 0.42 |
| Polymerizable surfactant in second ink/polymerizable surfactant in first ink | | | | | | 1.4 | 1.4 | 1.4 | 1.4 | 1.4 |
| Polymerizable monomer having acid group in second ink/monofunctional monomer in first ink and second ink | | | | | | 0.075 | 0.075 | 0.075 | 0.075 | 0.075 |
| Evaluation | Separation properties 2 | | | | | 4 | 5 | 4 | 5 | 5 |
| | Alkali peelability | | | | | 5 | 5 | 5 | 5 | 5 |
| | Adhesiveness | | | | | 5 | 5 | 5 | 5 | 4 |
| | Ethanol resistance | | | | | 5 | 5 | 5 | 5 | 5 |
| | Cissing suppression | | | | | 5 | 5 | 5 | 5 | 5 |

[Table 10]

| | | Specific gravity [g/cm³] | CTFA surface tension reduction [mN/m] | log P value | Example 217 | Example 218 | Example 219 | Example 220 | Example 221 | Example 222 | Example 223 | Example 224 | Example 225 | Example 226 | Example 227 |
|---|---|---|---|---|---|---|---|---|---|---|---|---|---|---|---|
| First ink | Polyfunctional monomer (not having acid group) 3MPDDA | 1.03 | | | 35.0 | 35.0 | 35.0 | 35.0 | 35.0 | 35.0 | 35.0 | 35.0 | 35.0 | 35.0 | 25.0 |
| | Polyfunctional monomer (not having acid group) DDDA | 0.97 | | | - | - | - | - | - | - | - | - | - | - | 10.0 |
| | Monofunctional monomer (not having acid group) CTFA | 1.09 | | | 48.9 | 48.9 | 48.9 | 48.9 | 54.9 | 53.4 | 52.1 | 45.9 | 40.9 | 33.4 | 48.9 |
| | Polimerization initiator Omnirad 819 | | | | 4.0 | 4.0 | 4.0 | 4.0 | 4.0 | 4.0 | 4.0 | 4.0 | 4.0 | 4.0 | 4.0 |
| | Polimerization initiator Speedcure 7010 | | | | 2.0 | 2.0 | 2.0 | 2.0 | 2.0 | 2.0 | 2.0 | 2.0 | 2.0 | 2.0 | 2.0 |
| | Polymerization inhibitor Q-1301 | | | | 0.1 | 0.1 | 0.1 | 0.1 | 0.1 | 0.1 | 0.1 | 0.1 | 0.1 | 0.1 | 0.1 |
| | Colorant Black pigment | | | | 2.5 | 2.5 | 2.5 | 2.5 | 2.5 | 2.5 | 2.5 | 2.5 | 2.5 | 2.5 | 2.5 |
| | Dispersant SOLSPERSE 32000 | | | | 0.5 | 0.5 | 0.5 | 0.5 | 0.5 | 0.5 | 0.5 | 0.5 | 0.5 | 0.5 | 0.5 |
| | Surfactant (Meth)acryloyl group-containing silicone-based surfactant 2 | | 14.6 | 1.61 | 5.6 | 6.5 | 5.6 | 4.0 | 0.8 | 2.0 | 3.0 | 8.0 | 12.0 | 18.0 | 5.6 |
| | Surfactant (Meth)acryloyl group-containing silicone-based surfactant 3 | | 14.6 | 4.66 | - | 0.5 | 1.4 | 3.0 | 0.2 | 0.5 | 0.8 | 2.0 | 3.0 | 4.5 | 1.4 |
| | Surfactant (Meth)acryloyl group-containing silicone-based surfactant 4 | | 15.1 | 5.86 | 1.4 | - | - | - | - | - | - | - | - | - | - |
| | Polyfunctional monomer/polymerizable surfactant | | | | 5.0 | 5.0 | 5.0 | 5.0 | 5.0 | 5.0 | 5.0 | 5.0 | 5.0 | 5.0 | 5.0 |

EP 4 328 278 A1

| | | | Specific gravity [g/cm³] | CTFA surface tension reduction [mN/m] | log P value | Example 217 | Example 218 | Example 219 | Example 220 | Example 221 | Example 222 | Example 223 | Example 224 | Example 225 | Example 226 | Example 227 |
|---|---|---|---|---|---|---|---|---|---|---|---|---|---|---|---|---|
| | Polymerizable monomer having specific gravity of more than 1.0/polymerizable monomer having specific gravity of 1.0 or less | | | | | - | - | - | - | - | - | - | - | - | - | 7.4 |
| | Polymerizable surfactant B/polymerizable surfactant A | | | | | 4.0 | 13.0 | 4.0 | 1.3 | 4.0 | 4.0 | 4.0 | 4.0 | 4.0 | 4.0 | 4.0 |
| | Surface tension [mN/m] | | | | | 21.3 | 20.9 | 20.5 | 20.4 | 21.8 | 21.7 | 21.5 | 20.3 | 20.2 | 20.0 | 20.5 |
| Second ink | Monofunctional monomer (not having acid group) | CTFA | 1.09 | | | 73.9 | 73.9 | 73.9 | 73.9 | 73.9 | 73.9 | 73.9 | 73.9 | 73.9 | 73.9 | 73.9 |
| | Monofunctional monomer (having acid group) | A-SA | 1.17 | | | 10.0 | 10.0 | 10.0 | 10.0 | 10.0 | 10.0 | 10.0 | 10.0 | 10.0 | 10.0 | 10.0 |
| | Polymerization initiator | Omnirad 819 | | | | 4.0 | 4.0 | 4.0 | 4.0 | 4.0 | 4.0 | 4.0 | 4.0 | 4.0 | 4.0 | 4.0 |
| | | Speedcure 7010 | | | | 2.0 | 2.0 | 2.0 | 2.0 | 2.0 | 2.0 | 2.0 | 2.0 | 2.0 | 2.0 | 2.0 |
| | Polymerization inhibitor | Q-1301 | | | | 0.1 | 0.1 | 0.1 | 0.1 | 0.1 | 0.1 | 0.1 | 0.1 | 0.1 | 0.1 | 0.1 |
| | Surfactant | (Meth)acryloyl group-containing silicone-based surfactant 1 | 9.0 | | 0.4 | 10.0 | 10.0 | 10.0 | 10.0 | 10.0 | 10.0 | 10.0 | 10.0 | 10.0 | 10.0 | 10.0 |
| | Monofuctional monomer/polymerizable surfactant | | | | | 8.4 | 8.4 | 8.4 | 8.4 | 8.4 | 8.4 | 8.4 | 8.4 | 8.4 | 8.4 | 8.4 |
| | Acid group-containing monomer/polymerizable surfactant | | | | | 1.0 | 1.0 | 1.0 | 1.0 | 1.0 | 1.0 | 1.0 | 1.0 | 1.0 | 1.0 | 1.0 |
| | Surface tension [mN/m] | | | | | 25.4 | 25.4 | 25.4 | 25.4 | 25.4 | 25.4 | 25.4 | 25.4 | 25.4 | 25.4 | 25.4 |

(continued)

| | | | Example 217 | Example 218 | Example 219 | Example 220 | Example 221 | Example 222 | Example 223 | Example 224 | Example 225 | Example 226 | Example 227 |
|---|---|---|---|---|---|---|---|---|---|---|---|---|---|
| Specific gravity [g/cm³] | | | 0.42 | 0.42 | 0.42 | 0.42 | 0.42 | 0.42 | 0.42 | 0.42 | 0.42 | 0.42 | 0.42 |
| CTFA surface tension reduction [mN/m] | | | 2.0 | 2.0 | 2.0 | 2.0 | 2.0 | 2.0 | 2.0 | 2.0 | 2.0 | 2.0 | 2.0 |
| log P value | | | | | | | | | | | | | |
| Polyfunctional monomer in first ink and second ink/monofunctional monomer in second ink | | | 0.42 | 0.42 | 0.42 | 0.42 | 0.42 | 0.42 | 0.42 | 0.42 | 0.42 | 0.42 | 0.42 |
| Polymerizable surfactant in second ink/polymerizable surfactant in first ink | | | 2.0 | 2.0 | 2.0 | 2.0 | 2.0 | 2.0 | 2.0 | 2.0 | 2.0 | 2.0 | 2.0 |
| Polymerizable monomer having acid group in second ink/monofunctional monomer in first ink and second ink | | | 0.075 | 0.075 | 0.075 | 0.075 | 0.072 | 0.073 | 0.074 | 0.077 | 0.080 | 0.085 | 0.075 |
| Evaluation | Separation properties 2 | | 6 | 5 | 6 | 6 | 3 | 4 | 5 | 6 | 6 | 6 | 7 |
| | Alkali peelability | | 5 | 5 | 5 | 5 | 5 | 5 | 5 | 5 | 4 | 3 | 5 |
| | Adhesiveness | | 5 | 5 | 5 | 5 | 5 | 5 | 5 | 5 | 5 | 5 | 5 |
| | Ethanol resistance | | 5 | 5 | 5 | 5 | 5 | 5 | 5 | 5 | 5 | 5 | 5 |
| | Cissing suppression | | 4 | 5 | 5 | 4 | 5 | 5 | 5 | 4 | 4 | 3 | 5 |

As shown in Tables 1 to 4, in Examples 1 to 32, it was found that, since the polymerizable monomer and the polymerizable surfactant were contained, the separation properties of the image were excellent. In addition, as shown in Tables 5 and 6, in Examples 101 to 118, it was found that, since the first ink containing a polyfunctional monomer and the second ink containing a monofunctional monomer were contained, in which at least one of the first ink or the second ink contained the polymerizable surfactant, the separation properties of the image were excellent.

On the other hand, in Comparative Examples 1 to 4 and Comparative Examples 5 to 8, it was found that, since the polymerizable surfactant was not contained, the separation properties of the image were deteriorated.

In Example 15, as compared to Example 16, it was found that, since the content of the polyfunctional monomer was 25% by mass or more with respect to the total amount of the ink, the alkali peelability and the ethanol resistance were excellent. On the other hand, in Example 31, as compared to Example 32, it was found that, since the content of the monofunctional monomer was 60% by mass or more with respect to the total amount of the ink, the adhesiveness was excellent.

In Example 15, as compared to Example 16, it was found that, since the mass ratio of the content of the polyfunctional monomer to the content of the polymerizable surfactant was 6 or more, the alkali peelability and the ethanol resistance were excellent. In addition, in Example 9, as compared to Example 10, it was found that, since the mass ratio of the content of the polyfunctional monomer to the content of the polymerizable surfactant was 80 or less, the separation properties were excellent.

In Example 19, as compared to Example 18, it was found that, since the mass ratio of the content of the monofunctional monomer to the content of the polymerizable surfactant is 5 or more, the adhesiveness was excellent. In addition, in Example 22, as compared to Example 23, it was found that, since the mass ratio of the content of the monofunctional monomer to the content of the polymerizable surfactant was 100 or less, the separation properties and the ethanol resistance were excellent.

In Example 25, as compared to Example 18, it was found that, since the polymerizable monomer included the polymerizable monomer having an acid group, the alkali peelability was excellent.

In Example 27, as compared to Example 26, it was found that, since the mass ratio of the content of the polymerizable monomer having an acid group to the content of the polymerizable surfactant was 0.2 or more, the alkali peelability was excellent. In addition, in Example 29, as compared to Example 30, it was found that, since the mass ratio of the content of the polymerizable monomer having an acid group to the content of the polymerizable surfactant was 10 or less, the ethanol resistance was excellent.

In Example 3, as compared to Examples 1 and 2, it was found that, since the polymerizable surfactant was the silicone-based surfactant having a (meth)acryloyl group, the ethanol resistance was excellent.

In Examples 2 and 3, as compared to Example 1, it was found that, since the polymerizable surfactant was the compound having a surface tension reduction relative to CTFA of 5 mN/m or more, the separation properties were excellent.

In Example 112, as compared to Example 116, it was found that, since both the first ink and the second ink contained the polymerizable surfactant, the separation properties and the ethanol resistance were excellent.

In Example 104, as compared to Example 105, it was found that, since the mass ratio of the total content of the polyfunctional monomer in the first ink and the second ink to the content of the monofunctional monomer in the second ink was 0.2 or more, the alkali peelability and the ethanol resistance were excellent. In addition, in Example 102, as compared to Example 101, it was found that, since the mass ratio of the total content of the polyfunctional monomer in the first ink and the second ink to the content of the monofunctional monomer in the second ink was 0.9 or less, the adhesiveness was excellent.

In Example 106, as compared to Example 107, it was found that, since the mass ratio of the content of the polymerizable surfactant in the second ink to the content of the polymerizable surfactant in the first ink was 2 or more, the separation properties and the ethanol resistance were excellent. In addition, in Example 108, as compared to Example 109, it was found that, since the mass ratio of the content of the polymerizable surfactant in the second ink to the content of the polymerizable surfactant in the first ink was 11 or less, the adhesiveness was excellent.

In Example 113, as compared to Example 112, it was found that, since the mass ratio of the content of the polymerizable monomer having an acid group in the second ink to the total content of the monofunctional monomer in the first ink and the second ink was 0.05 or more, the alkali peelability was excellent. In addition, in Example 114, as compared to Example 115, it was found that, since the mass ratio of the content of the polymerizable monomer having an acid group in the second ink to the total content of the monofunctional monomer in the first ink and the second ink was 0.1 or less, the adhesiveness was excellent.

As shown in Table 7, in Examples 33 to 36, as compared to Example 8, it was found that, since the ink contained the polymerizable surfactant A and the polymerizable surfactant B, the separation properties were excellent.

As shown in Table 7, in Examples 37 to 41, as compared to Example 8, it was found that, since the ink contained the polymerizable monomer having a specific gravity of 1.0 or less, the separation properties were excellent.

As shown in Table 9, in Examples 212 to 216, as compared to Example 201, it was found that, since the first ink contained the polymerizable monomer having a specific gravity of 1.0 or less, the separation properties were excellent.

In Examples 217 to 220, as compared to Example 201, it was found that, since the first ink contained the polymerizable surfactant A and the polymerizable surfactant B, the separation properties were excellent.

<Examples 119 to 123>

In Examples 119 to 123, a first ink and a second ink were prepared by the same method as in Example 113, except that the black pigment in the first ink was changed to the following.

Specifically, in Example 119, the black pigment in the first ink was changed to a cyan pigment (product name "Heliogen (registered trademark) Blue D 7110 F", manufactured by BASF).

In Example 120, the black pigment in the first ink was changed to a magenta pigment (product name "CINQUASIAMAGENTART-355D", manufactured by BASF).

In Example 121, the black pigment in the first ink was changed to a yellow pigment (product name "NOVOPERM YELLOW H2G", manufactured by Clariant AG).

In Example 118, the black pigment in the first ink was changed to a white pigment (product name "KRONOS 2300", manufactured by KRONOS). Here, the content of the white pigment was adjusted to 4% by mass, and the content of CTFA was adjusted to 47.4% by mass.

In Example 122, the black pigment in the first ink was not contained. Along with this, the content of CTFA was adjusted to 51.9% by mass without containing the dispersant.

Image recording was performed by the same method as in Example 113 using the first ink and the second ink prepared in Examples 119 to 123, and the same evaluations were performed. Even in Examples 119 to 123, same as Example 113, the evaluation results of the separation properties, the alkali peelability, the adhesiveness, and the ethanol resistance were all "5".

It was found that the effects could be obtained regardless of the type of the pigment and regardless of the presence or absence of the pigment.

<Examples 301 to 311 and Comparative Examples 301 and 302>

Examples 301 to 311 and Comparative Examples 301 and 302 are examples and comparative examples corresponding the ink set B described above.

[Preparation of first ink]

First, a black pigment dispersion liquid was prepared.

25 parts by mass of a black pigment (product name "Special Black 250", manufactured by Orion Engineered Carbons), 5 parts by mass of a dispersant (product name "SOLSPERSE 32000", manufactured by Lubrizol Corporation), 69 parts by mass of cyclic trimethylolpropane formal acrylate (product name "VISCOAT #200", manufactured by OSAKA ORGANIC CHEMICAL INDUSTRY LTD.) as a dispersion medium, and 1 part by mass of FLORSTAB UV12 (manufactured by Kromachem Ltd) were charged into a disperser motor mill M50 (manufactured by Eiger), and dispersed at a circumferential speed of 9 m/s for 4 hours with zirconia beads having a diameter of 0.65 mm to prepare a black pigment dispersion liquid.

Next, the prepared black pigment dispersion liquid, polymerizable monomers, a polymerization initiator, a polymerization inhibitor, and a surfactant described in Table 11 were mixed so that the content of each component was the content (% by mass) shown in Table 11. Here, the content of the black pigment dispersion liquid was 6.9% by mass. The mixture was stirred for 20 minutes at 25°C under the conditions of 5000 rpm using a mixer (product name "L4R", manufactured by Silverson), thereby obtaining a first ink.

[Preparation of second ink]

Polymerizable monomers, a polymerization initiator, a polymerization inhibitor, and a surfactant described in Table 11 were mixed so that the content of each component was the content (% by mass) shown in Table 11. The mixture was stirred for 20 minutes at 25°C under the conditions of 5000 rpm using a mixer (product name "L4R", manufactured by Silverson), thereby obtaining a second ink.

Details of each of the components described in Table 11 are as follows.

Speedcure 7010L (manufactured by Lambson) and FLORSTAB UV12 (manufactured by Kromachem Ltd) were used for preparing the inks. Speedcure 7010L is a mixture of Speedcure 7010 and EOTMPTA, and the mixing ratio thereof is 1:1 on a mass basis. In the table, Speedcure 7010 is described in the column of "Polymerization initiator", and EOTMPTA is described in the column of "Polymerizable monomer".

In addition, FLORSTAB UV12 is a mixture of a N-nitroso-N-phenylhydroxylamine aluminum salt and PEA, and the mixing ratio thereof is 1:9. In the table, the N-nitroso-N-phenylhydroxylamine aluminum salt is described in the column of "Polymerization inhibitor", and PEA is described in the column of "Polymerizable monomer".

<Polymerizable monomer>

-Polymerizable monomer having hydroxyl group-

· 4-HBA: 4-hydroxybutyl acrylate (product name "4-HBA", manufactured by OSAKA

ORGANIC CHEMICAL INDUSTRY LTD.)

-Polymerizable monomer having acid group-

· A-SA: 2-acryloyloxyethyl succinic acid (product name "NK ESTER A-SA", manufactured by Shin-Nakamura Chemical Co., Ltd.)

- Other polymerizable monomers

· CTFA: cyclic trimethylolpropane formal acrylate (product name "VISCOAT #200", manufactured by OSAKA ORGANIC CHEMICAL INDUSTRY LTD.)
· 3MPDDA: 3-methyl-1,5-pentanediol diacrylate (product name "SR341", manufactured by Sartomer)
· PEA: phenoxyethyl acrylate, taking up 90% by mass of FLORSTAB UV12 (manufactured by Kromachem Ltd)
· EOTMPTA: EO-added trimethylolpropane triacrylate, taking up 50% by mass of Speedcure 7010L (manufactured by Lambson)

<Polymerization initiator>

· Omnirad 819: bis(2,4,6-trimethylbenzoyl)phenylphosphine oxide (manufactured by IGM Resins B.V.)
· Speedcure 7010: 1,3-di({$\alpha$-[1-chloro-9-oxo-9H-thioxanthen-4-yl)oxy]acetylpoly[oxy(1-methylethylene)]}oxy)-2,2-bis({$\alpha$-[1-methylethylene)]}oxymethyl)propane

<Polymerization inhibitor>

· N-nitroso-N-phenylhydroxylamine aluminum salt, taking up 10% by mass of FLORSTAB UV12 (manufactured by Kromachem Ltd)

<Colorant>

· Black pigment: Special Black 250 (manufactured by Orion Engineered Carbons)

<Dispersant>

· SOLSPERSE 32000: polyethyleneimine-based dispersant (manufactured by Lubrizol Corporation)

<Surfactant>

· (Meth)acryloyl group-containing silicone-based surfactant 1: product name "Tegorad 2100" (manufactured by Evonik Industries AG)
. (Meth)acryloyl group-containing silicone-based surfactant 2: product name "Tegorad 2010" (manufactured by Evonik Industries AG)
· (Meth)acryloyl group-containing silicone-based surfactant 3: product name "Tegorad 2500" (manufactured by Evonik Industries AG)

[Image recording]

Using an inkjet recording device (product name "Cylinder JET", manufactured by TRITEK CO., LTD.) and an inkjet head (product name "KJ4A-RH", manufactured by KYOCERA Corporation), the prepared second ink was applied onto a body of a PET bottle (product name "PET 500 maru", manufactured by Kokugo). Specifically, the second ink was applied onto a surface with a size of 7 cm in a longitudinal direction of the PET bottle and 5 cm in a circumferential direction of the PET bottle under conditions of a liquid droplet volume of 11 pL (picoliter) and a resolution of $600 \times 600$ dpi (dot per inch) to record a 100% solid image having a thickness of 4 $\mu$m. Furthermore, the first ink was applied onto the second ink under the same conditions as in the application of the second ink to record a 100% solid image having a thickness of 4 $\mu$m. After each of the application of the second ink and the application of the first ink, an LED light source attached to the inkjet recording device was used to irradiate the ink with ultraviolet rays at an exposure amount of 40 mJ/cm$^2$. As the LED light source, an UV-LED irradiator (product name "G4B", manufactured by KYOCERA Corporation) with a peak wavelength of 385 nm was used. Thereafter, the PET bottle on which the image had been recorded was placed in an exposure machine. The above-described PET bottle was set in a side-to-side direction. The exposure machine can rotate the above-described PET bottle. The entire image recorded on the PET bottle was exposed using the LED light source while being rotated. The exposure machine was connected to a nitrogen gas generator with a compressor (product name "Maxi-Flow 30", manufactured by Inhouse Gas Ltd.) at a pressure of 0.2 MPa s, and nitrogen was flowed so that an oxygen concentration in the exposure machine was 1% by volume or less. Using the LED light source, the first ink and the second ink were fully cured by being irradiated with ultraviolet rays at an exposure amount of 500 mJ/cm$^2$, thereby obtaining an image recorded material.
The "full curing" of the ink could be determined by pressing plain paper (for example, copy paper C2 manufactured by Fuji Xerox Co., Ltd., product code "V436") on the image with a uniform force (force constant within a range of 500 mN/cm$^2$ to 1,000 mN/cm$^2$), and checking whether the image was transferred to the plain paper. That is, a case where the image was not transferred at all was referred to as a fully cured state.

[Evaluation]

Alkali peelability, water resistance, storage stability, and jettability were evaluated using the obtained image recorded material in each of Examples and Comparative examples. The evaluation methods were as follows.

<Alkali peelability>

The obtained image recorded material was immersed in a 1.5% by mass sodium hydroxide aqueous solution at 85°C, and the peeled state was visually observed. The time immediately before a timing of immersing the image recorded material until the ink film was completely peeled off from the image recorded material was defined as a peeling time.
Alkali peelability was evaluated based on the peeling time. It can be said that, as the peeling time is shorter, the alkali peelability is excellent. The evaluation standard was as follows.

8: peeling time was 3 minutes or shorter.
7: peeling time was longer than 3 minutes and 4 minutes or shorter.
6: peeling time was longer than 4 minutes and 5 minutes or shorter.
5: peeling time was longer than 5 minutes and 7 minutes or shorter.
4: peeling time was longer than 7 minutes and 10 minutes or shorter.
3: peeling time was longer than 10 minutes and 15 minutes or shorter.
2: peeling time was longer than 15 minutes and 30 minutes or shorter.
1: peeling time was longer than 30 minutes.

<Water resistance>

The obtained image recorded material was immersed in ion exchange water at 10°C to 25°C. After 24 hours, the image recorded material was taken out of the ion exchange water. An image surface of the taken-out image recorded material was scratched with a pencil (hardness H), and whether or not peeling of the image occurred was visually checked. In a case where the image was not peeled off, the image recorded material was immersed again in the ion exchange water, taken out after 24 hours, and an operation of scratching the image surface of the image recorded material with a pencil (hardness H) was performed. The operation was performed a maximum of 9 times. In a case where the image was peeled off, the subsequent operation was not performed. The evaluation standard was as follows. The sample ranked 5 or higher is at a level having no problem for practical use.

10: peeling of the image did not occur after 9 times of the operation.
9: peeling of the image occurred after 9 times of the operation.
8: peeling of the image occurred after 8 times of the operation.
7: peeling of the image occurred after 7 times of the operation.
6: peeling of the image occurred after 6 times of the operation.
5: peeling of the image occurred after 5 times of the operation.
4: peeling of the image occurred after 4 times of the operation.
3: peeling of the image occurred after 3 times of the operation.
2: peeling of the image occurred after 2 times of the operation.
1: peeling of the image occurred after 1 time of the operation.

<Storage stability>

A glass vial was filled with the prepared first ink, and stored in a constant-temperature tank at 60°C for 4 weeks. A viscosity increase rate was calculated using a viscosity before the storage and a viscosity after the storage for 4 weeks. Storage stability was evaluated based on the viscosity increase rate. The evaluation standard was as follows. The sample ranked 5 or higher is at a level having no problem for practical use.

$$\text{Viscosity increase rate (\%)} = \{(\text{Viscosity after storage for 4 weeks - Viscosity before storage})/\text{Viscosity before storage}\} \times 100$$

10: viscosity increase rate was less than 1%.
9: viscosity increase rate was 1% or more and less than 2.5%.
8: viscosity increase rate was 2.5% or more and less than 5%.
7: viscosity increase rate was 2.5% or more and less than 5%.
6: viscosity increase rate was 5% or more and less than 10%.
5: viscosity increase rate was 10% or more and less than 15%.
4: viscosity increase rate was 15% or more and less than 25%.
3: viscosity increase rate was 25% or more and less than 30%.
2: viscosity increase rate was 30% or more and less than 50%.
1: viscosity increase rate was 50% or more.

<Jettability>

Using an inkjet recording device (product name "Cylinder JET", manufactured by TRITEK CO., LTD.) and an inkjet head (product name "KJ4A-RH", manufactured by KYOCERA Corporation), jettability of the first ink was evaluated.
Specifically, the number of jetting nozzles before image recording was counted using a nozzle check pattern. In addition, after performing continuous printing for 10 minutes, the number of jetting nozzles after the continuous printing was counted using a nozzle check pattern.
A reduction amount of the number of jetting nozzles was calculated using the number of jetting nozzles before the image recording and the number of jetting nozzles after the continuous printing. The same test was performed three times, and the jettability was evaluated based on an average value N of the reduction amounts of the jetting nozzles. The evaluation standard was as follows.

Reduction amount of number of jetting nozzles = Number of jetting nozzles before image recording - Number of jetting nozzles after continuous printing

10: N was less than 1.
9: N was 1 or more and less than 2.
8: N was 2 or more and less than 3.
7: N was 3 or more and less than 4.
6: N was 4 or more and less than 5.
5: N was 5 or more and less than 7.
4: N was 7 or more and less than 10.
3: N was 10 or more and less than 15.
2: N was 15 or more and less than 20.
1: N was 20 or more.

The evaluation results are shown in Table 11.

In Table 11, "Acid group-containing monomer + hydroxyl group-containing monomer" in the column of second ink indicates the total content of the polymerizable monomer having an acid group and the polymerizable monomer having a hydroxyl group in the second ink. "Hydroxyl group-containing monomer in first ink/(acid group-containing monomer + hydroxyl group-containing monomer in second ink)" indicates, in a case where the mass of the first ink and the mass of the second ink are the same, the mass ratio of the content of the polymerizable monomer having a hydroxyl group in the first ink to the total content of the polymerizable monomer having an acid group and the polymerizable monomer having a hydroxyl group in the second ink.

[Table 11]

| | | | Example 301 | Example 302 | Example 303 | Example 304 | Example 305 | Example 306 | Example 307 | Example 308 | Example 309 | Example 310 | Example 311 | Comparative Example 301 | Comparative Example 302 |
|---|---|---|---|---|---|---|---|---|---|---|---|---|---|---|---|
| First ink | Polymerizable monomer (having hydroxyl group) | 4-HBA | 50.0 | 25.0 | 30.0 | 60.0 | 50.0 | 50.0 | 50.0 | 50.0 | 50.0 | 50.0 | 50.0 | 50.0 | - |
| | Other | CTFA | 14.8 | 14.8 | 14.8 | 9.8 | 14.8 | 14.8 | 14.8 | 14.8 | 14.8 | 14.8 | 14.8 | 14.8 | 14.8 |
| | | 3MPDDA | 17.1 | 42.1 | 37.1 | 12.1 | 17.1 | 17.1 | 17.1 | 17.1 | 17.1 | 17.1 | 17.1 | 17.1 | 67.1 |
| | polyerizable monomers | EOTMPTA | 2.0 | 2.0 | 2.0 | 2.0 | 2.0 | 2.0 | 2.0 | 2.0 | 2.0 | 2.0 | 2.0 | 2.0 | 2.0 |
| | | PEA | 0.5 | 0.5 | 0.5 | 0.5 | 0.5 | 0.5 | 0.5 | 0.5 | 0.5 | 0.5 | 0.5 | 0.5 | 0.5 |
| | Polymerization initiator | Omnirad 819 | 4.0 | 4.0 | 4.0 | 4.0 | 4.0 | 4.0 | 4.0 | 4.0 | 4.0 | 4.0 | 4.0 | 4.0 | 4.0 |
| | | Speedcure 7010 | 2.0 | 2.0 | 2.0 | 2.0 | 2.0 | 2.0 | 2.0 | 2.0 | 2.0 | 2.0 | 2.0 | 2.0 | 2.0 |
| | Polymerization inhibitor | N-nitroso-N-phenylhydroxylamine aluminum salt | 0.1 | 0.1 | 0.1 | 0.1 | 0.1 | 0.1 | 0.1 | 0.1 | 0.1 | 0.1 | 0.1 | 0.1 | 0.1 |
| | Colorant | Black pigment | 1.7 | 1.7 | 1.7 | 1.7 | 1.7 | 1.7 | 1.7 | 1.7 | 1.7 | 1.7 | 1.7 | 1.7 | 1.7 |
| | Dispersant | SOLSPERSE 32000 | 0.3 | 0.3 | 0.3 | 0.3 | 0.3 | 0.3 | 0.3 | 0.3 | 0.3 | 0.3 | 0.3 | 0.3 | 0.3 |
| | Surfactant | (Meth)acryloyl group-containing silicone-based surfactant 2 | 6.0 | 6.0 | 6.0 | 6.0 | 6.0 | 6.0 | 6.0 | 6.0 | 6.0 | 6.0 | 6.0 | 6.0 | 6.0 |
| | | (Meth)acryloyl group-containing silicone-based surfactant 3 | 1.5 | 1.5 | 1.5 | 1.5 | 1.5 | 1.5 | 1.5 | 1.5 | 1.5 | 1.5 | 1.5 | 1.5 | 1.5 |

| | | | Exam-ple 301 | Exam-ple 302 | Exam-ple 303 | Exam-ple 304 | Exam-ple 305 | Exam-ple 306 | Exam-ple 307 | Exam-ple 308 | Exam-ple 309 | Exam-ple 310 | Exam-ple 311 | Compara-tive Exam-ple 301 | Compara-tive Exam-ple 302 |
|---|---|---|---|---|---|---|---|---|---|---|---|---|---|---|---|
| Second ink | Polymeriza-ble monomer (having acid group) | A-SA | 15.0 | 15.0 | 15.0 | 15.0 | 5.0 | 5.0 | 15.0 | 15.0 | 26.0 | 4.0 | 4.0 | - | 15.0 |
| | Polymeriza-ble monomer (having hy-droxyl group) | 4-HBA | 10.0 | 10.0 | 10.0 | 10.0 | 10.0 | 10.0 | 50.0 | - | 10.0 | 10.0 | 8.0 | 10.0 | 10.0 |
| | Other polym-erizable mon-omers | CTFA | 45.0 | 45.0 | 45.0 | 45.0 | 45.0 | 45.0 | 15.0 | 15.0 | 34.0 | 56.0 | 48.0 | 15.0 | 45.0 |
| | | 3MPDDA | 13.0 | 13.0 | 13.0 | 13.0 | 23.0 | 23.0 | 3.0 | 53.0 | 13.0 | 13.0 | 23.0 | 58.0 | 13.0 |
| | | PEA | 0.18 | 0.18 | 0.18 | 0.18 | 0.18 | 0.18 | 0.18 | 0.18 | 0.18 | 0.18 | 0.18 | 0.18 | 0.18 |
| | Polymerization initiator | Omnirad 819 | 3.8 | 3.8 | 3.8 | 3.8 | 3.8 | 3.8 | 3.8 | 3.8 | 3.8 | 3.8 | 3.8 | 3.8 | 3.8 |
| | Polymerization inhibitor | N-nitroso-N-phenylhydroxylamine aluminum salt | 0.02 | 0.02 | 0.02 | 0.02 | 0.02 | 0.02 | 0.02 | 0.02 | 0.02 | 0.02 | 0.02 | 0.02 | 0.02 |
| | Surfactant | (Meth)acryloyl group-containing silicone-based surfactant 1 | 13.0 | 13.0 | 13.0 | 13.0 | 13.0 | 13.0 | 13.0 | 13.0 | 13.0 | 13.0 | 13.0 | 13.0 | 13.0 |
| | Acid group-containing monomer + hydroxyl group-containing monomer | | 25.0 | 25.0 | 25.0 | 25.0 | 15.0 | 15.0 | 65.0 | 15.0 | 36.0 | 14.0 | 12.0 | 10.0 | 25.0 |
| Hydroxyl group-containing monomer in first ink/(acid group-containing monomer + hydroxyl group-containing monomer in second ink) | | | 2.0 | 1.0 | 1.2 | 2.4 | 3.3 | 3.3 | 0.8 | 3.3 | 1.4 | 3.6 | 4.2 | 5.0 | - |

(continued)

| Evaluation | | Example 301 | Example 302 | Example 303 | Example 304 | Example 305 | Example 306 | Example 307 | Example 308 | Example 309 | Example 310 | Example 311 | Comparative Example 301 | Comparative Example 302 |
|---|---|---|---|---|---|---|---|---|---|---|---|---|---|---|
| | Alkali peelability | 8 | 5 | 7 | 8 | 5 | 8 | 8 | 7 | 6 | 6 | 5 | 1 | 3 |
| | Water resistance | 8 | 5 | 7 | 8 | 8 | 8 | 6 | 10 | 6 | 5 | 5 | 8 | 1 |
| | Storage stability | 6 | 8 | 7 | 5 | 6 | 6 | 6 | 6 | 6 | 6 | 6 | 6 | 6 |
| | Jettability | 6 | 8 | 7 | 5 | 6 | 5 | 6 | 6 | 6 | 6 | 6 | 6 | 6 |

As shown in Table 11, in Examples 301 to 311, it was found that, since the first ink containing a colorant and a polymerizable monomer having a hydroxyl group and the second ink containing a polymerizable monomer having an acid group are contained, the alkali peelability and the water resistance were excellent.

In Comparative Example 301, it was found that, since the second ink did not contain the polymerizable monomer having an acid group, the alkali peelability was deteriorated.

In Comparative Example 302, it was found that, since the first ink did not contain the polymerizable monomer having a hydroxyl group, the alkali peelability and the water resistance were deteriorated.

In Example 301, as compared to Example 302, it was found that, since the content of the polymerizable monomer having a hydroxyl group was 30% by mass to 70% by mass with respect to the total amount of the first ink, the alkali peelability and the water resistance were excellent.

In Example 301, as compared to Examples 309 and 310, it was found that, since the content of the polymerizable monomer having an acid group was 5% by mass to 25% by mass with respect to the total amount of the second ink, the alkali peelability and the water resistance were excellent.

In Example 301, as compared to Example 308, it was found that, since the second ink further contained the polymerizable monomer having a hydroxyl group, the alkali peelability was excellent.

In Example 301, as compared to Example 307, it was found that, since the total content of the polymerizable monomer having an acid group and the polymerizable monomer having a hydroxyl group in the second ink was 10% by mass to 50% by mass with respect to the total amount of the second ink, the water resistance was excellent.

In Example 301, as compared to Example 307, it was found that, since, in a case where the mass of the first ink and the mass of the second ink were the same, the mass ratio of the content of the polymerizable monomer having a hydroxyl group in the first ink to the total content of the polymerizable monomer having an acid group and the polymerizable monomer having a hydroxyl group in the second ink was 1 or more, the water resistance was excellent. In addition, in Example 301, as compared to Example 311, it was found that, since the above-described mass ratio was 4 or less, the alkali peelability and the water resistance were excellent.

<Examples 321 to 324>

In Examples 321 to 324, a first ink and a second ink were prepared by the same method as in Example 301, except that the black pigment in the first ink was changed to the following.

Specifically, in Example 321, a cyan pigment dispersion liquid was prepared in the same manner as in Example 301, except that the black pigment in the first ink was changed to a cyan pigment (product name "Heliogen (registered trademark) Blue D 7110 F", manufactured by BASF).

The first ink (cyan ink) was obtained in the same manner as in Example 301, except that, in the preparation of the first ink, the content of the cyan pigment dispersion liquid was changed to 9.5% by mass and the content of 3MPDDA was changed to 14.5% by mass.

In Example 322, a magenta pigment dispersion liquid was prepared in the same manner as in Example 301, except that the black pigment in the first ink was changed to a magenta pigment (product name "CINQUASIAMAGENTART-355D", manufactured by BASF).

The first ink (magenta ink) was obtained in the same manner as in Example 301, except that, in the preparation of the first ink, the content of the magenta pigment dispersion liquid was changed to 18% by mass, the content of 3MPDDA was changed to 8% by mass, and the content of Speedcure 7010L was changed to 2% by mass.

In Example 323, a yellow pigment dispersion liquid was prepared in the same manner as in Example 301, except that the black pigment in the first ink was changed to a yellow pigment (product name "NOVOPERM YELLOW H2G", manufactured by Clariant AG).

The first ink (yellow ink) was obtained in the same manner as in Example 301, except that, in the preparation of the first ink, the content of the yellow pigment dispersion liquid was changed to 12.1% by mass and the content of 3MPDDA was changed to 11.9% by mass.

In Example 324, a white pigment dispersion liquid was prepared in the same manner as in Example 301, except that the black pigment in the first ink was changed to a white pigment (product name "KRONOS 2300", manufactured by KRONOS), the dispersant was changed to SOLSPERSE 41000 (manufactured by Lubrizol Corporation), the content of the white pigment was changed to 35% by mass, the content of the dispersant was changed to 7% by mass, and the content of CTFA was changed to 57% by mass.

The first ink (white ink) was obtained in the same manner as in Example 301, except that, in the preparation of the first ink, the content of the white pigment dispersion liquid was changed to 30% by mass, the content of 3MPDDA was changed to 1.6% by mass, the content of Omnirad 819 was changed to 3.4% by mass, the content of Speedcure 7010L was changed to 0% by mass, and the content of the polymerizable silicone-based surfactant 2 was changed to 3% by mass.

Image recording was performed by the same method as in Example 301 using the first ink and the second ink prepared in Examples 321 to 324, and the same evaluations were performed. In Examples 321 to 324, the same evaluation results as in Example 301 were obtained.

It was found that the effects could be obtained regardless of the type of the pigment.

The disclosure of JP2021-073511 filed on April 23, 2021 and the disclosure of JP2021-181158 filed on November 5, 2021 are incorporated in the present specification by reference. In addition, all documents, patent applications, and technical standards described in the present specification are incorporated herein by reference to the same extent as in a case of being specifically and individually noted that individual documents, patent applications, and technical standards are incorporated by reference.

**Claims**

1. An active energy ray-curable inkjet ink for a beverage container, comprising:

   a polymerizable monomer; and
   a polymerizable surfactant.

2. The active energy ray-curable inkjet ink for a beverage container according to claim 1,

   wherein the polymerizable monomer includes a polyfunctional monomer, and
   a content of the polyfunctional monomer is 25% by mass or more with respect to a total amount of the active energy ray-curable inkjet ink for a beverage container.

3. The active energy ray-curable inkjet ink for a beverage container according to claim 2,
   wherein a mass ratio of the content of the polyfunctional monomer to a content of the polymerizable surfactant is 4 to 80.

4. The active energy ray-curable inkjet ink for a beverage container according to any one of claims 1 to 3,

   wherein the polymerizable monomer includes a monofunctional monomer, and
   a content of the monofunctional monomer is 60% by mass or more with respect to a total amount of the active energy ray-curable inkjet ink for a beverage container.

5. The active energy ray-curable inkjet ink for a beverage container according to claim 4,
   wherein a mass ratio of the content of the monofunctional monomer to a content of the polymerizable surfactant is 3 to 100.

6. The active energy ray-curable inkjet ink for a beverage container according to any one of claims 1 to 5,
   wherein the polymerizable monomer includes a polymerizable monomer having an acid group.

7. The active energy ray-curable inkjet ink for a beverage container according to claim 6,
   wherein a mass ratio of a content of the polymerizable monomer having an acid group to a content of the polymerizable surfactant is from 0.2 to 10.

8. The active energy ray-curable inkjet ink for a beverage container according to any one of claims 1 to 7,
   wherein the polymerizable monomer includes a polymerizable monomer having a specific gravity of 1.0 or less.

9. The active energy ray-curable inkjet ink for a beverage container according to any one of claims 1 to 8,
   wherein the polymerizable surfactant is a silicone-based surfactant having a (meth)acryloyl group.

10. The active energy ray-curable inkjet ink for a beverage container according to any one of claims 1 to 9,
    wherein the polymerizable surfactant is a compound having a surface tension reduction of 5 mN/m or more relative to cyclic trimethylolpropane formal acrylate.

11. The active energy ray-curable inkjet ink for a beverage container according to any one of claims 1 to 10,
    wherein the polymerizable surfactant includes a polymerizable surfactant A having a log P value of 4 or more and a polymerizable surfactant B having a log P value of less than 4.

12. An active energy ray-curable inkjet ink set comprising:

   a first ink containing a polyfunctional monomer; and
   a second ink containing a monofunctional monomer,
   wherein at least one of the first ink or the second ink contains a polymerizable surfactant.

13. The active energy ray-curable inkjet ink set according to claim 12, comprising:

   a first ink containing a polyfunctional monomer; and
   a second ink containing a monofunctional monomer,
   wherein both the first ink and the second ink contain a polymerizable surfactant.

14. The active energy ray-curable inkjet ink set according to claim 12 or 13,
   wherein, in at least one of the first ink or the second ink, the polymerizable surfactant includes a polymerizable surfactant A having a log P value of 4 or more and a polymerizable surfactant B having a log P value of less than 4.

15. The active energy ray-curable inkjet ink set according to any one of claims 12 to 14,
   wherein a content of the polyfunctional monomer in the first ink is 25% by mass or more with respect to a total amount of the first ink.

16. The active energy ray-curable inkjet ink set according to any one of claims 12 to 15,

   wherein the first ink contains a polymerizable surfactant, and
   wherein a mass ratio of a content of the polyfunctional monomer to a content of the polymerizable surfactant in the first ink is from 4 to 80.

17. The active energy ray-curable inkjet ink set according to any one of claims 12 to 16,
   wherein the first ink contains a polymerizable monomer having a specific gravity of 1.0 or less.

18. The active energy ray-curable inkjet ink set according to any one of claims 12 to 17,
   wherein a content of the monofunctional monomer in the second ink is 60% by mass or more with respect to a total amount of the second ink.

19. The active energy ray-curable inkjet ink set according to any one of claims 12 to 18,

   wherein the second ink contains a polymerizable surfactant, and
   a mass ratio of a content of the monofunctional monomer to a content of the polymerizable surfactant in the second ink is 3 to 100.

20. The active energy ray-curable inkjet ink set according to any one of claims 12 to 19,
   wherein, in a case where a mass of the first ink and a mass of the second ink are the same, a mass ratio of a total content of polyfunctional monomers in the first ink and the second ink to a content of the monofunctional monomer in the second ink is 0.2 to 0.9.

21. The active energy ray-curable inkjet ink set according to any one of claims 12 to 20,

   wherein both the first ink and the second ink contain a polymerizable surfactant, and
   in a case where a mass of the first ink and a mass of the second ink are the same, a mass ratio of a content of the polymerizable surfactant in the second ink to a content of the polymerizable surfactant in the first ink is 2 to 11.

22. The active energy ray-curable inkjet ink set according to any one of claims 12 to 21,
   wherein a surface tension of the second ink is higher than a surface tension of the first ink.

23. The active energy ray-curable inkjet ink set according to any one of claims 12 to 22,
   wherein the second ink contains a polymerizable monomer having an acid group.

24. The active energy ray-curable inkjet ink set according to claim 23,
   wherein, in a case in which a mass of the first ink and a mass of the second ink are the same, a mass ratio of a content of the polymerizable monomer having an acid group in the second ink to a total content of monofunctional monomers in the first ink and the second ink is from 0.05 to 0.1.

25. An image recording method comprising:

a step of applying the active energy ray-curable inkjet ink for a beverage container according to any one of claims 1 to 11 onto a surface of a beverage container using an inkjet recording method; and
a step of irradiating the applied ink with an active energy ray.

26. An image recording method comprising:

a step of, using the active energy ray-curable inkjet ink set according to any one of claims 12 to 24, applying the first ink and the second ink onto a substrate using an inkjet recording method; and
a step of irradiating the first ink and the second ink with an active energy ray after the first ink and the second ink have each been applied onto the substrate.

27. An active energy ray-curable inkjet ink comprising:

a polymerizable monomer; and
a polymerizable surfactant,
wherein the polymerizable monomer includes a monofunctional monomer, and
a content of the monofunctional monomer is 60% by mass or more with respect to a total amount of the active energy ray-curable inkjet ink.

28. An active energy ray-curable inkjet ink set comprising:

a first ink containing a colorant and a polymerizable monomer having a hydroxyl group; and
a second ink containing a polymerizable monomer having an acid group.

29. The active energy ray-curable inkjet ink set according to claim 28,
wherein a content of the polymerizable monomer having a hydroxyl group is from 30% by mass to 70% by mass with respect to a total amount of the first ink.

30. The active energy ray-curable inkjet ink set according to claim 28 or 29,
wherein a content of the polymerizable monomer having an acid group is from 5% by mass to 25% by mass with respect to a total amount of the second ink.

31. The active energy ray-curable inkjet ink set according to any one of claims 28 to 30,
wherein the second ink further contains a polymerizable monomer having a hydroxyl group.

32. The active energy ray-curable inkjet ink set according to claim 31,
wherein a total content of the polymerizable monomer having an acid group and the polymerizable monomer having a hydroxyl group in the second ink is from 10% by mass to 50% by mass with respect to a total amount of the second ink.

33. The active energy ray-curable inkjet ink set according to claim 31 or 32,
wherein, in a case in which a mass of the first ink and a mass of the second ink are the same, a mass ratio of a content of the polymerizable monomer having a hydroxyl group in the first ink to a total content of the polymerizable monomer having an acid group and the polymerizable monomer having a hydroxyl group in the second ink is from 1 to 4.

## INTERNATIONAL SEARCH REPORT

International application No.

**PCT/JP2022/018437**

**A. CLASSIFICATION OF SUBJECT MATTER**

*C09D 11/30*(2014.01)i; *B41J 2/01*(2006.01)i; *B41M 5/00*(2006.01)i; *C09D 11/101*(2014.01)i; *C09D 11/40*(2014.01)i
FI: C09D11/30; B41M5/00 120; B41M5/00 100; B41J2/01 501; B41J2/01 129; C09D11/101; C09D11/40; B41M5/00 112

According to International Patent Classification (IPC) or to both national classification and IPC

**B. FIELDS SEARCHED**

Minimum documentation searched (classification system followed by classification symbols)

C09D11/30; B41J2/01; B41M5/00; C09D11/101; C09D11/40

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | EP 3173246 A1 (AGFA GRAPHICS NV) 31 May 2017 (2017-05-31)<br>claims, examples, fig. 1, paragraphs [0001], [0209]-[0218], [0271]-[0277] | 1-11, 25 |
| X | US 2019/0144696 A1 (AGFA NV) 16 May 2019 (2019-05-16)<br>claims, examples, paragraphs [0098]-[0122], [0176]-[0182], [0204] | 1-11, 25 |
| X | US 2015/0124032 A1 (AGFA GRAPHICS NV) 07 May 2015 (2015-05-07)<br>claims, examples, paragraphs [0003], [0060]-[0065], [0074]-[0113] | 1-11, 25 |
| X | US 2010/0304149 A1 (AGFA GRAPHICS NV) 02 December 2010 (2010-12-02)<br>claims, examples, paragraphs [0185]-[0197], [0202]-[0210], [0226]-[0229] | 1-11, 25 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **15 July 2022** | **26 July 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2022/018437**

**Box No. III        Observations where unity of invention is lacking (Continuation of item 3 of first sheet)**

This International Searching Authority found multiple inventions in this international application, as follows:

Document a: JP 2015-224340 A (FUJIFILM CORP) 14 December 2015 (2015-12-14) claims, examples & EP 2949710 A1 & US 2015/0344709 A1

(Invention 1) Claims 1-11 and 25
Claims 1-11 and 25 have the special technical feature of an "active energy ray-curable inkjet ink for a beverage container, the active energy ray-curable inkjet ink comprising a polymerizable monomer and a polymerizable surfactant", and are thus classified as invention 1.

(Invention 2) Claims 12-24 and 26
Claims 12-24 and 26 share, with "claim 1 classified as invention 1", the common technical feature of an "active energy ray-curable inkjet ink comprising a polymerizable monomer (polyfunctional monomer or monofunctional monomer) and a polymerizable surfactant".
However, said technical feature does not make a contribution over the prior art in light of the disclosure of document a, and thus cannot be said to be a special technical feature.
Moreover, there are no other same or corresponding special technical features between these inventions.
Further, claims 12-24 and 26 are not dependent on claim 1.
Furthermore, claims 12-24 and 26 are not substantially identical to or similarly closely related to any of the claims classified as invention 1.
Accordingly, claims 12-24 and 26 cannot be classified as invention 1, and are thus classified as invention 2.

(Invention 3) Claim 27
Claim 27 shares, with "claims 1-11 and 25 classified as invention 1" and "claims 12-24 and 26 classified as invention 2", the common technical feature of an "active energy ray-curable inkjet ink comprising a polymerizable monomer (monofunctional monomer) and a polymerizable surfactant".
However, said technical feature does not make a contribution over the prior art in light of the disclosure of document a, and thus cannot be said to be a special technical feature.
Moreover, there are no other same or corresponding special technical features between these inventions.
Further, claim 27 is not dependent on any of claims 1-26.
Furthermore, claim 27 is not substantially identical to or similarly closely related to any of the claims classified as either invention 1 or invention 2.
Accordingly, claim 27 cannot be classified as either invention 1 or invention 2, and is thus classified as invention 3.

(Invention 4) Claims 28-33
Claims 28-33 share, with "claims 1-11 and 25 classified as invention 1", "claims 12-24 and 26 classified as invention 2", and "claim 27 classified as invention 3", the common technical feature of an "active energy ray-curable inkjet ink comprising a polymerizable monomer (hydroxyl group-containing polymerizable monomer or acid group-containing polymerizable monomer)".
However, said technical feature does not make a contribution over the prior art in light of the disclosure of document a, and thus cannot be said to be a special technical feature.
Moreover, there are no other same or corresponding special technical features between these inventions.
Further, claims 28-33 are not dependent on any of claims 1-27.
Furthermore, claims 28-33 are not substantially identical to or similarly closely related to any of the claims classified as any of inventions 1-3.
Accordingly, claims 28-33 cannot be classified as any of inventions 1-3, and are thus classified as invention 4.

Form PCT/ISA/210 (continuation of first sheet) (January 2015)

## EP 4 328 278 A1

**INTERNATIONAL SEARCH REPORT**

International application No.

**PCT/JP2022/018437**

| Box No. III | Observations where unity of invention is lacking (Continuation of item 3 of first sheet) |
| --- | --- |

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **claims 1-11, 25**

**Remark on Protest** ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

| Patent document cited in search report | | | Publication date (day/month/year) | Patent family member(s) | | | Publication date (day/month/year) |
|---|---|---|---|---|---|---|---|
| EP | 3173246 | A1 | 31 May 2017 | (Family: none) | | | |
| US | 2019/0144696 | A1 | 16 May 2019 | CN | 109219644 | A | |
| | | | | EP | 3464490 | A1 | |
| | | | | WO | 2017/211587 | A1 | |
| US | 2015/0124032 | A1 | 07 May 2015 | AU | 2013270718 | A1 | |
| | | | | BR | 112014030418 | A2 | |
| | | | | CA | 2873885 | A1 | |
| | | | | CN | 104334359 | A | |
| | | | | CN | 106189502 | A | |
| | | | | DK | 2823969 | T3 | |
| | | | | DK | 2826824 | T3 | |
| | | | | EP | 2671722 | A1 | |
| | | | | EP | 2823969 | A1 | |
| | | | | EP | 2826824 | A1 | |
| | | | | ES | 2546257 | T3 | |
| | | | | ES | 2594128 | T3 | |
| | | | | ES | 2594129 | T3 | |
| | | | | HU | E030201 | T2 | |
| | | | | IN | 9136DEN2014 | A | |
| | | | | PL | 2671722 | T3 | |
| | | | | PL | 2823969 | T3 | |
| | | | | PL | 2826824 | T3 | |
| | | | | PT | 2826824 | T | |
| | | | | WO | 2013/182517 | A2 | |
| US | 2010/0304149 | A1 | 02 December 2010 | BR | PI0816226 | A2 | |
| | | | | CN | 101796015 | A | |
| | | | | EP | 2033949 | A1 | |
| | | | | EP | 2189477 | A1 | |
| | | | | WO | 2009/030658 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013514904 A
- WO 2018139658 A
- JP 2013184453 A
- JP 2013511584 A
- JP 2002012607 A, W.Herbst, K.Hunger

- JP 2002188025 A
- JP 2003026978 A
- JP 2003342503 A
- JP 2021073511 A
- JP 2021181158 A

**Non-patent literature cited in the description**

- Encyclopedia of Pigments. 2000